# EUROPEAN PATENT APPLICATION

(11) **EP 2 889 340 A1**
(43) Date of publication of application: **01.07.2015**
(21) Application number: 13830427.4
(22) Date of filing: 01.08.2013
(51) Int. Cl.: C09D 11/00, B41J 2/01, B41M 5/00, C08F 20/36, C08F 20/60

(54) **INK COMPOSITION, IMAGE FORMATION METHOD, AND PRINTED MATTER**

(30) Priority: 22.08.2012 JP 2012183685
(71) Applicant: FUJIFILM Corporation, Tokyo 106-8620 (JP)
(72) Inventor: KANO Takeyoshi, Ashigarakami-gun Kanagawa 258-8577 (JP); SHIMOHARA Norihide, Ashigarakami-gun Kanagawa 258-8577 (JP)
(74) Representative: Morpeth, Fraser Forrest
(86) International application number: PCT/JP2013/070877
(87) International publication number: WO 2014/030515

(57) **Abstract**

An ink composition includes a compound having two or more partial structures represented by the following Formula (A) in a molecule (Component a), a compound selected from the group consisting of a compound represented by the following Formula (B1) and a compound represented by the following Formula (B2) (Component b), and a color material (Component c).

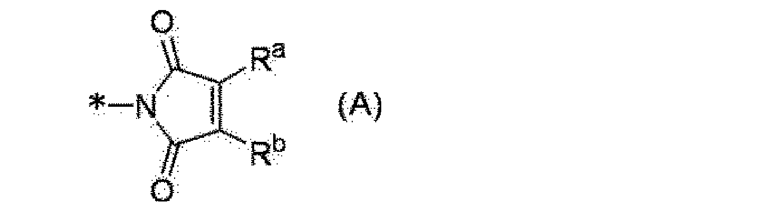

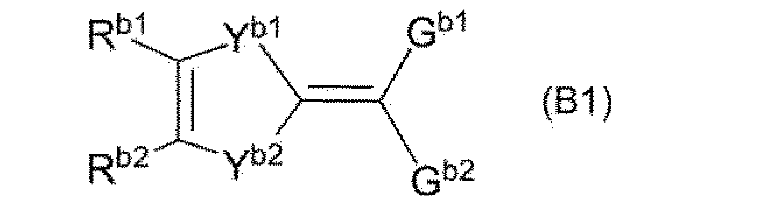

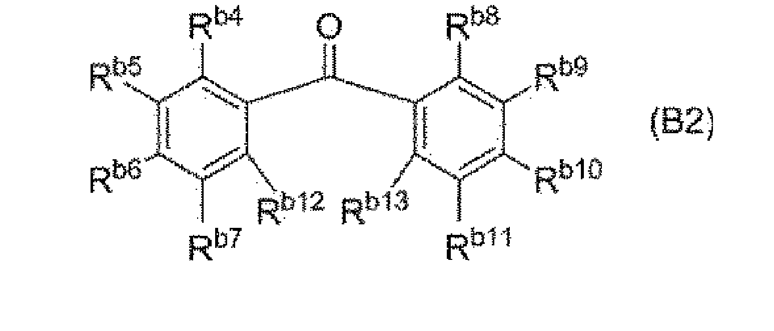

## Description

### BACKGROUND OF THE INVENTION

### 1. Field of the Invention

The present invention relates to an ink composition, an image-forming method, and a printed material.

### 2. Description of the Related Art

As an image-recording method in which an image is formed on a recording medium such as paper on the basis of an image data signal, there are an electrophotographic method, a sublimation-type or melting-type thermal transfer method, an ink jet method, and the like. Among ink compositions used for the recording of an image by the ink jet method, an active energy ray curable aqueous ink can be preferably used for the printing of an image, a pretreatment for imparting printability to a recording medium, an aftertreatment for protecting and decorating a printed image, and the like, and has a number of excellent characteristics such as excellent safety since water is contained as a main component and a capability of being applicable to high-density ink jet recording which can be obtained from a decrease in viscosity.

The basic constitutional materials of the active energy ray curable aqueous ink are, for example, water, a polymerizable substance, a polymerization initiator which initiates polymerization by generating a radical and the like using a radioactive ray, and a color material (a pigment or a dye). Examples of the water-soluble polymerizable substance and the water-soluble polymerization initiator are described in, for example, JP2007-119449A, and there is a description of an ink composition for ink jet recording which is capable of producing a film having excellent adhesiveness and the like by light radiation.

In addition, there is a proposal of an aqueous ink composition containing a copolymer having a repeating unit having a dimethyl maleimide group at a side chain, thereby imparting excellent solvent resistance and excellent adhesiveness to a base material to a recorded image (for example, JP2012-046569A).

### SUMMARY OF THE INVENTION

However, in JP2007-119449A describing the ink composition including an active energy ray curable polymerizable substance having a specific maleimide structure, there is still room for the improvement of water resistance, solvent resistance, adhesiveness, and ejection properties.

In JP2007-119449A describing a technique in which a photopolymerizable initiator is used, since there is a concern that the decomposed substance or unreacted residue of the added photopolymerization initiator may remain in a cured film, and thus film properties or a printed material may be adversely influenced, there is a case in which it is not possible to use a sufficient amount of a photopolymerization initiator, and there is still room for the improvement of the water resistance, solvent resistance, and adhesiveness of a printed image. In addition, there is also room for the additional improvement of the ejection properties of an ink composition. Therefore, there is a desire for an ink composition having favorable water resistance, solvent resistance, adhesiveness, and ejection properties.

In addition, even in the technique disclosed by JP2012-046569A, there is a demand for the additional improvement of water resistance, solvent resistance, and adhesiveness.

In consideration of the above-described circumstances, an object of the present invention is to provide an ink composition which has excellent ejection properties when an image is recorded by the ink jet method, and imparts excellent water resistance, solvent resistance, and adhesiveness to a base material of a recorded image.

In addition, another object of the present invention is to provide an image-forming method in which the ink composition is used and a printed material for which the ink composition is used.

An ink composition, an image-forming method, and a printed material for achieving the above-described objects are as described below.
<1> An ink composition including: a compound having two or more partial structures represented by the following Formula (A) in a molecule (Component a); a compound selected from the group consisting of a compound represented by the following Formula (B1) and a compound represented by Formula (B2) (Component b); and a color material (Component c).

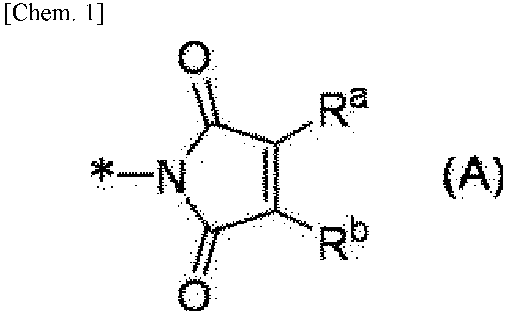

In Formula (A), each of R^{a} and R^{b} independently represents a hydrogen atom or an alkyl group having 1 to 4 carbon atoms, and R^{a} and R^{b} may be bonded to each other to form a 4- to 6-membered alicyclic structure. '*' represents a bonding site.

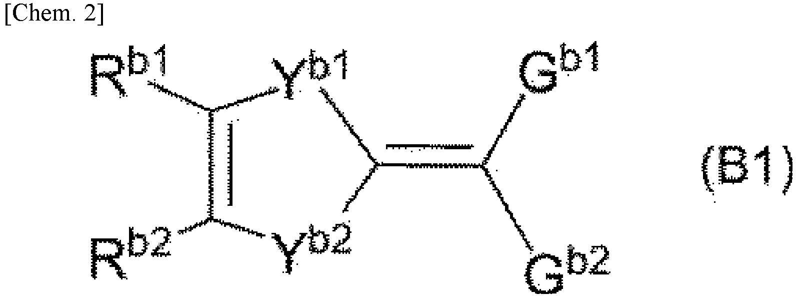

In Formula (B1), each of R^{b1} and R^{b2} independently represents a hydrogen atom, an alkyl group, an aryl group, an alkenyl group, or a heterocyclic group, and R^{b1} and R^{b2} may be bonded to each other so as to form a ring. Each of Y^{b1} and Y^{b2} independently represents a divalent group selected from the group consisting of -O-, -S-, -NR^{b3}-, -Se-, -C(CH₃)₂-, and -CH=CH-. R^{b3} represents a hydrogen atom, an alkyl group, an aryl group, or an alkenyl group. Each of G^{b1} and G^{b2} independently represents a hydrogen atom, a cyano group, an amide group, an alkyl amide group, an alkoxy carbonyl group, an aryloxy carbonyl group, an acyl group, an aryl carbonyl group, an alkyl sulfanyl group, an aryl sulfanyl group, an alkyl sulfonyl group, an aryl sulfonyl group, or a fluoroalkyl sulfonyl group, and G^{b1} and G^{b2} may be bonded to each other so as to form a ring. However, in a case in which G^{b1} and G^{b2} form a ring, the formed ring may include a divalent linking group selected from the group consisting of -C(=O)-, -C(=S)-, -NR¹²-, -N=CR¹³-, -O-, and -S-. Each of R¹² and R¹³ independently represents a hydrogen atom, an alkyl group, or an aryl group. At least one of the groups represented by R^{b1}, R^{b2}, Y^{b1}, Y^{b2}, G^{b1}, and G^{b2} contains a polymerizable group as a substituent.

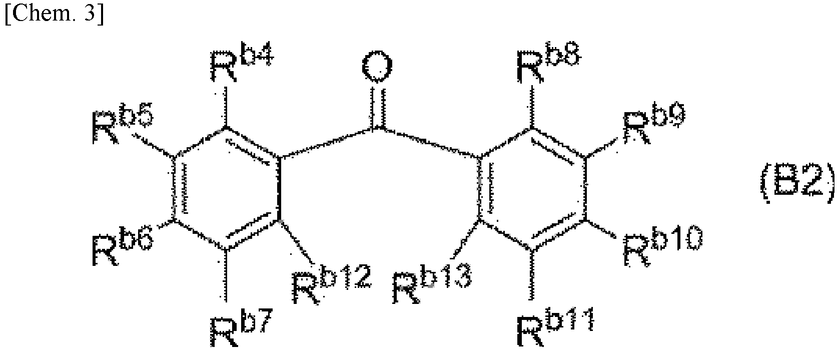

In Formula (B2), each of R^{b4}, R^{b5}, R^{b6}, R^{b7}, R^{b8}, R^{b9}, R^{b10}, R^{b11}, R^{b12}, and R^{b13} independently represents a hydrogen atom, a halogen atom, an alkyl group, an aryl group, a hydroxyl group, a cyano group, a nitro group, an amino group, an alkyl sulfanyl group, an alkyl amino group, an alkoxy group, an alkoxy carbonyl group, an acyloxy group, an acyl group, a carbonyl group, or a sulfonyl group. At least two groups selected from R^{b4}, R^{b5}, R^{b6}, R^{b7}, R^{b8}, R^{b9}, R^{b10}, R^{b11}, R^{b12}, and R^{b13} may be bonded to each other so as to form a ring, and, in a case in which a ring is formed, -S- may be included in the formed ring. At least one of the groups represented by R^{b4}, R^{b5}, R^{b6}, R^{b7}, R^{b8}, R^{b9}, R^{b10}, R^{b11}, R^{b12}, and R^{b13} contains a polymerizable group as a substituent.
<2> The ink composition according to <1>, in which (Component a) has two or more repeating units represented by the following Formula (AP) in a molecule.

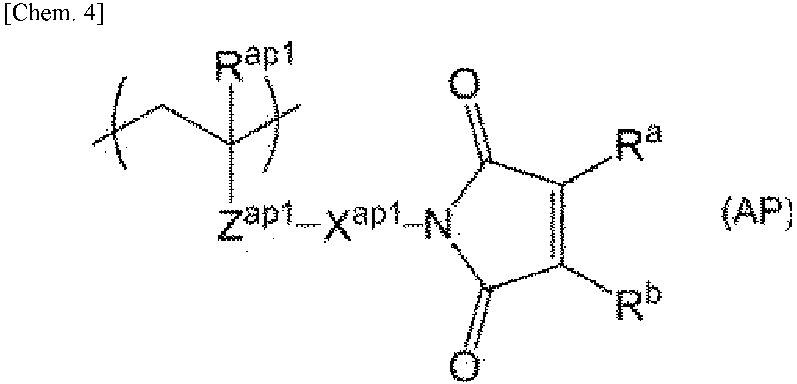

In Formula (AP), R^{ap1} represents a hydrogen atom or a methyl group. Z^{ap1} represents a single bond, -COO-, or -CONR^{ax1}-, and R^{ax1} represents a hydrogen atom or an alkyl group having 1 to 4 carbon atoms. X^{ap1} represents a divalent organic group. Each of R^{a} and R^{b} independently represents a hydrogen atom or an alkyl group having 1 to 4 carbon atoms, and R^{a} and R^{b} may be bonded to each other so as to form a 4- to 6-membered alicyclic structure.
<3> The ink composition according to <1> or <2>, in which the number of the polymerizable groups included in the compound represented by Formula (B1) or the compound represented by Formula (B2) is one or two.
<4> The ink composition according to any one of <1> to <3>, in which a content of (Component b) in a total amount of the ink composition is in a range of 0.1 mass% to 20 mass%.
<5> The ink composition according to any one of <1> to <4>, in which either or both (Component a) and (Component b) further include a water-soluble group, and the water-soluble group is at least one group selected from the group consisting of a carboxyl group, a sulfo group, a phosphate group, a phosphonic acid group, salts thereof, quaternary ammonium salt, a residue produced by removing one hydrogen atom from a heterocyclic compound containing a nitrogen atom or an oxygen atom, an amide group, a carbamoyl group, an alcoholic hydroxyl group, and groups having a polyalkyleneoxy structure.
<6> The ink composition according to any one of <1> to <5>, further including: water (Component d).
<7> The ink composition according to any one of <1> to <6>, further including: an organic solvent (Component e).
<8> An image-forming method including: applying the ink composition according to any one of <1> to <7> onto a recording medium; and a radiation step of radiating an active energy ray to the ink composition.
<9> The image-forming method according to <8>, in which the applying the ink composition is applying the ink composition by an ink jet method.
<10> A printed material recorded by the image-forming method according to <8> or <9>.

According to the present invention, it is possible to provide an ink composition which has excellent ejection properties when an image is recorded by an ink jet method, and imparts excellent water resistance, solvent resistance, and adhesiveness to a base material of a recorded image.

In addition, according to the present invention, it is possible to provide an image-forming method in which the ink composition is used and a printed material for which the ink composition is used.

### DESCRIPTION OF THE PREFERRED EMBODIMENTS

### «Ink composition»

In the present invention, an ink composition which has excellent ejection properties when an image is recorded by an ink jet method, and imparts excellent water resistance, solvent resistance, and adhesiveness to a base material to a recorded image has been successfully obtained by using an ink composition including a compound having two or more partial structures represented by the following Formula (A) in a molecule (Component a), a compound selected from the group consisting of a compound represented by the following Formula (B1) and a compound represented by the following Formula (B2) (Component b), and a color material (Component c).

Meanwhile, in the present specification, a numerical value range expressed using "to" indicates a range including the numerical values before and after the "to" as the lower limit value and the upper limit value.

The mechanism of the present invention is not evident, but the present inventors assume as follows. It is considered that, in the present invention, since the amount of a low-molecular-weight component, which plasticizes a cured film, is suppressed by using a specific compound having a maleimide structure, a specific compound containing a sensitizing dye component, and a color material, and a sensitizing dye component has a polymerizable group as a substituent and is polymerized through curing, it is possible to further reduce the amount of the low-molecular-weight component, and the above-described action improves solvent resistance and water resistance, and degrades the precipitation properties of the sensitizing dye and the like, and therefore components in the ink composition are not easily precipitated in the vicinity of a nozzle of an ink jet head, and the ejection properties improve.

Hereinafter, the ink composition of the present invention will be described in detail.

The present invention is an ink composition including a compound having two or more partial structures represented by the following Formula (A) in a molecule (Component a), a compound selected from the group consisting of a compound represented by the following Formula (B1) and a compound represented by the following Formula (B2) (Component b), and a color material (Component c).

Hereinafter, (Component a), (Component b), and (Component c), which are essential components in the ink composition of the present invention, will be described, and furthermore, arbitrary components that may be included will be described.

### <Compound having two or more partial structures represented by Formula (A) in a molecule (Component a)>

Any compound can be used with no limitation as the compound having two or more partial structures represented by the following Formula (A) in a molecule, which is used in the present invention, as long as the compound has two or more partial structures represented by the following Formula (A). When the compound having two or more partial structures represented by the following Formula (A) is used, it is possible to cause the crosslinking reaction of the ink composition.

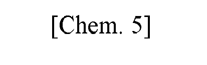

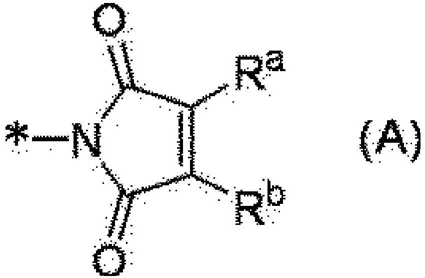

In Formula (A), each of R^{a} and R^{b} independently represents a hydrogen atom or an alkyl group having 1 to 4 carbon atoms, and R^{a} and R^{b} may be bonded to each other so as to form a 4- to 6-membered alicyclic structure. '*' represents a bonding site.

In Formula (A), R^{a} and R^{b} may or may not have a substituent, but preferably has no substituent.

Each of R^{a} and R^{b} independently represents a hydrogen atom or an alkyl group having 1 to 4 carbon atoms. The alkyl group having 1 to 4 carbon atoms may have a straight chain structure or a branched structure. Specific examples thereof include a methyl group, an ethyl group, a propyl group, an isopropyl group, a butyl group, an isobutyl group, a sec-butyl group, a t-butyl group, and the like. R^{a} and R^{b} may be bonded to each other so as to form a 4- to 6-membered alicyclic structure. From the viewpoint of the film properties of a cured ink film such as water resistance, solvent resistance, and adhesiveness to a base material after the curing of the ink composition, each of R^{a} and R^{b} is, independently, preferably an alkyl group having 1 to 2 carbon atoms, that is, a methyl group or an ethyl group, and is particularly preferably a methyl group. In addition, in a case in which R^{a} and R^{b} are bonded to each other so as to form a 4- to 6-membered alicyclic structure, the alicyclic structure is preferably a 5- or 6-membered ring, and more preferably a 6-membered ring.

(Component a) may be a low-molecular compound having a molecular weight in a range of 300 to 2,000 or a high-molecular compound having a weight-average molecular weight of 5,000 or more. From the viewpoint of water resistance, solvent resistance, adhesiveness to a base material, and the like after the curing of the ink composition, (Component a) is preferably a high-molecular compound having a weight-average molecular weight of 5,000 or more.

In a case in which (Component a) is a low-molecular compound having a molecular weight in a range of 300 to 2,000, the number of the partial structures represented by Formula (A) in a molecule of (Component a) is preferably 2 to 6, more preferably 2 to 4, still more preferably 2 or 3, and particularly preferably 2. Here, a plurality of the groups represented by Formula (A) included in the compound may be identical or different.

In a case in which (Component a) is a low-molecular compound having a molecular weight in a range of 300 to 2,000, (Component a) is preferably a compound represented by the following Formula (AL).

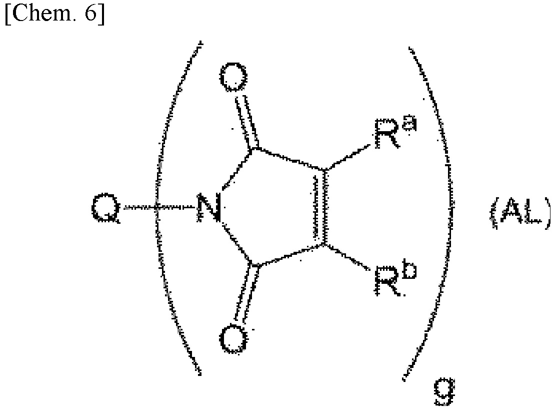

In Formula (AL), each of R^{a} and R^{b} independently represents a hydrogen atom or an alkyl group having 1 to 4 carbon atoms. R^{a} and R^{b} may be bonded to each other so as to form a 4- to 6-membered alicyclic structure. Q represents a linking group having a valence of g. g represents an integer of 2 or more.

R^{a} and R^{b} in Formula (AL) are identical to those described as examples of R^{a} and R^{b} (including those described as preferable examples) in the above-described Formula (A).

In Formula (AL), Q represents a linking group having a valence of g. Q is preferably a residue produced by removing g hydrogen atoms from hydrocarbon. In a case in which Q is a residue produced by removing g hydrogen atoms from hydrocarbon, the hydrocarbon may contain an ether group, an ester group, an amino group, an amide bond, a silyl ether group, a thiol group, and the like. The number of carbon atoms in the hydrocarbon is preferably in a range of 1 to 30, and more preferably in a range of 1 to 20. The hydrocarbon is preferably aromatic hydrocarbon, and examples of the aromatic hydrocarbon include benzene, naphthalene, and the like.

In a case in which the ink composition of the present invention includes water, in Formula (AL), Q preferably has a water-soluble group, and, in this case, Q is preferably a residue produced by removing g hydrogen atoms from hydrocarbon substituted by the water-soluble group. In a case in which Q is a residue produced by removing g hydrogen atoms from hydrocarbon substituted by the water-soluble group, the hydrocarbon may contain an ether group, an ester group, an amino group, an amide bond, a silyl ether group, a thiol group, and the like. The number of carbon atoms in the hydrocarbon is preferably in a range of 1 to 30, and more preferably in a range of 1 to 20. The hydrocarbon is preferably aromatic hydrocarbon, and examples of the aromatic hydrocarbon include benzene, naphthalene, and the like.

In addition, examples of the water-soluble group included in Q include a carboxyl group, a sulfo group, a phosphate group, a phosphonic acid group, and salts thereof, and examples of the salts include metal salts, ammonium salt, alkyl ammonium salt, and the like.

In Formula (AL), g represents an integer of 2 or more, is preferably 2 to 6, more preferably 2 to 4, still more preferably 2 or 3, and particularly preferably 2.

In a case in which (Component a) is a low-molecular compound having a molecular weight in a range of 300 to 2,000, in the present invention, it is possible to preferably use the following compounds (AL-1) to (AL-3).

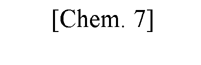

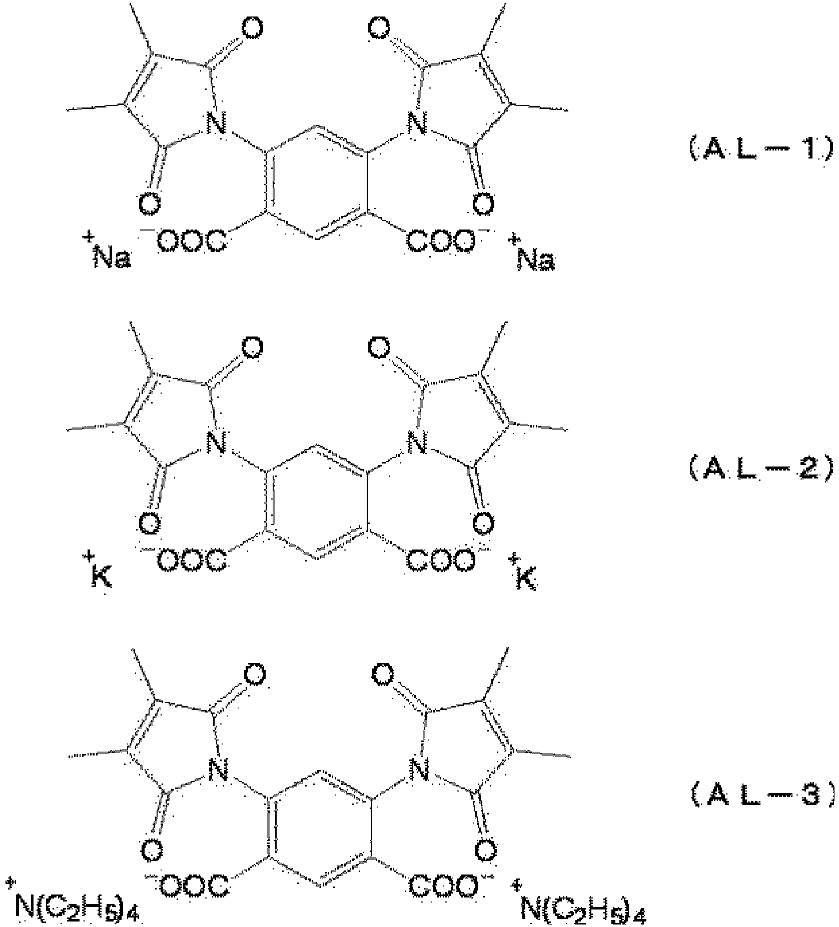

In a case in which (Component a) is a high-molecular compound having a weight-average molecular weight of 5,000 or more, (Component a) needs to have two or more partial structures represented by Formula (A) in a molecule. The number of the partial structures represented by Formula (A) is not particularly limited, but is preferably in a range of 2 to 500, and still more preferably in a range of 10 to 200. In addition, in a case in which (Component a) is a high-molecular compound, two or more partial structures represented by Formula (A) are preferably present in the side chain of the high-molecular compound.

From the viewpoint of ejection properties and the like when the ink composition is discharged using the ink jet method, in a case in which (Component a) is a high-molecular compound, the weight-average molecular weight is preferably in a range of 5,000 to 200,000, more preferably in a range of 7,000 to 100,000, still more preferably in a range of 10,000 to 50,000, and particularly preferably in a range of 10,000 to 40,000.

The weight-average molecular weight is measured using gel permeation chromatography (GPC). In GPC, for example, a HLC-8020GPC (manufactured by Tosoh Corporation, 4.6 mmID×15 cm) is used, TSKgel SuperHZM-H, TSKgel SuperHZ4000, and TSKgel SuperHZ200 (manufactured by Tosoh Corporation) are used as columns, and tetrahydrofuran (THF) is used as an eluent.

In a case in which (Component a) is a high-molecular compound having a weight-average molecular weight of 5,000 or more, there is no limitation regarding the high-molecular structure as long as the high-molecular compound has the partial structure represented by Formula (A) at the side chain or terminal of the high-molecular compound, but a high-molecular structure such as poly(meth)acrylate, polyester, polyethylenimine, or polystyrene is preferably used, and (Component a) more preferably has a (meth)acrylate structure.

In a case in which (Component a) is a high-molecular compound, (Component a) is preferably a high-molecular compound having a repeating unit represented by the following Formula (AP).

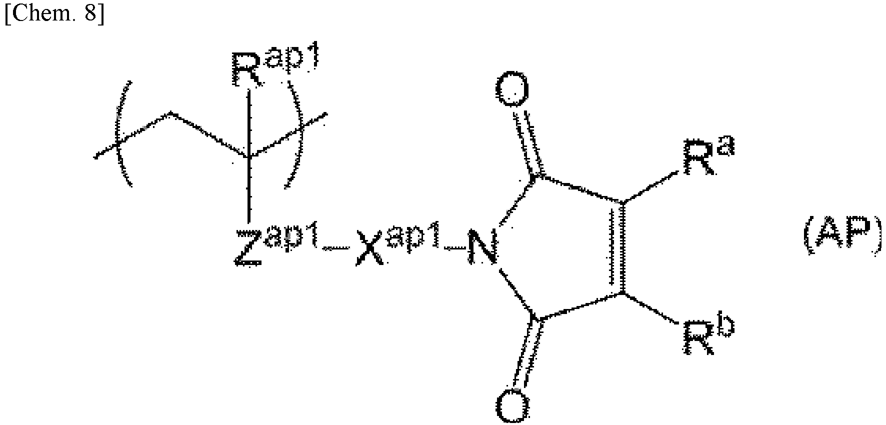

In Formula (AP), R^{ap1} represents a hydrogen atom or a methyl group, Z^{ap1} represents a single bond, -COO-, or -CONR^{ax1}-, R^{ax1} represents a hydrogen atom or an alkyl group having 1 to 4 carbon atoms, X^{ap1} represents a divalent organic group, each of R^{a} and R^{b} independently represents a hydrogen atom or an alkyl group having 1 to 4 carbon atoms, and R^{a} and R^{b} may be bonded to each other so as to form a 4- to 6-membered alicyclic structure.

In Formula (AP), each of R^{a} and R^{b} independently represents a hydrogen atom or an alkyl group having 1 to 4 carbon atoms, and R^{a} and R^{b} may be bonded to each other so as to form a 4- to 6-membered alicyclic structure. R^{a} and R^{b} in Formula (AP) are identical to those described as examples of R^{a} and R^{b} (including those described as preferable examples) in the above-described Formula (A).

In Formula (AP), R^{ap1} represents a hydrogen atom or a methyl group. R^{ap1} is preferably a methyl group.

In Formula (AP), Z^{ap1} represents a single bond, -COO-, or -CONR^{ax1}-. Z^{ap1} is preferably -COO-.

In addition, R^{ax1} represents a hydrogen atom or an alkyl group having 1 to 4 carbon atoms. The alkyl group having 1 to 4 carbon atoms may have a straight chain structure or a branched structure. Specific examples thereof include a methyl group, an ethyl group, a propyl group, an isopropyl group, a butyl group, an isobutyl group, a sec-butyl group, and a t-butyl group. R^{ax1} is preferably a hydrogen atom or an alkyl group having 1 to 2 carbon atoms, that is, a methyl group or an ethyl group, and is particularly preferably a hydrogen atom. R^{ax1} may or may not have a substituent, but preferably has no substituent.

In Formula (AP), X^{ap1} represents a divalent organic group. The divalent organic group is preferably an alkylene group having 2 to 20 carbon atoms. The alkylene group may have a straight chain structure or a branched structure. In addition, the alkylene group may contain an ether bond, an ester bond, an amino bond, a urethane bond, and an arylene group. In a case in which X^{ap1} is an alkylene group, the number of carbon atoms is preferably 2 to 20, more preferably 2 to 12, and still more preferably 2 to 8.

In Formula (AP), each of R^{a} and R^{b} independently represents an alkyl group having 1 or 2 carbon atoms, and it is preferable that R^{ap1} be a methyl group, Z^{ap1} be -COO-, and X^{ap1} be an alkylene group having 2 to 12 carbon atoms.

In a case in which (Component a) is a high-molecular compound having a structure represented by Formula (AP), the high-molecular compound is preferably a high-molecular compound obtained by polymerizing a monomer represented by the following Formula (AP-M).

In addition, from the viewpoint of controlling the film properties after the curing of the ink composition, other monomers are preferably included in a copolymer component.

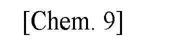

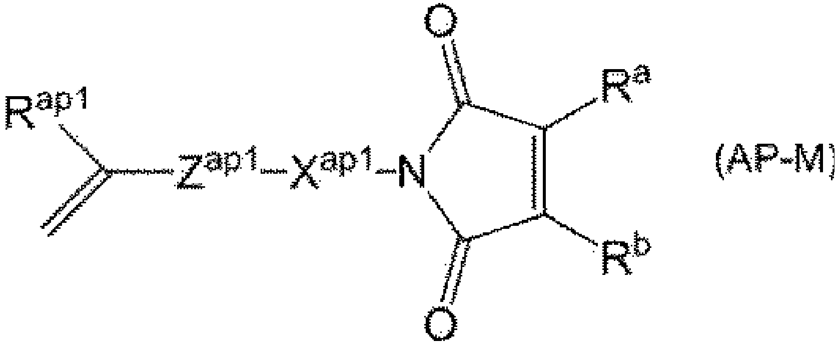

The definitions of R^{a}, R^{b}, R^{ap1}, Z^{ap1}, and X^{ap1} in Formula (AP-M) are identical to the definitions of those (also including those described as preferable examples) in Formula (AP).

Preferable examples of the monomer represented by Formula (AP-M) include the following compounds (AP-M1) to (AP-M16), but the present invention is not limited thereto.

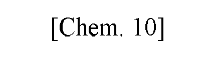

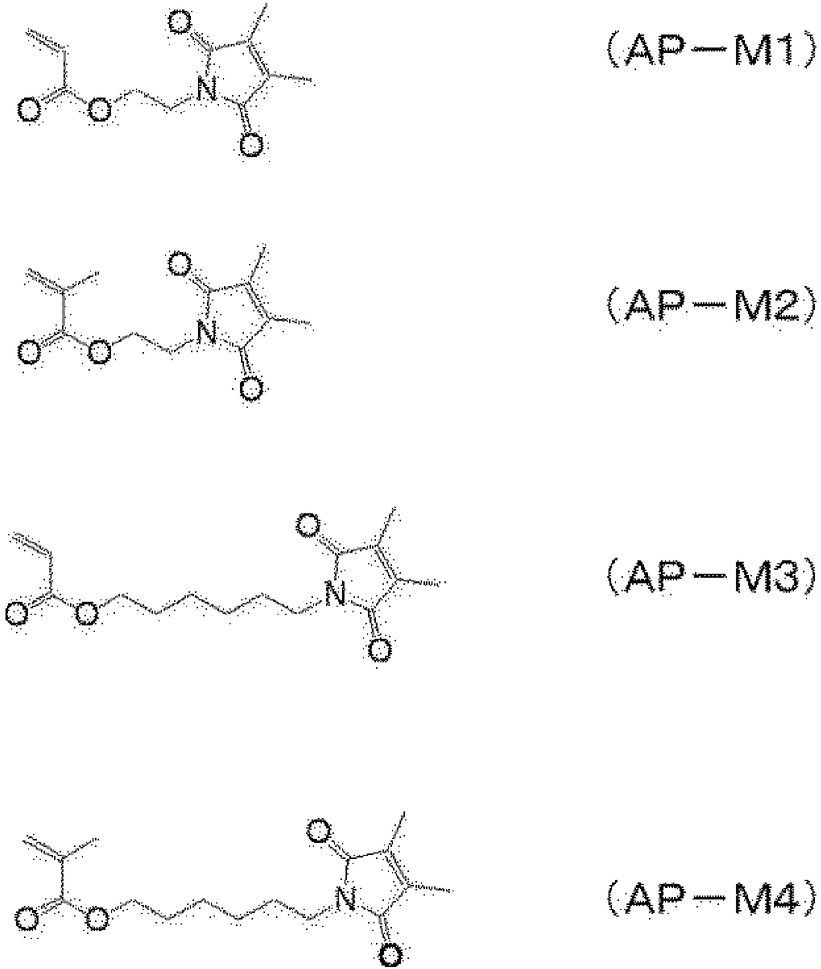

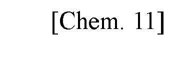

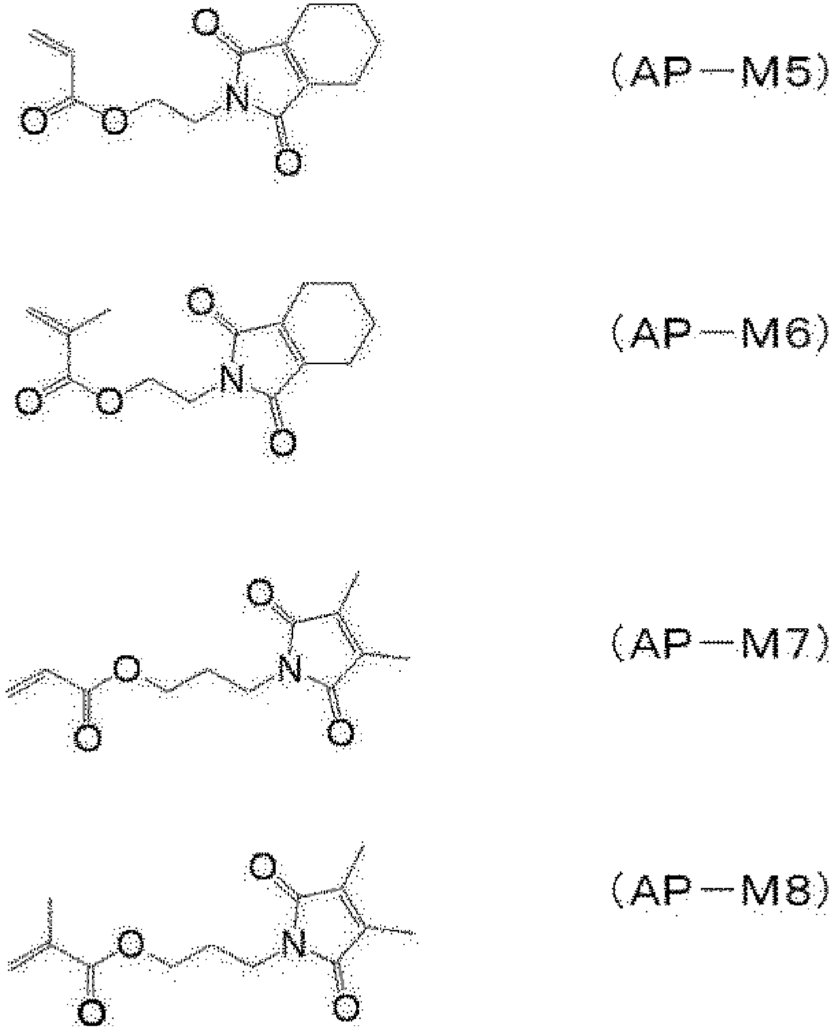

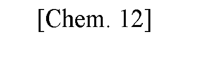

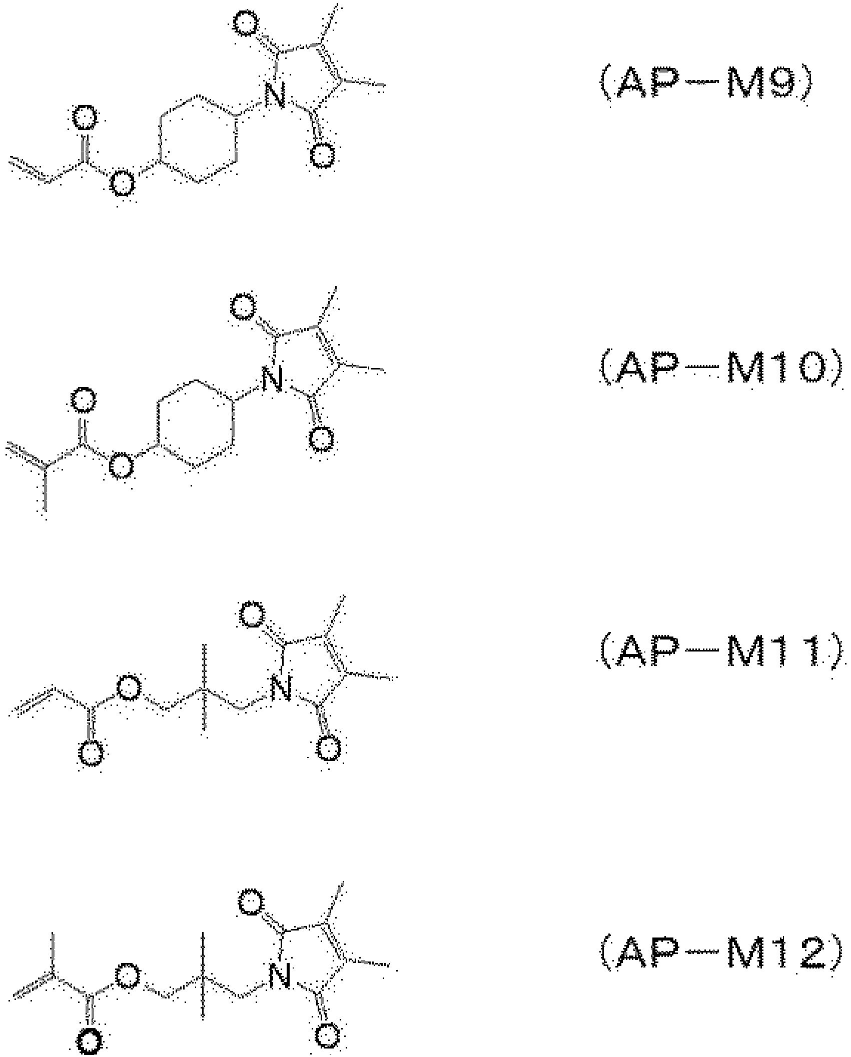

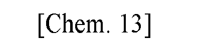

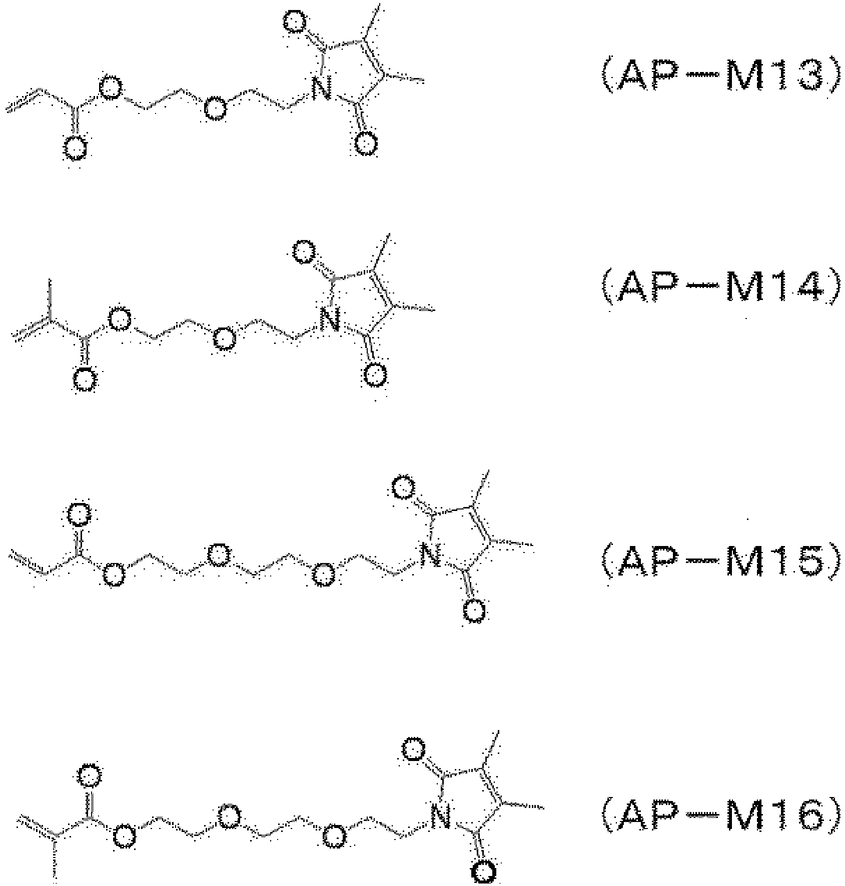

The ink composition of the present invention may include water (Component d), and, in a case in which the ink composition includes water, (Component a) and/or (Component b) desirably have a water-soluble group.

In a case in which (Component a) has a water-soluble group, 1 g of (Component a) is preferably dissolved or dispersed in less than 30 ml of water, more preferably dissolved or dispersed in less than 20 ml of water, and particularly preferably dissolved or dispersed in less than 10 ml of water. (Component a) is preferably water-soluble.

(Component a) of the present invention preferably has a water-soluble group, and there is no limitation regarding the water-soluble group in (Component a) as long as the group is capable of making the compound of (Component a) water-soluble or water-dispersible. The water-soluble group that may be included in (Component a) may be any of a nonionic water-soluble group and an ionic water-soluble group such as an anionic group and a cationic group.

The nonionic water-soluble group used in the present invention is not limited, and examples thereof include a residue produced by removing one hydrogen atom from a heterocyclic compound containing a nitrogen atom or an oxygen atom, an amide group, a carbamoyl group, an alkyl-substituted carbamoyl group, an alcoholic hydroxyl group, groups having a polyalkyleneoxy structure, and the like. The nonionic water-soluble group is preferably a carbamoyl group, an alkyl-substituted carbamoyl group, an alcoholic hydroxyl group, or a group having a polyalkyleneoxy structure, and still more preferably an alcoholic hydroxyl group or a group having a polyalkyleneoxy structure.

Examples of the heterocyclic compound including a nitrogen atom or an oxygen atom include lactones such as γ-butyrolactone, cyclic urea such as 2-pyrrolidone and ethylene urea, cyclic carbonates such as ethylene carbonate and propylene carbonate, cyclic ethers such as tetrahydrofuran and 1,4-dioxane, and crown ethers such as 12-crown-4.

The amide group is not limited, and preferable examples thereof include groups represented by the following Formula (11).

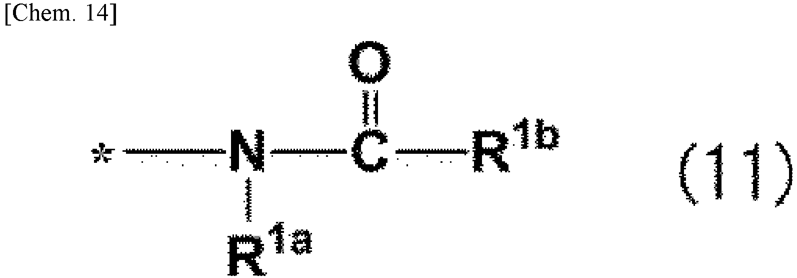

In Formula (11), each of R^{1a} and R^{1b} independently represents a hydrogen atom or an alkyl group. R^{1a} and R^{1b} may be bonded to each other so as to form a 4- to 6-membered alicyclic structure. '*' represents a bonding site.

Examples of the alkyl-substituted carbamoyl group include a monoalkyl carbamoyl group in which the hydrogen atom is bonded with N in a carbamoyl group is substituted by an alkyl group and a dialkyl carbamoyl group in which two hydrogen atoms are bonded with N in a carbamoyl group are substituted by an alkyl group. Specific preferable examples thereof include groups represented by the following Formula (12).

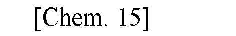

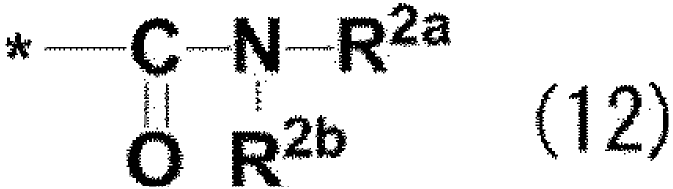

In Formula (12), each of R^{2a} and R^{2b} independently represents a hydrogen atom or an alkyl group. R^{2a} and R^{2b} may be bonded to each other so as to form a 4- to 6-membered alicyclic structure. '*' represents a bonding site.

The group having a polyalkyleneoxy structure is not limited, and preferable examples thereof include groups represented by the following Formula (13).

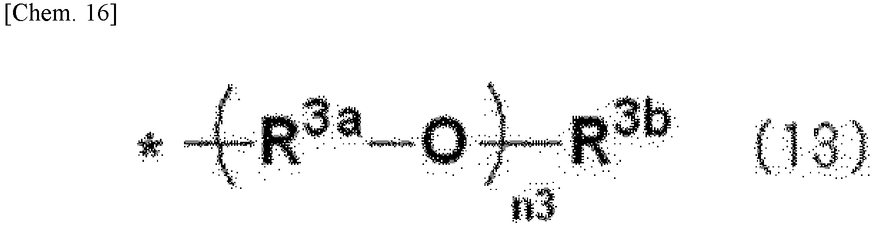

In Formula (13), R^{3a} represents an alkylene group, and R^{3b} represents a hydrogen atom or an alkyl group. n3 represents an integer of 4 to 50. A plurality of R^{3a}s included in the group may be identical or different. '*' represents a bonding site.

The ionic water-soluble group used in the present invention is preferably a group selected from the group consisting of a carboxyl group, a sulfo group, a phosphate group, a phosphonic acid group, salts thereof, and quaternary ammonium salts. Examples of the salts include metal salts, onium salts, and the like. The ionic water-soluble group used in the present invention is more preferably a group selected from the group consisting of a carboxyl group, a sulfo group, a phosphate group, a phosphonic acid group, and salts thereof, even more preferably a group selected from the group consisting of a carboxyl group, a sulfo group, and salts thereof, and particularly preferably a carboxyl group and its salts.

The number of the water-soluble groups in (Component a) is not limited as long as (Component a) is water-soluble or water-dispersible, and may be, for example, singular or plural, and the number is appropriately selected depending on the kind, molecular weight, and the like of the water-soluble group. In a case in which a plurality of the water-soluble groups is present, the water-soluble groups may be identical or different.

In a case in which (Component a) is a high-molecular compound, the high-molecular compound may have a structure of the following Formula (AP-C) in addition to the structure of Formula (AP).

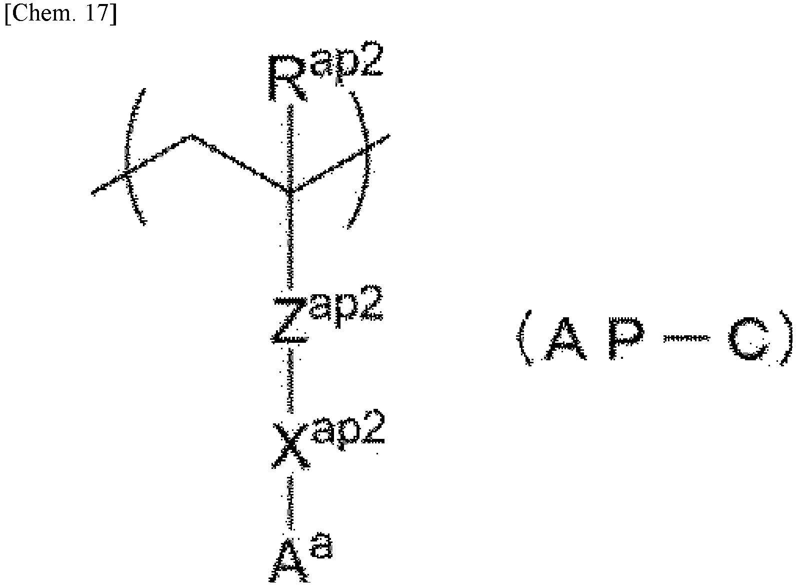

In Formula (AP-C), R^{ap2} represents a hydrogen atom or a methyl group. Z^{ap2} represents -COO-, -CONR^{ax2}-, or a single bond, and R^{ax2} represents a hydrogen atom or an alkyl group having 1 to 4 carbon atoms. X^{ap2} represents a single bond, an alkylene group, or a group selected from the group consisting of an arylene group and an aralkylene group. A^{a} represents a water-soluble group.

Examples of the water-soluble group represented by A^{a} include the same water-soluble groups described above, including those in the preferable range.

In Formula (AP-C), it is preferable that R^{ap2} be a hydrogen atom, Z^{ap2} be -COO-, X^{ap2} be a single bond, an alkylene group having 2 to 8 carbon atoms, or an arylene group having 6 to 10 carbon atoms, and A^{a} be a carboxyl group or a sulfo group.

The structure represented by Formula (AP-C) can be obtained from a monomer represented by the following Formula (AP-C-M).

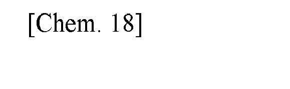

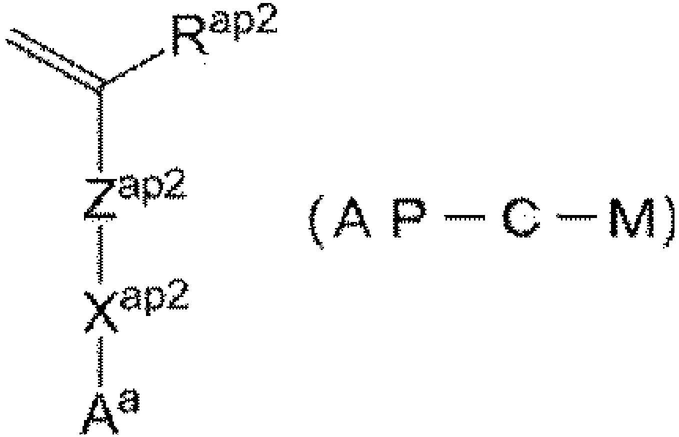

In Formula (AP-C-M), the definitions of R^{ap2}, Z^{ap2}, X^{ap2}, and A^{a} are identical to the definitions of those, including those in the preferable range, in Formula (AP-C).

Preferable examples of the monomer represented by Formula (AP-C-M) include the following compounds (AP-C-M1) to (AP-C-M27), but the present invention is not limited thereto.

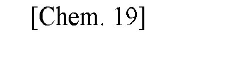

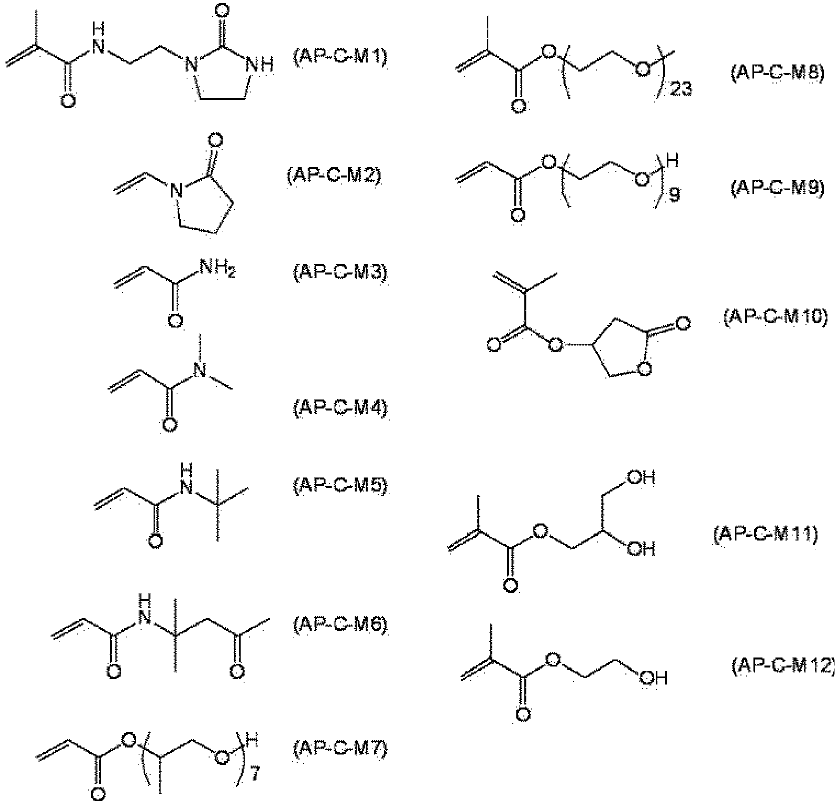

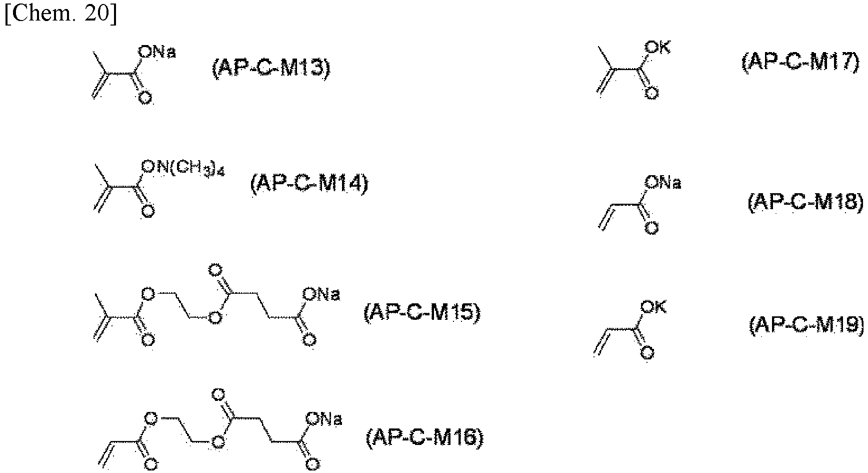

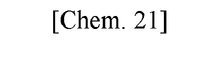

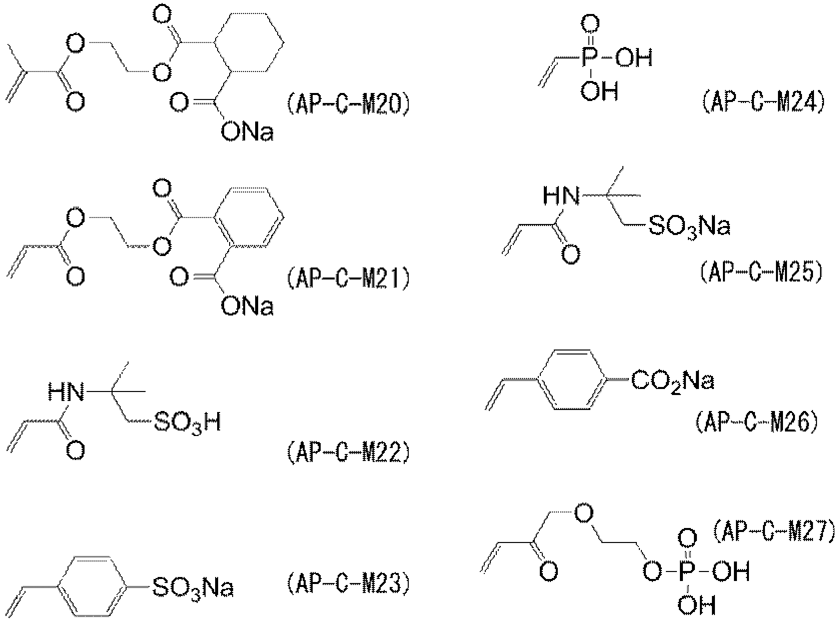

Examples of other monomers that can be copolymerized with the monomer represented by Formula (AP-M) and the monomer having the structure represented by Formula (AP-C-M) include styrene, p-methoxystyrene, methyl (meth)acrylate, ethyl (meth)acrylate, allyl (meth)acrylate, butyl (meth)acrylate, hexyl (meth)acrylate, 2-ethylhexyl (meth)acrylate, octyl (meth)acrylate, decyl (meth)acrylate, stearyl (meth)acrylate, cyclohexyl (meth)acrylate, bornyl (meth)acrylate, isobornyl (meth)acrylate, benzyl (meth)acrylate, 2-ethyl hexyl diglycol (meth)acrylate, butoxyethyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H, 1H, 2H, 2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 3-hydroxypropyl (meth)acrylate, butoxydiethylene glycol (meth)acrylate, trifluoroethyl (meth)acrylate, perfluorooctyl ethyl (meth)acrylate, 2-hydroxy-3-phenoxypropyl (meth)acrylate, (meth)acrylamide, N-butyl (meth)acrylate, N-p-hydroxyphenyl (meth)acrylamide, and p-sulfamoylphenyl (meth)acrylamide. Meanwhile, a well-known monomer other than the above-described monomers can also be used as necessary.

In a case in which (Component a) is a copolymer, (Component a) may have a structure represented by the following Formula (A-poly).

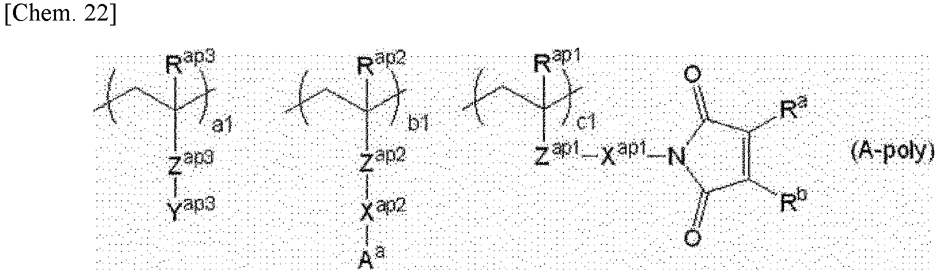

In Formula (A-poly), R^{ap3} represents a hydrogen atom or a methyl group. Z^{ap3} represents -COO-, -CONR^{ax3}-, or a single bond, and R^{ax3} represents a hydrogen atom or an alkyl group having 1 to 4 carbon atoms. Y^{ap3} represents a hydrogen atom, an alkyl group having 1 to 10 carbon atoms, an aryl group having 6 to 20 carbon atoms, or an aralkyl group having 7 to 20 carbon atoms. a1, b1, and c1 represent the copolymerization proportions in the high-molecular compound, and the sum of a1, b1, and c1 reaches 100.

The definitions of R^{a}, R^{b}, R^{ap1}, Z^{ap1}, and X^{ap1} in Formula (A-poly) are respectively identical to the definitions of R^{a}, R^{b}, R^{ap1}, Z^{ap1}, and X^{ap1} in Formula (AP), including those in the preferable range.

In addition, R^{ap2}, Z^{ap2}, X^{ap2}, and A^{a} in Formula (A-poly) are identical to R^{ap2}, Z^{ap2}, X^{ap2}, and A^{a} in Formula (AP-C), including those in the preferable range.

Examples of (Component a) include the following compounds, but the present invention is not limited thereto.

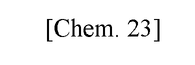

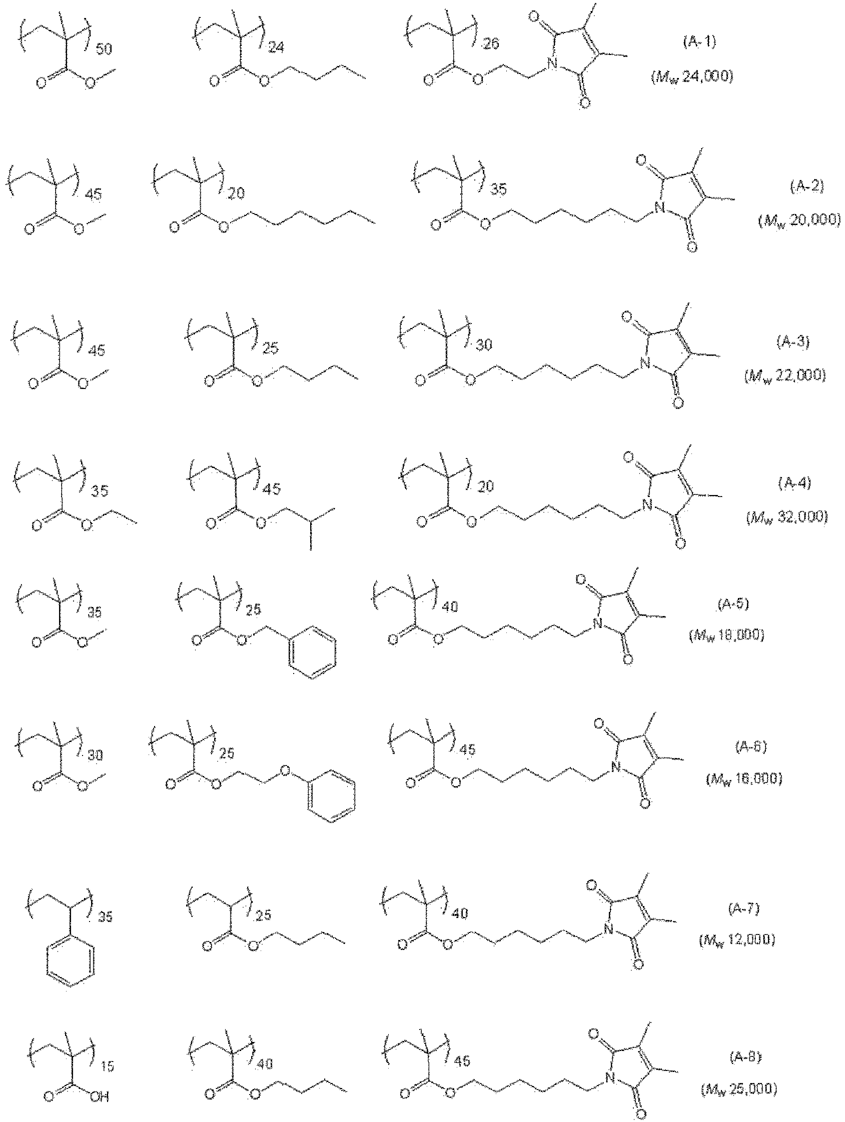

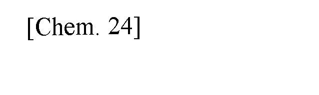

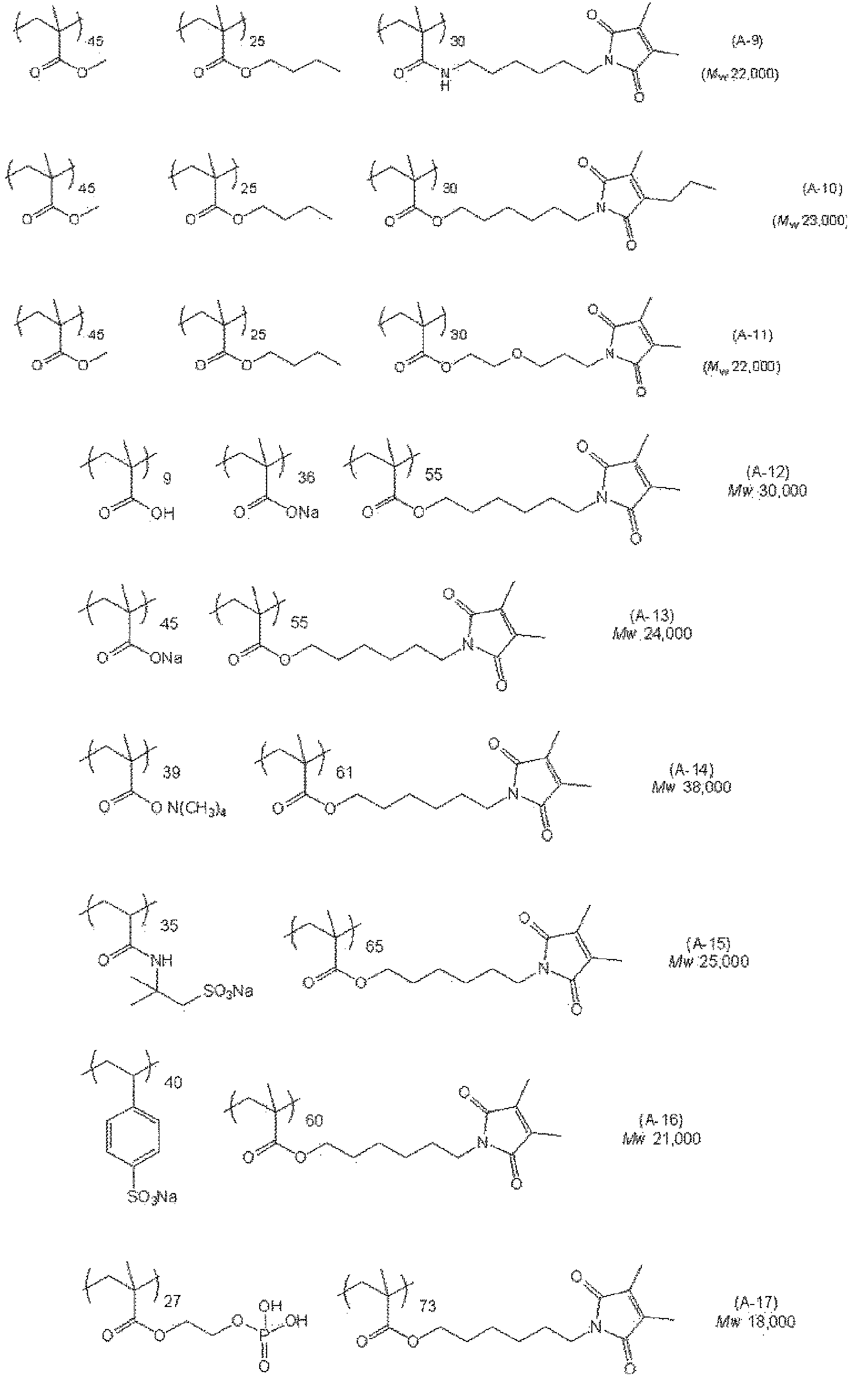

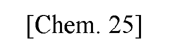

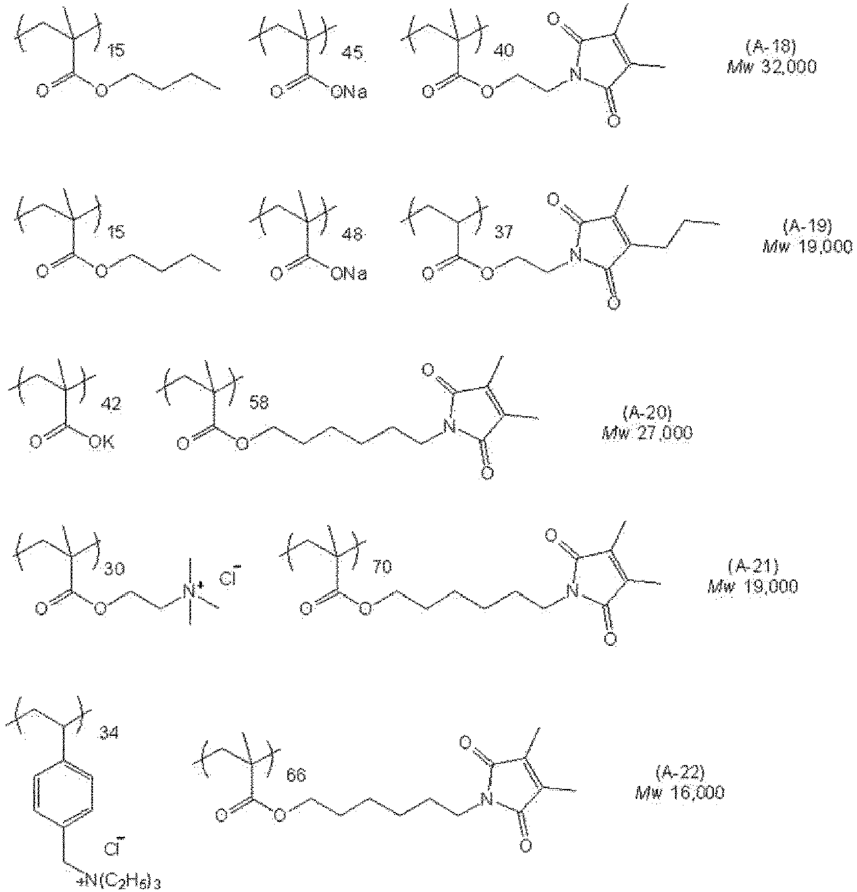

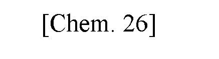

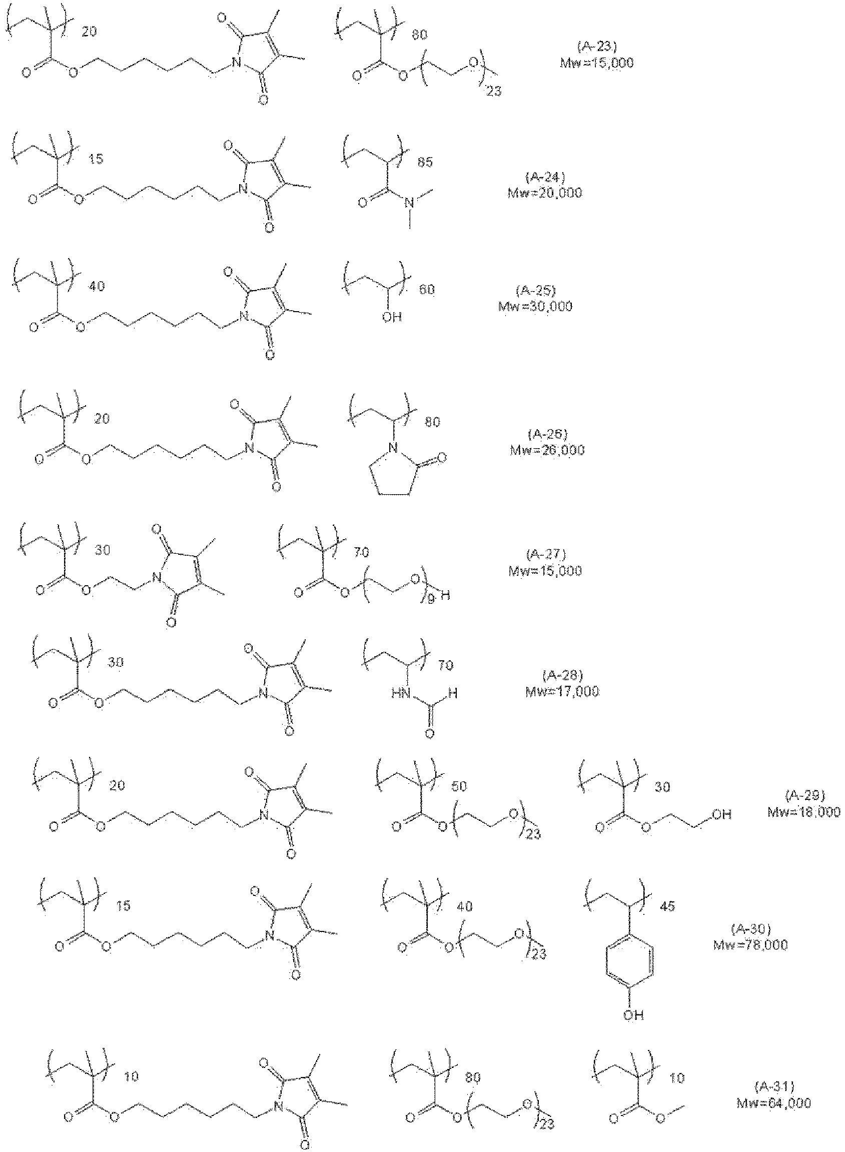

Furthermore, the following compounds can also be exemplified. In Exemplary Compound a-A and Exemplary Compound a-B described below, "Me" represents a methyl group, and "Bu" represents an n-butyl group. The composition ratio of Exemplary Compound a-A is represented by mass, and the weight-average molecular weight is 21,000.

Exemplary Compound a-A can be synthesized using the following synthesis scheme.

In the synthesis scheme of Exemplary Compound a-A and Exemplary Compound a-B described below, "MCPBA" represents meta-chloroperbenzoic acid, and "V-601" represents dimethyl-2,2-azobis(2-methylpropionate).

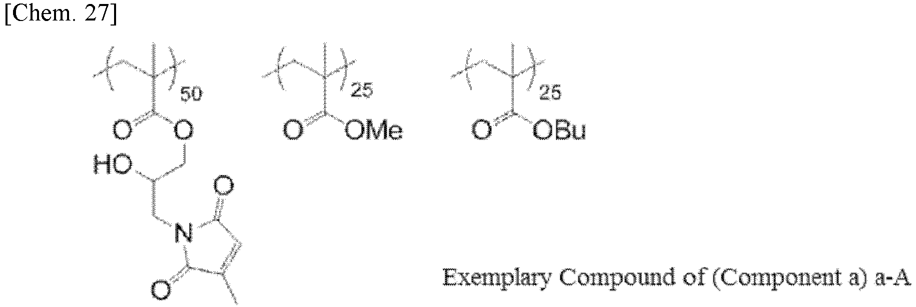

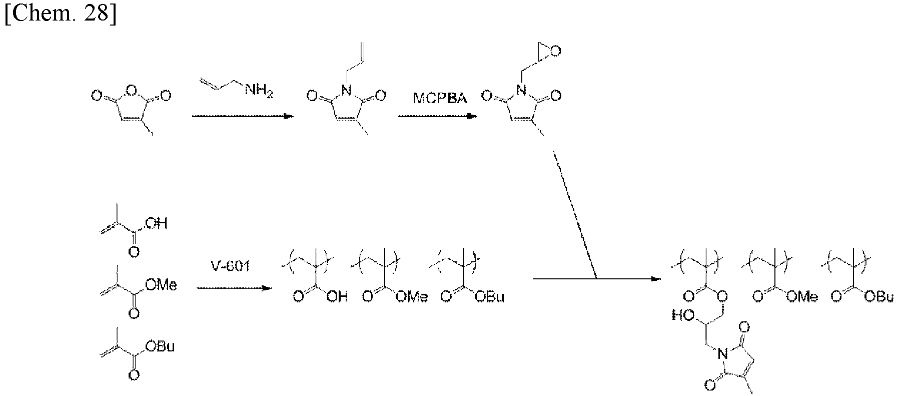

The composition ratio of Exemplary Compound a-B is represented by mass, and the weight-average molecular weight is 25,000.

Exemplary Compound a-B can be synthesized using the following synthesis scheme.

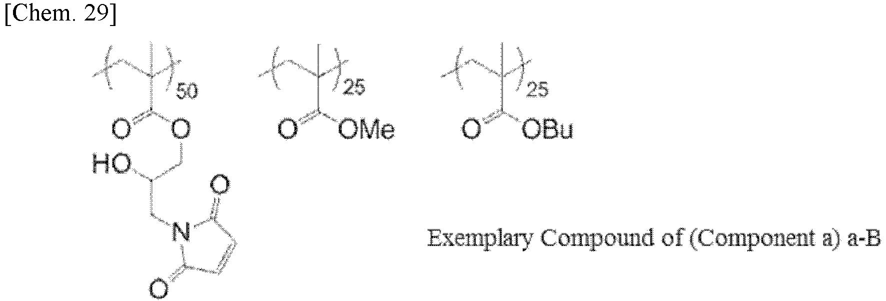

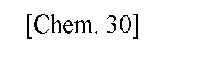

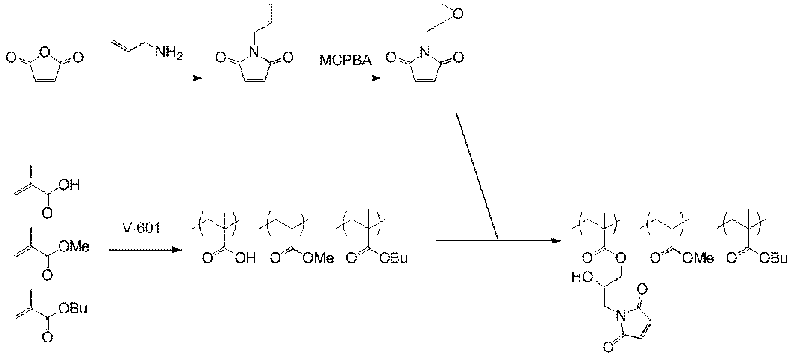

(Component a) or a precursor thereof in the present invention can be prepared, generally, by a well-known conventional method. For example, a low-molecular compound such as Exemplary Compounds (AL-1) to (AL-3) can be prepared with reference to the method described in US2009/0224203A1, pp. 2172 to 2176, Synlett Vol. 13 (2009), and pp. 1687 to 1699, Journal of Polymer Science Part A-1 Polymer Chemistry Vol. 10, Issue 6 (1972). Acrylates which serve as a precursor of a high-molecular compound such as Exemplary Compounds (AP-M1) to (AP-M16) can be prepared with reference to the method described in JP1977-988A(JP-S52-988A), JP1992-251258A (JP-H4-251258A), and the like. Compounds that serve as a precursor of a high-molecular compound such as Exemplary Compounds (AP-C-M1) to (AP-C-M27) are all commercially available compounds or commercially available compounds in which the acidic group is neutralized by a hydroxide of an alkali metal or the like. A high-molecular compound such as Exemplary Compounds (A-1) to (A-31) can be obtained by polymerizing the precursor using a well-known polymerization method, and, if necessary, neutralizing the acidic group in a commercially available compound using a hydroxide of an alkali metal or the like, and can be prepared using, for example, the polymerization method described in JP1977-988A (JP-S52-988A), JP1980-154970A (JP-S55-154970A), pp. 5414 to 5421, Langmuir Vol. 18, Issue 14 (2002), or the like.

The content of (Component a) in the ink composition is preferably in a range of 1 mass% to 50 mass%, more preferably in a range of 2 mass% to 35 mass%, and still more preferably in a range of 3 mass% to 30 mass%.

### <(Component b)>

The ink composition of the present invention includes at least one compound selected from the group consisting of a compound represented by the following Formula (B1) and a compound represented by the following Formula (B2) (Component b).

First, the compound represented by Formula (B1) will be described in detail.

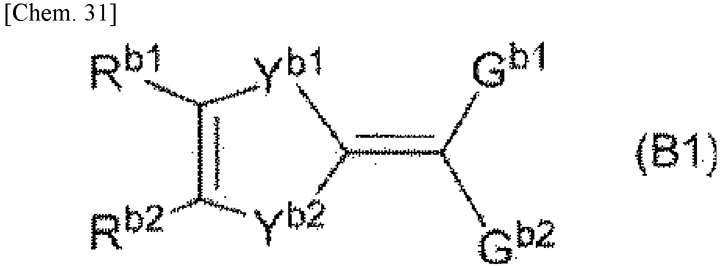

In Formula (B1), each of R^{b1} and R^{b2} independently represents a hydrogen atom, an alkyl group, an aryl group, an alkenyl group, or a heterocyclic group, and R^{b1} and R^{b2} may be bonded to each other so as to form a ring. Each of Y^{b1} and Y^{b2} independently represents a divalent group selected from the group consisting of -O-, -S-, -NR^{b3}- (R^{b3} represents a hydrogen atom, an alkyl group, an aryl group, or an alkenyl group), -Se-, -C(CH₃)₂-, and -CH=CH-. Each of G^{b1} and G^{b2} independently represents a hydrogen atom, a cyano group, an amide group, an alkyl amide group, an alkoxy carbonyl group, an aryloxy carbonyl group, an acyl group, an aryl carbonyl group, an alkyl sulfanyl group, an aryl sulfanyl group, an alkyl sulfonyl group, an aryl sulfonyl group, or a fluoroalkyl sulfonyl group, and G^{b1} and G^{b2} may be bonded to each other so as to form a ring. However, in a case in which G^{b1} and G^{b2} form a ring, the formed ring may include a divalent linking group selected from the group consisting of -C(=O)-, -C(=S)-, -NR¹²- (R¹² represents a hydrogen atom, an alkyl group, or an aryl group), -N=CR¹³- (R¹³ represents a hydrogen atom, an alkyl group, or an aryl group), -O-, and -S-. At least one of the groups represented by R^{b1}, R^{b2}, Y^{b1}, Y^{b2}, G^{b1}, and G^{b2} contains a polymerizable group as a substituent.

Each of R^{b1} and R^{b2} independently represents a hydrogen atom, an alkyl group, an aryl group, an alkenyl group, or a heterocyclic group, and R^{b1} and R^{b2} may be bonded to each other so as to form a ring. The alkyl group, the aryl group, the alkenyl group, or the heterocyclic group may or may not have a substituent.

Each of R^{b1} and R^{b2} is preferably a hydrogen atom, an alkyl group, or an alkenyl group, and more preferably a hydrogen atom or an alkyl group.

In a case in which either or both R^{b1} and R^{b2} is an alkyl group, the alkyl group is preferably an alkyl group having 1 to 12 carbon atoms, and more preferably an alkyl group having 1 to 4 carbon atoms. Examples of the alkyl group include a methyl group, an ethyl group, a propyl group, an isopropyl group, a butyl group, an isobutyl group, a sec-butyl group, a tert-butyl group, a pentyl group, anisopentyl group, a neopentyl group, a 1-ethylpropyle group, a hexyl group, an isohexyl group, a 1,1-dimethyl butyl group, a 2,2-dimethyl butyl group, a 3,3-dimethyl butyl group, a 2-ethyl butyl group, a heptyl group, an octyl group, a nonyl group, a decyl group, and the like.

In a case in which either or both R^{b1} and R^{b2} is an aryl group, the aryl group is preferably an aryl group having 6 to 20 carbon atoms, and more preferably an aryl group having 6 to 10 carbon atoms. Examples of the aryl group include a phenyl group, a naphtyl group, an anthryl group, a phenanthryl group, an acenaphthylenyl group, a biphenylyl group, and the like. Among them, a phenyl group, a 1-naphtyl group, and a 2-naphtyl group are exemplified.

In a case in which either or both R^{b1} and R^{b2} is an alkenyl group, the alkenyl group is preferably an alkenyl group having 2 to 12 carbon atoms, and more preferably an alkenyl group having 2 to 6 carbon atoms. Examples of the alkenyl group include an ethenyl group, a 1-propenyl group, a 2-propenyl group, a 2-methyl-1-propenyl group, a 1-butenyl group, a 2-butenyl group, a 3-butenyl group, a 3-methyl-2-butenyl group, a 1-pentenyl group, a 2-pentenyl group, a 3-pentenyl group, a 4-pentenyl group, a 4-methyl-3-pentenyl group, a 1-hexenyl group, a 3-hexenyl group, a 5-hexenyl group, a 1-heptenyl group, a 1-octenyl group, and the like.

In a case in which either or both R^{b1} and R^{b2} is a heterocyclic group, examples thereof include a 5- to 7-membered monocyclic non-aromatic heterocyclic group, a 5- to 7-membered condensed non-aromatic heterocyclic group, and the like which contain as ring-constituting atoms 1 to 4 hetero atoms selected from an oxygen atom, a sulfur atom, and a nitrogen atom in addition to the carbon atom. Examples of the condensed non-aromatic heterocyclic group include groups in which the 5 to 7-membered monocyclic non-aromatic heterocyclic group, a 6-membered ring containing 1 or 2 nitrogen atoms, and a benzene ring or a 5-membered ring containing one sulfur atom are condensed together, and the like. Examples of the non-aromatic heterocyclic group also include a bridged non-aromatic heterocyclic group.

Specific examples of the non-aromatic heterocyclic group include pyrrolidinyl (for example, 1-pyrrolidinyl, 2-pyrrolidinyl, 3-pyrrolidinyl), pyperidinyl (for example, piperidino), morpholinyl (for example, morpholino), thiomorpholinyl (for example, thiomorpholino), piperazinyl (for example, 1-piperazinyl), hexamethyleneiminyl (for example, hexamethyleneimine-1-yl), oxazolidinyl (for example, oxazolidine-3-yl), thiazolidinyl (for example, thiazolidine-3-yl), imidazolidinyl (for example, imidazolidine-3-yl), oxoimidazolidinyl (for example, 2-oxoimidazolidine-1-yl), dioxoimidazolidinyl (for example, 2,4-dioxoimidazolidine-3-yl), dioxooxazolidinyl (for example, 2,4-dioxooxazolidine-3-yl, 2,4-dioxooxazolidine-5-yl, 2,4-dioxooxazolidine-1-yl), dioxothiazolidinyl (for example, 2,4-dioxothiazolidine-3-yl, 2,4-dioxothiazolidine-5-yl), dioxoisoindolinyl (for example, 1,3-dioxoisoindoline-2-yl), oxooxadiazolidinyl (for example, 5-oxooxadiazolidine-3-yl), oxothiadiazolidinyl (for example, 5-oxothiadiazolidine-3-yl), oxopyperidinyl (for example, 3-oxopyperadine-1-yl), dioxopyperadinyl (for example, 2,3-dioxopyperadine-1-yl, 2,5-dioxopyperadine-1-yl), oxodioxyolyl (for example, 2-oxo-1,3-dioxol-4-yl), oxodioxoranyl (for example, 2-oxo-1,3-dioxoranyl-4-yl), 3-oxo-1,3-dihydro-2-benzofuranyl (for example, 3-oxo-1,3-dihydro-2-benzofuran-1-yl), oxodihyrooxadiazolyl (for example, 5-oxo-4,5-dihyro-1,2,4-oxadiazol-3-yl), oxodihydropyrazolyl (for example, 5-oxo-4,5-dihyro-1H-pyrazol-3-yl), 4-oxo-2-thioxo-1,3-thiazolidine-5-yl, 4-oxo-2-thioxo-1,3-oxazolidine-5-yl, tetrahydropyranyl (for example, 4-tetrahydropyranyl), 4-oxo-4,5,6,7-tetrahydro-1-benzofuranyl (for example, 4-oxo-4,5,6,7-tetrahydro-1-benzofuran-3-yl), 1,3(2H, 5H)-dioxotetrahydroimidazo[1,5-a]pyridinyl, 1,3(2H, 5H)-dixoso-10, 10a-dihydroimidazo[1,5-b]isoquinolynyl, azabicyclooctyl (for example, 1-azabicyclo[2.2.2]octane-2-yl, 1-azobicyclo[2.2.2]octane-3-yl), and the like.

In a case in which R^{b1} and R^{b2} are bonded to each other so as to form a ring, R^{b1} and R^{b2} preferably form a benzene ring or a naphthalene ring, and more preferably form a benzene ring. Furthermore, the structure of the ring formed by the mutual bonding of R^{b1} and R^{b2} may be substituted by a substituent, and preferable examples of the substituent include halogen atoms (for example, fluorine, chlorine, bromine, and the like); alkyl groups having 1 to 12 carbon atoms such as methyl, ethyl, n-propyl, isopropyl, n-butyl, and t-butyl; aryl groups having 6 to 10 carbon atoms such as a phenyl group and a naphthyl group; ally groups having 3 to 10 carbon atoms; and alkoxy groups having 1 to 6 carbon atoms such as a methoxy group and an ethoxy group.

Each of Y^{b1} and Y^{b2} independently represents a divalent group selected from the group consisting of -O-, -S-, -NR^{b3}- (R^{b3} represents a hydrogen atom, an alkyl group, an aryl group, or an alkenyl group), -Se-, -C(CH₃)₂-, and -CH=CH-. The alkyl group, the aryl group, and the alkenyl group may or may not have a substituent.

Each of Y^{b1} and Y^{b2} is, independently, preferably -O-, -S-, or -NR^{b3}-, more preferably -S- or -NR^{b3}-, and particularly preferably -S-.

In a case in which R^{b3} is an alkyl group, the number of carbon atoms is preferably 1 to 8, and more preferably 1 to 4.

In a case in which R^{b3} is an aryl group, the number of carbon atoms is preferably 6 to 10, and more preferably 6.

In a case in which R^{b3} is an alkenyl group, the number of carbon atoms is preferably 2 to 8, and more preferably 2 to 4.

The substituent that R^{b3} may have is preferably a carboxyl group or the like.

Each of G^{b1} and G^{b2} independently represents a hydrogen atom, a cyano group, an amide group, an alkyl amide group, an alkoxy carbonyl group, an aryloxy carbonyl group, an acyl group, an aryl carbonyl group, an alkyl sulfanyl group, an aryl sulfanyl group, an alkyl sulfonyl group, an aryl sulfonyl group, or a fluoroalkyl sulfonyl group, and G^{b1} and G^{b2} may be bonded to each other so as to form a ring, however, in a case in which G^{b1} and G^{b2} form a ring, the formed ring may include a divalent linking group selected from the group consisting of -C(=O)-, -C(=S)-, -NR¹²- (R¹² represents a hydrogen atom, an alkyl group, or an aryl group), -N=CR¹³- (R¹³ represents a hydrogen atom, an alkyl group, or an aryl group), -O-, and -S-.

The amide group, the alkoxy carbonyl group, the aryloxy carbonyl group, the acyl group, the aryl carbonyl group, the alkyl sulfanyl group, the aryl sulfanyl group, the alkyl sulfonyl group, the aryl sulfonyl group, and the fluoroalkyl sulfonyl group may or may not have a substituent.

Each of G^{b1} and G^{b2} is, independently, preferably an amide group, an acyl group, or an alkyl sulfanyl group, and more preferably an amide group or an alkyl sulfanyl group.

In a case in which either or both G^{b1} and G^{b2} is an alkylamide group, the number of carbon atoms is preferably 2 to 8, and more preferably 2 to 4.

In a case in which either or both G^{b1} and G^{b2} is an alkoxy carbonyl group, the number of carbon atoms is preferably 2 to 8, and more preferably 2 to 4.

In a case in which either or both G^{b1} and G^{b2} is an aryloxy carbonyl group, the number of carbon atoms is preferably 7 to 15, and more preferably 7 to 11.

In a case in which either or both G^{b1} and G^{b2} is an acyl group, the number of carbon atoms is preferably 2 to 8, and more preferably 2 to 4.

In a case in which either or both G^{b1} and G^{b2} is an aryl carbonyl group, the number of carbon atoms is preferably 7 to 15, and more preferably 7 to 11.

In a case in which either or both G^{b1} and G^{b2} is an alkyl sulfanyl group, the number of carbon atoms is preferably 1 to 8, and more preferably 1 to 4.

In a case in which either or both G^{b1} and G^{b2} is an aryl sulfanyl group, the number of carbon atoms is preferably 6 to 14, and more preferably 6 to 10.

In a case in which either or both G^{b1} and G^{b2} is an alkyl sulfonyl group, the number of carbon atoms is preferably 1 to 8, and more preferably 1 to 4.

In a case in which either or both G^{b1} and G^{b2} is an aryl sulfonyl group, the number of carbon atoms is preferably 6 to 14, and more preferably 6 to 10.

In a case in which either or both G^{b1} and G^{b2} is a fluoroalkyl sulfonyl group, the number of carbon atoms is preferably 1 to 8, and more preferably 1 to 4.

In a case in which R¹² is an alkyl group, the number of carbon atoms is preferably 1 to 8, and more preferably 1 to 4. In a case in which R¹² is an aryl group, the number of carbon atoms is preferably 6 to 14, and more preferably 6 to 10. The alkyl group and the aryl group in R¹² may or may not have a substituent.

In a case in which R¹³ is an alkyl group, the number of carbon atoms is preferably 1 to 8, and more preferably 1 to 4. In a case in which R¹³ is an aryl group, the number of carbon atoms is preferably 6 to 14, and more preferably 6 to 10. The alkyl group and the aryl group in R¹³ may or may not have a substituent.

In a case in which G^{b1} and G^{b2} are bonded to each other so as to form a ring, examples of the ring include the following substances that are used as an acidic nucleus in an ordinary merocyanine dye.
(1) 1,3-dicarbonyl nuclei, for example, 1,3-indandione, 1,3-cyclohexanedione, 5,5-dimethyl-1,3-cyclohexandione, 1,3-dioxane-4,6-dione,
(2) pyrazolinone nuclei, for example, 3-methyl-1-phenyl-2-pyrazoline-5-on, 1-phenyl-2-pyrazoline-5-on, 1-(2-benzothiazoline)-3-methyl-2-pyrazoline-5-on,
(3) iso oxazolinone nuclei, for example, 3-phenyl-2-isooxazoline-5-on, 3-methyl-2-isooxazoline-5-on, and the like,
(4) oxindole nuclei, for example, 1-alkyl-2,3-dihydro-2-oxindole,
(5) 2,4,6-triketohexahydropyrimidine nucleus, for example, barbituric acid or 2-thiobarbituric acid and derivatives thereof; examples of the derivatives include, in addition to 1-alkyl bodies such as 1-methyl and 1-ethyl, 1,3-dialkyl bodies such as 1,3-diethyl and 1,3-dibutyl, 1,3-diaryl bodies such as 1,3-diphenyl, 1,3-di(p-chlorophenyl), and 1,3-di(p-ethoxycarbonylphenyl), and 1-alkyl-3-aryl bodies such as 1-ethyl-3-phenyl, derivatives having a functional group in the first and/or third position such as 1-allyl-3-carboxypentyl, 1,3-bis(carboxylpentyl), 1-carboxylpropyl-3-phenyl, 1-carboxypropyl-3-(4-hydroxyphenyl), 1-carboxyphenyl-3-phenyl, 1,3-bis(carboxyphenyl), 1-allyl-3-{2-(N-phenylsulfamoyl)ethyl}, 1-ethyl-3-{2-(N-benzoylsulfamoyl)ethyl}, 1,3-bis(hydroxyphenyl), and 1-allyl-3-{2-(benzenesulfonylamino sulfonyl)ethyl},
(6) 2-thio-2,4-thiazolidinedione nucleus, for example, rhodanine and derivatives thereof; examples of the derivatives include 3-alkyl rhodanine such as 3-ethyl rhodanine and 3-aryl rhodanine, 3-aryl rhodanine such as 3-phenyl rhodanine, 3-carboxyalkyl rhodanine such as 3-carboxymethyl rhodanine and 3-carboxyethyl rhodanine, 3-carboxyaryl rhodanine such as 3-carboxyphenyl rhodanine, and the like,
(7) 2-thio-2,4-oxazolidinedione (2-thio-2,4-(3H,5H)- oxazoldione) nuclei, for example, 2-ethyl-2-thio-2,4-oxazolidinedione,
(8) thianaphtenone nucleus, for example, 3(2H)-thianaphtenone and 3 (2H)-thianaphtenone-1,1-dioxide,
(9) 2-thio-2,5-thiazolidinedione, for example, 3-ethyl-2-thio-2,5-thiazolidinedione,
(10) 2,4-thiazolidinedione nucleus, for example, 2,4-thiazolidinedione, 3-ethyl-2,4-thiazolidinedione, 3-phenyl-2,4-thiazolidinedione,
(11) thiazolidinone nucleus, for example, 4-thiazolidinone and 3 -ethyl-4-thiazolidinone,
(12) 4-thiazolinone nucleus, for example, 2-ethyl mercapto-5-thiazoline-4-one, 2-alkyl phenyl amino-5-thiazoline-4-one,
(13) 2-imino-2-oxozoline-4-one (pseudo hydantoin) nuclei,
(14) 2,4-imidazolidinedione (hydantoin) nucleus, for example, 2,4-imidazolidinedione, 3 - ethyl-2,4-imidazolidinedione,
(15) 2-thio-2,4-imidazolidinedione (2-thiohydantoin) nucleus, for example, 2-thio-2,4-imidazolidinedione, 3-ethyl-2-thio-2,4-imidazolidinedione,
(16) 2-imidazoline-5-one nuclei, for example, 2-n-propyl-mercapto-2-imidazoline-5-one,
(17) furan-5-one,
(18) 4-hydroxy-2(1H)-quinolinone nucleus or 4-hydroxy-2(1H)-pyridinone nuclei, for example, N-methyl-4-hydroxy-2(1H)-quinolinone, N-butyl-4-hydroxy -2(1H) -pyridinone,
(19) substituted or unsubstituted 4-hydroxy-2H-pyrano-2-one, 4-hydroxycoumarin,
(20) substituted or unsubstituted thioindoxyl, for example, 5-methyl thioindoxyl.

Among the above-described substances used as acidic nuclei, (1) 1,3-dicarbonyl nuclei, (2) pyrazolinone nuclei, (5) 2,4,6-triketohexahydropyrimidine nuclei, (6) 2-thio-2,4-thiazolidinedione nuclei, and (7) 2-thio-2,4-oxazolidinedione (2-thio-2,4-(3H,5H)-oxazoldione) nuclei are preferred, and (5) 2,4,6-triketohexahydropyrimidine nuclei represented by barbituric acid or 2-thiobarbituric acid and derivatives thereof are particularly preferred.

In Formula (B1), at least one of groups represented by R^{b1}, R^{b2}, Y^{b1}, Y^{b2}, G^{b1}, and G^{b2} includes a polymerizable group as a substituent.

Examples of the polymerizable group include an acryloyl group, a methacrylolyl group, an acrylamide group, a methacrylamide group, a styryl group, a vinyl group, a vinyl ether group, and an aryl group. Among them, an acryloyl group, a methacrylolyl group, an acrylamide group, a methacrylamide group, and a styryl group are preferred, and an acryloyl group and an acrylamide group are more preferred, and an acrylamide group is particularly preferred.

The polymerizable group may be bonded to the group represented by R^{b1}, R^{b2}, Y^{b1}, Y^{b2}, G^{b1}, and G^{b2} directly or through a linking group. Examples of the linking group include a single bond, a carbonyl group, an ether group, an ester group, an alkylene group having 1 to 6 carbon atoms, a polyoxyalkylene group having 1 to 6 carbon atoms, and a polyalkyleneamine group having 1 to 6 carbon atoms. Two or more kinds of linking groups may be included. In addition, the linking group may further include a substituent such as a hydroxyl group or an alkyl group.

The number of the polymerizable groups included in the compound represented by Formula (B1) is preferably in a range of 1 to 4, and more preferably in a range of 1 or 2. When the number of the polymerizable groups is 1 or 2, the molecular weight per polymerizable group increases compared with a case in which the number of the polymerizable groups is greater than 1 or 2, and the sensitizing effect to dimethyl maleimide represented by Formula (A) is more significant, which is preferable.

In the compound represented by Formula (B1), at least one of the groups represented by R^{b1} and R^{b2} preferably contains a polymerizable group as a substituent.

In a case in which G^{b1} and G^{b2} are bonded to each other so as to form a ring in the compound represented by Formula (B1), Formula (B1) has the structure of the following Formula (B1-a).

(Component b) is preferably a compound represented by Formula (B1-a).

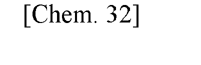

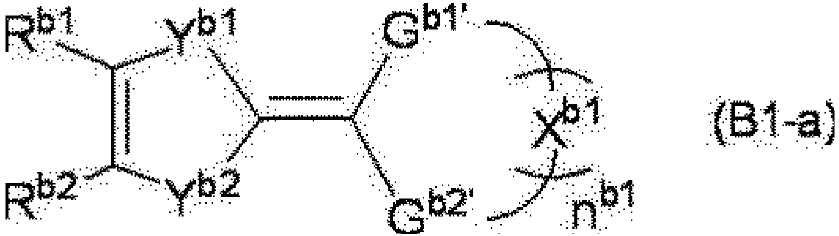

In Formula (B1-a), each of G^{b1'} and G^{b2'} represents a residue obtained by removing one hydrogen atom from G^{b1} and G^{b2}, X^{b1} represents a single bond, -C(=O)-, -C(=S)-, -NR¹²- (R¹² represents a hydrogen atom, an alkyl group, or an aryl group), -N=CR¹³- (R¹³ represents a hydrogen atom, an alkyl group, or an aryl group), -O-, or -S-, a plurality of X^{b1} s included in the compound may be identical or different, and n^{b1} is an integer of 1 or more.

Each of R^{b1}, R^{b2}, Y^{b1}, and Y^{b2} is identical to each of R^{b1}, R^{b2}, Y^{b1}, and Y^{b2} in Formula (B1).

n^{b1} is an integer of 1 or more, preferably an integer of 1 to 4, and still more preferably an integer of 1 or 2.

The compound represented by Formula (B1) is also preferably a compound represented by the following Formula (B1-b).

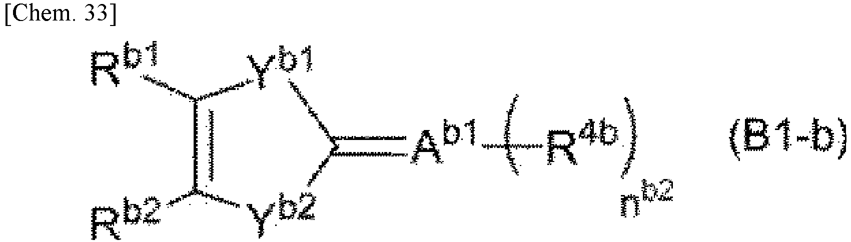

In Formula (B1-b), A^{b1} represents a residue obtained by removing (2+n^{b2}) hydrogen atoms from a compound having a hydrocarbon ring or a compound having a hetero ring, R^{4b} represents a hydrogen atom, an alkyl group, or an aryl group, and, in a case in which a plurality of R^{4b}s is included, R^{4b}s may be mutually identical or different. n^{b2} is an integer of 0 or more. However, a double bond that couples A^{b1} and a 5-membered ring in Formula (B1-b) is bonded to a carbon atom in A^{b1}.

At least one of the groups represented by R^{b1}, R^{b2}, Y^{b1}, Y^{b2}, A^{b1}, and R^{4b} contains a polymerizable group as a substituent.

The compound having a hydrocarbon ring in A^{b1} needs to contain a hydrocarbon ring, and examples thereof include a compound having a single hydrocarbon ring, a compound in which a hydrocarbon ring and a hydrocarbon ring are condensed, a compound in which a hetero ring and a hydrocarbon ring are condensed, and the like.

The compound having a hetero ring in A^{b1} needs to contain a hetero ring, and examples thereof include a compound having a single hetero ring, a compound in which a hydrocarbon ring and a hetero ring are condensed, a compound in which a hetero ring and a hetero ring are condensed, and the like.

Specific examples of the compound having the hydrocarbon ring or the compound having a hetero ring include the above-described compound used as an acidic nucleus in an ordinary merocyanine dye.

In a case in which R^{4b} is an alkyl group, the number of carbon atoms is preferably in a range of 1 to 8, and more preferably in a range of 1 to 4.

In a case in which R^{4b} is an aryl group, the number of carbon atoms is preferably in a range of 6 to 14, and more preferably in a range of 6 to 10.

The alkyl group and the aryl group in R^{4b} may or may not have a substituent.

n^{b2} is an integer of 0 or more, preferably an integer of 0 to 4, and more preferably an integer of 0 to 2.

The compound represented by Formula (B1) is more preferably a compound represented by the following Formula (B1-c).

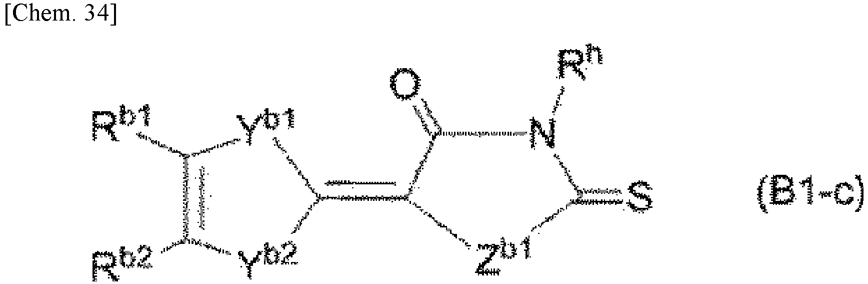

In Formula (B1-c), Z^{b1} represents -CONRⁱ-, -NRⁱ-, -O-, or -S-, and Rⁱ represents a hydrogen atom, an alkyl group, or an aryl group. R^{h} represents a hydrogen atom, an alkyl group, or an aryl group. Each of R^{b1}, R^{b2}, Y^{b1}, and Y^{b2} is identical to each of R^{b1}, R^{b2}, Y^{b1}, and Y^{b2} in Formula (B1).

In a case in which Rⁱ is an alkyl group, the number of carbon atoms is preferably in a range of 1 to 8, and more preferably in a range of 2 to 4.

In a case in which Rⁱ is an aryl group, the number of carbon atoms is preferably in a range of 6 to 14, and more preferably in a range of 6 to 10.

The alkyl group and the aryl group in Rⁱ may or may not have a substituent.

In a case in which R^{h} is an alkyl group, the number of carbon atoms is preferably in a range of 1 to 8, and more preferably in a range of 2 to 4.

In a case in which R^{h} is an aryl group, the number of carbon atoms is preferably in a range of 6 to 14, and more preferably in a range of 6 to 10.

The alkyl group and the aryl group in R^{h} may or may not have a substituent.

The compound represented by Formula (B1) can be synthesized using a well-known method. For example, the compound can be synthesized with reference to "The Theory of Photographic Process" fourth edition, by T. H. James, Macmillan Co., New York (1977), "The Cyanine Dyes and Related Compounds" by F. M. Hammer, John Wiley & Sons Co., New York (1964), and JP1986-203443A(JP-S61-203443A).

Specific examples of the compound represented by Formula (B1) which can be used in the present invention include the following compounds.

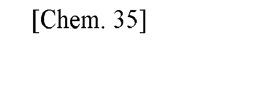

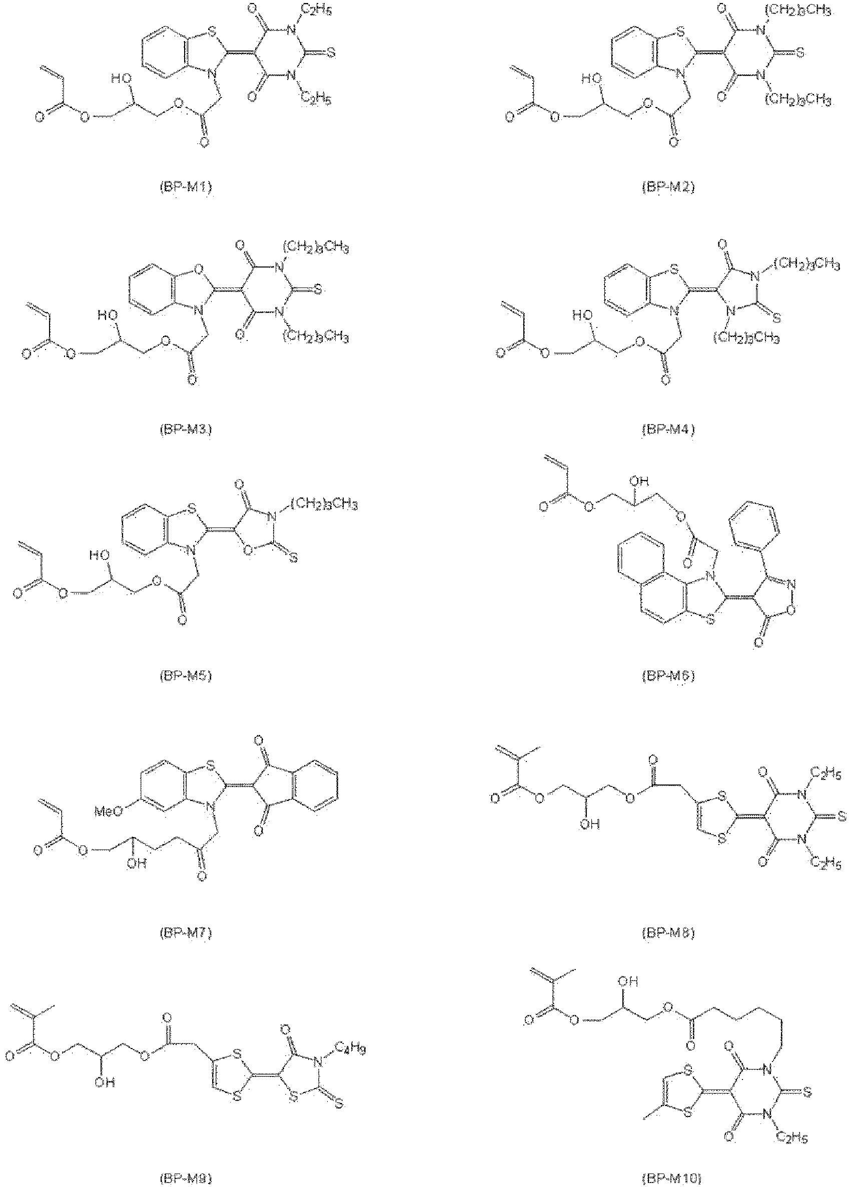

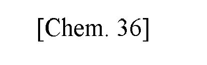

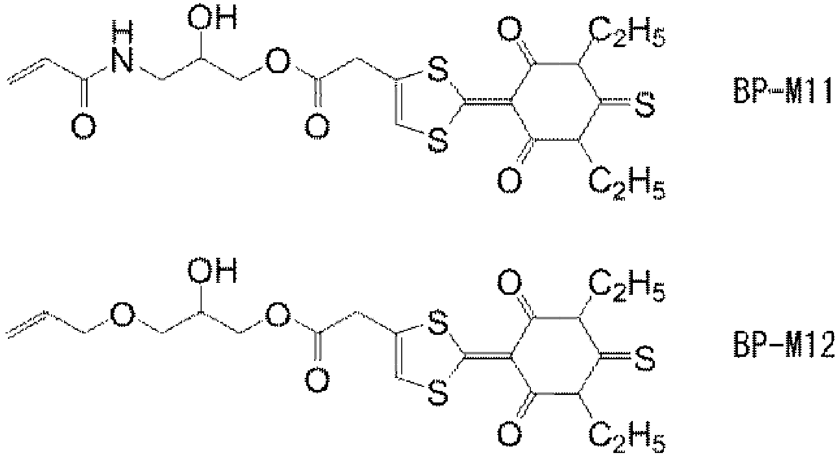

Next, the compound represented by Formula (B2) will be described in detail.

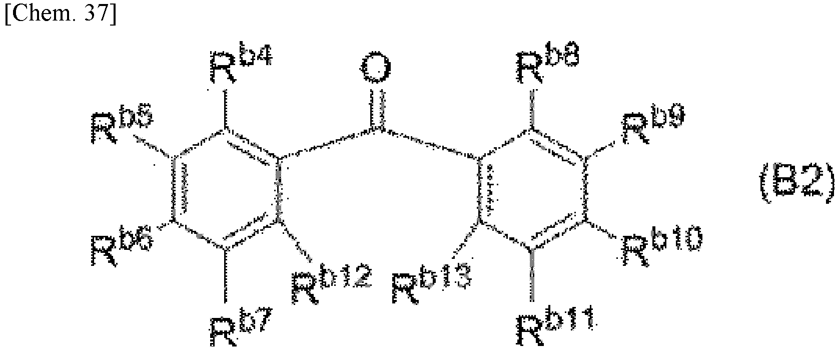

In Formula (B2), each of R^{b4}, R^{b5}, R^{b6}, R^{b7}, R^{b8}, R^{b9}, R^{b10}, R^{b11}, R^{b12}, and R^{b13} independently represents a hydrogen atom, a halogen atom, an alkyl group, an aryl group, a hydroxyl group, a cyano group, a nitro group, an amino group, an alkyl sulfanyl group, an alkyl amino group, an alkoxy group, an alkoxy carbonyl group, an acyloxy group, an acyl group, a carboxyl group, or a sulfo group. At least two groups selected from R^{b4}, R^{b5}, R^{b6}, R^{b7}, R^{b8}, R^{b9}, R^{b10}, R^{b11}, R^{b12}, and R^{b13} may be bonded to each other so as to form a ring, and, in a case in which a ring is formed, -S- may be included in the formed ring. At least one of the groups represented by R^{b4}, R^{b5}, R^{b6}, R^{b7}, R^{b8}, R^{b9}, R^{b10}, R^{b11}, R^{b12}, and R^{b13} contains a polymerizable group as a substituent.

Each of R^{b4}, R^{b5}, R^{b6}, R^{b7}, R^{b8}, R^{b9}, R^{b10}, and R^{b11} preferably represents a hydrogen atom, a halogen atom, an alkyl group, an aryl group, a hydroxyl group, a cyano group, an alkoxy group, an alkoxy carbonyl group, or a carboxyl group, more preferably represents a hydrogen atom, an alkyl group, an aryl group, a hydroxyl group, an alkoxy group, an alkoxy carbonyl group, or a carboxyl group, and most preferably represents a hydrogen atom, a hydroxyl group, an alkoxy carbonyl group, or a carbonyl group.

R^{b12} and R^{b13} be preferably bonded to each other through a hydrogen atom or -S- so as to form a ring.

Examples of the halogen atom include a fluorine atom, a chlorine atom, a bromine atom, and the like. The halogen atom is preferably a fluorine atom or a chlorine atom.

The alkyl group is preferably a straight, branched, or cyclic alkyl group having 1 to 8 carbon atoms. The alkyl group may or may not have a substituent.

The aryl group is preferably an aryl group having 6 to 10 carbon atoms. The aryl group may or may not have a substituent.

The alkyl sulfanyl group is preferably an alkyl sulfanilic having 1 to 8 carbon atoms. The alkyl sulfinilic group may or may not have a substituent.

The alkyl amino group is preferably an alkyl amino group having 1 to 8 carbon atoms. The alkyl amino group may or may not have a substituent.

The alkoxy group is preferably an alkoxy group having 1 to 8 carbon atoms. The alkoxy group may or may not have a substituent.

The alkoxy carbonyl group is preferably an alkoxy carbonyl group having 1 to 8 carbon atoms. The alkoxy carbonyl group may or may not have a substituent.

The acyloxy group is preferably an acyloxy group having 1 to 8 carbon atoms. The acyloxy group may or may not have a substituent.

The acyl group is preferably an acyl group having 1 to 8 carbon atoms. The acyl group may or may not have a substituent.

At least one of the groups represented by R^{b4}, R^{b5}, R^{b6}, R^{b7}, R^{b8}, R^{b9}, R^{b10}, R^{b11}, R^{b12}, and R^{b13} contains a polymerizable group as a substituent.

Examples of the polymerizable group include the polymerizable groups described in the section of Formula (B1), and the preferable range is also identical.

In addition, the polymerizable group may be bonded to the group represented by R^{b4}, R^{b5}, R^{b6}, R^{b7}, R^{b8}, R^{b9}, R^{b10}, R^{b11}, R^{b12}, and R^{b13} directly or through a linking group. Examples of the linking group include linking groups to which the polymerizable groups described in the section of Formula (B1) may be bonded, and the preferable range is also identical.

The number of the polymerizable groups included in the compound represented by Formula (B2) is preferably in a range of 1 to 4, and more preferably in a range of 1 or 2. When the number of the polymerizable groups is 1 or 2, the molecular weight per polymerizable group increases compared with a case in which the number of the polymerizable groups is greater than 1 or 2, and the sensitizing effect to dimethyl maleimide represented by Formula (A) is more significant, which is preferable.

In the compound represented by Formula (B2), in a case in which at least two selected from R^{b4}, R^{b5}, R^{b6}, R^{b7}, R^{b8}, R^{b9}, R^{b10}, R^{b11}, R^{b12}, and R^{b13} are bonded to each other so as to form a ring, and -S- is interposed in the formed ring, the location of the polymerizable group is preferably R^{b5} or R^{b9} from the viewpoint of a short distance from a radical being generated and a high reactivity, and it is particularly preferable that the polymerizable groups be present at both R^{b5} and R^{b9}.

In addition, in a case in which at least two selected from R^{b4}, R^{b5}, R^{b6}, R^{b7}, R^{b8}, R^{b9}, R^{b10}, R^{b11}, R^{b12}, and R^{b13} are not bonded to each other to form a ring, the polymerizable groups are preferably present at R^{b5}, R^{b6}, R^{b7}, R^{b9}, R^{b10}, and R^{b11}. In addition, in a case in which the polymerizable groups are present at R^{b4}, R^{b8}, R^{b12}, and R^{b13}, the polymerizable group is preferably bonded to a phenyl group with a gap of one atom or more therebetween from the viewpoint of the reactivity with a radical generated.

Specific examples of the compound represented by Formula (B2) which can be used in the present invention include the following compounds.

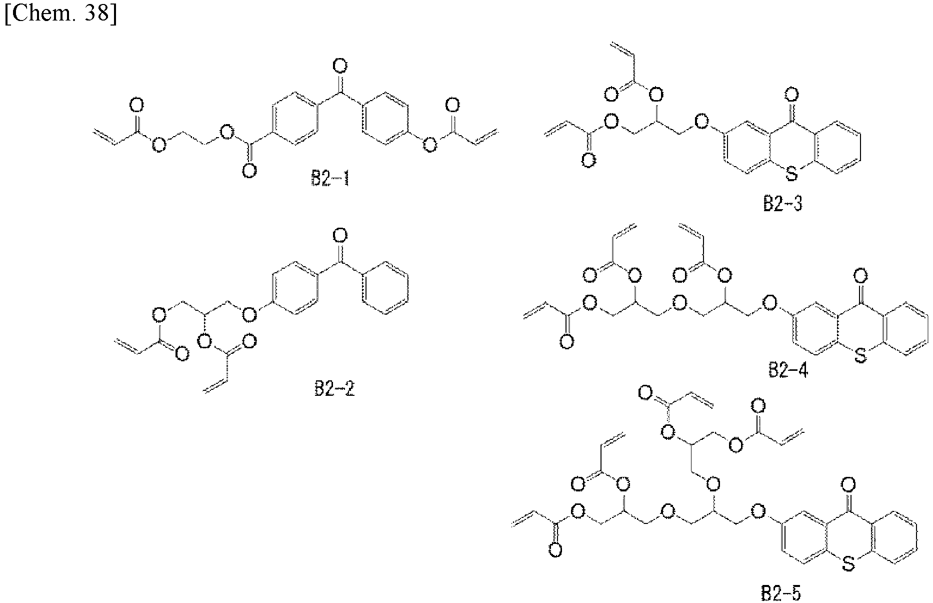

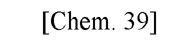

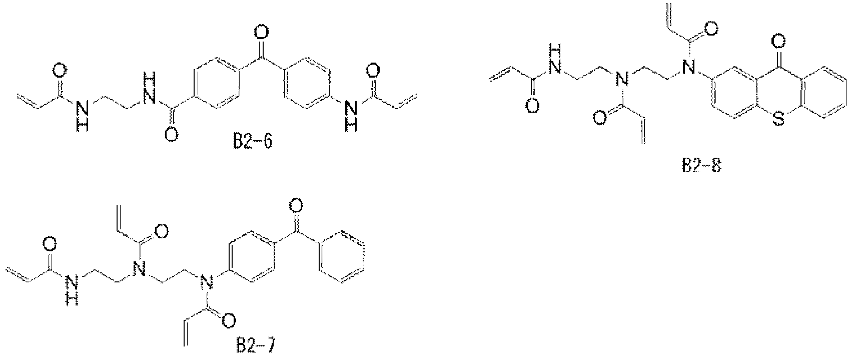

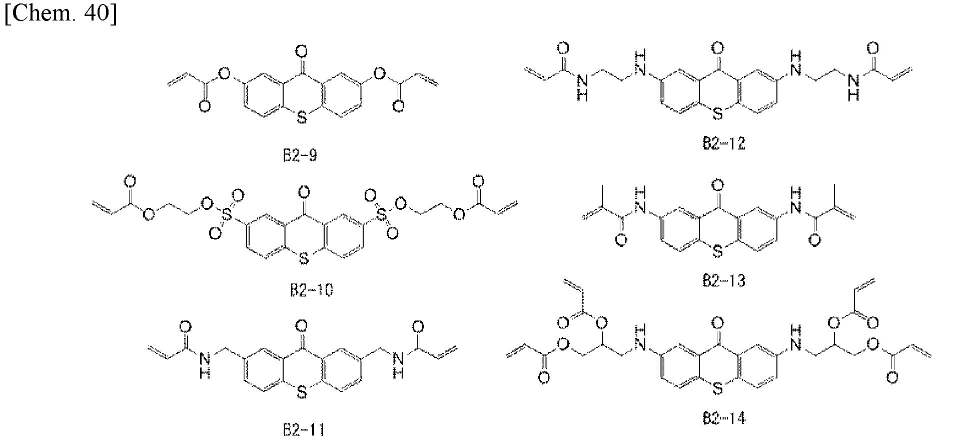

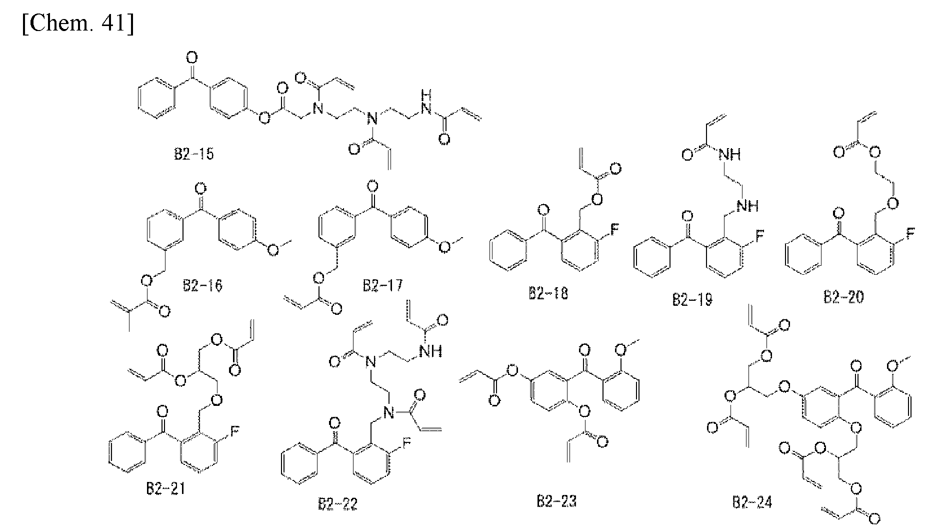

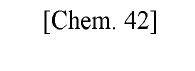

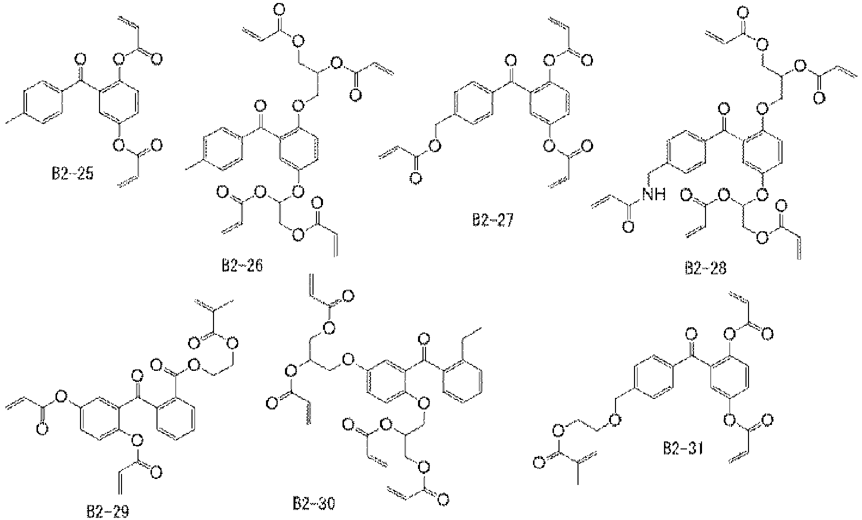

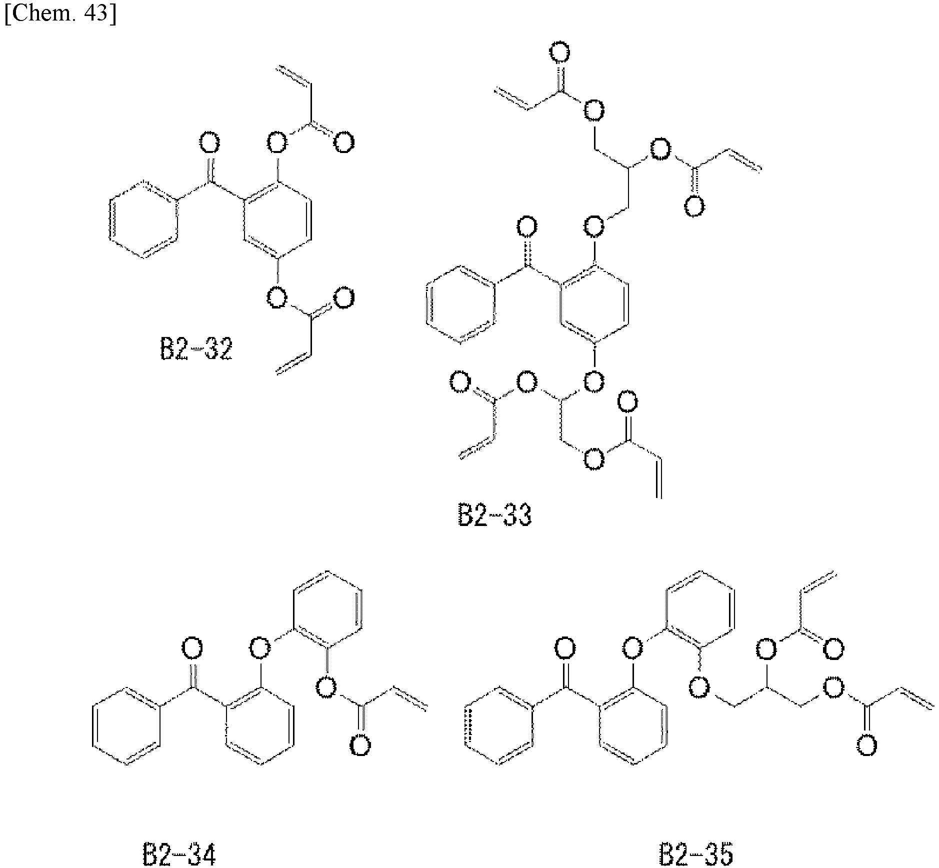

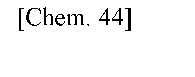

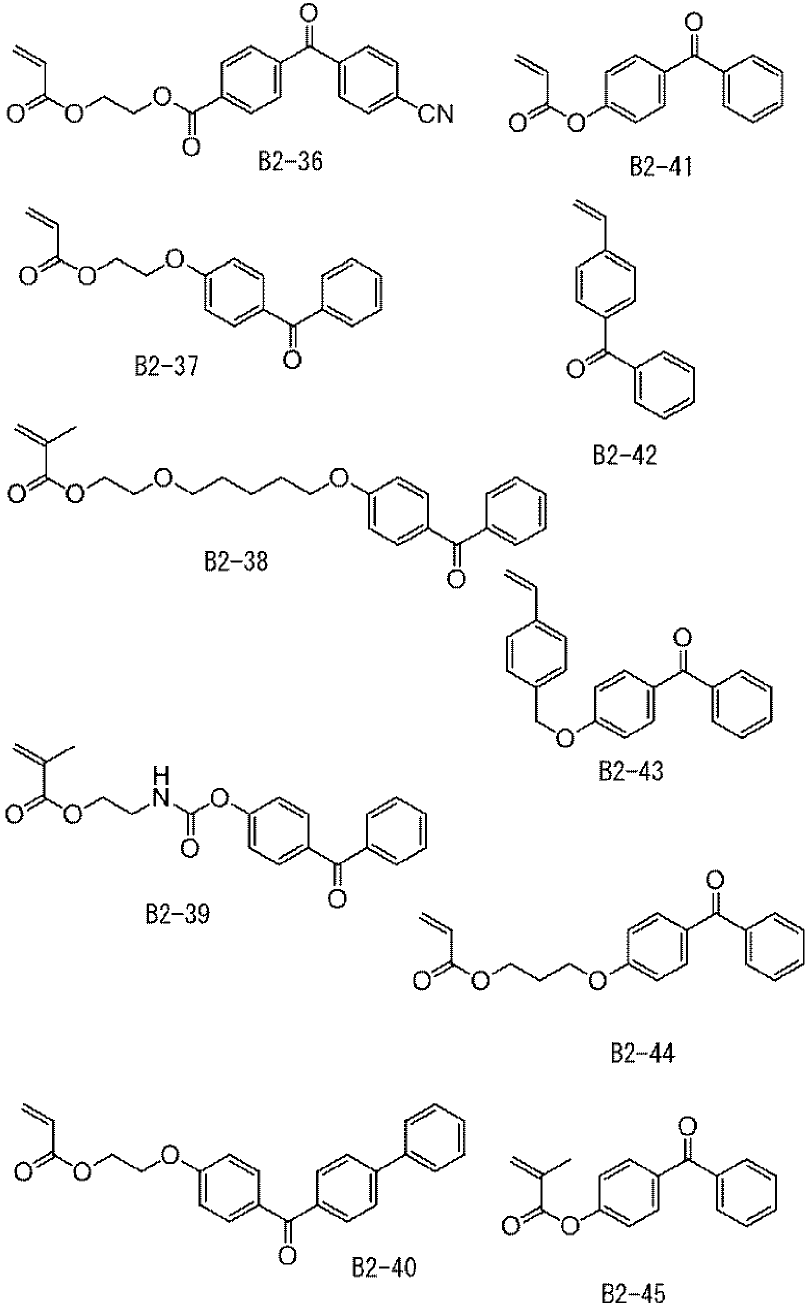

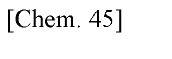

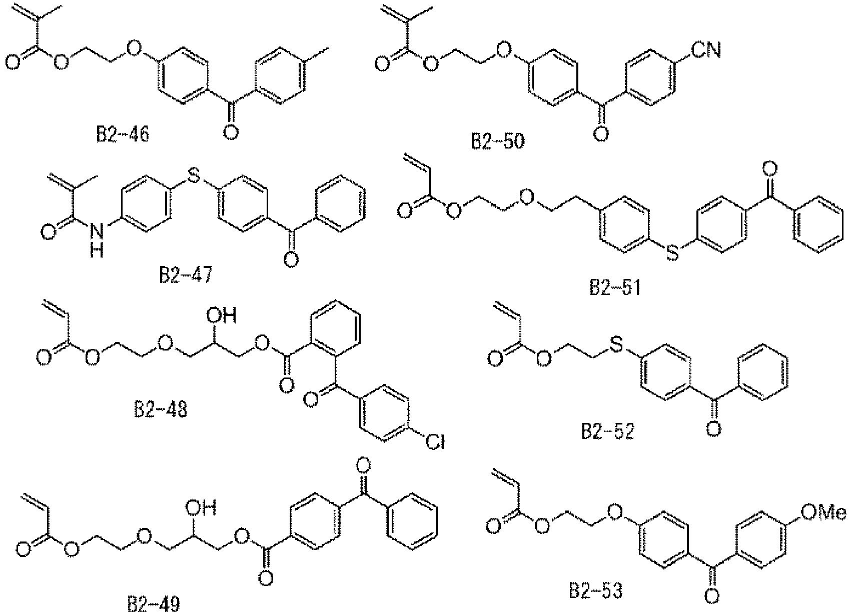

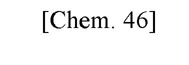

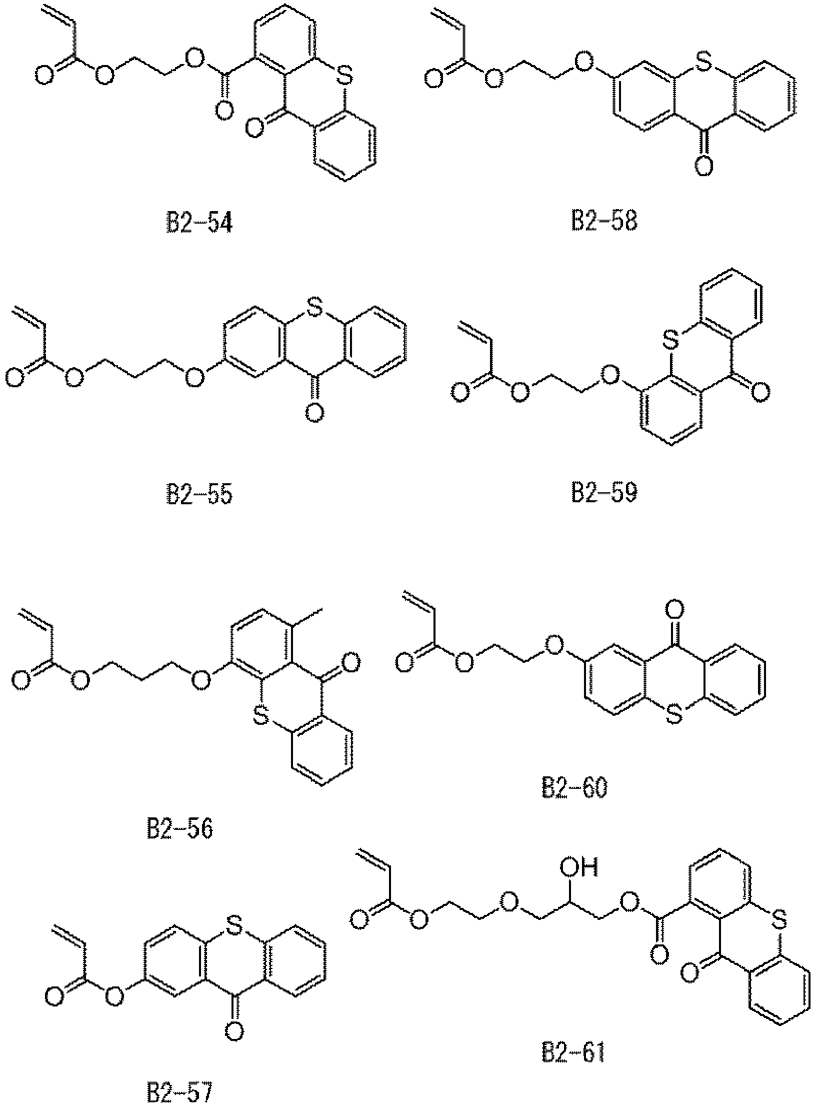

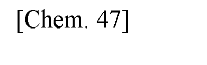

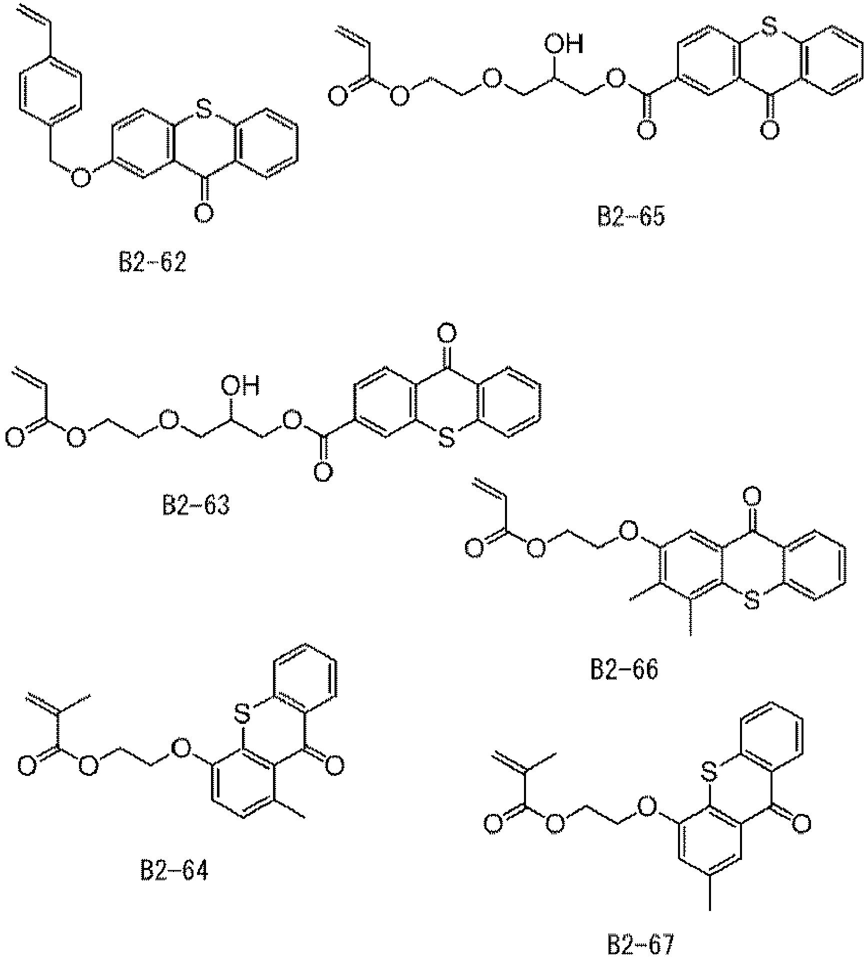

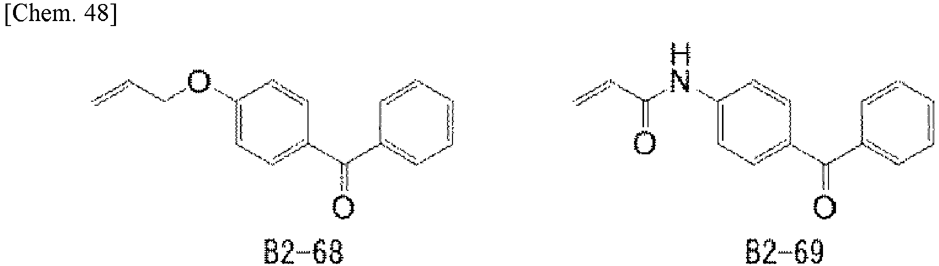

In addition, Exemplary Compounds A to H described below can also be included in the preferable examples of a monomer represented by Formula (B2). The compounds will be described together with the synthesis scheme.

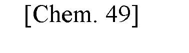

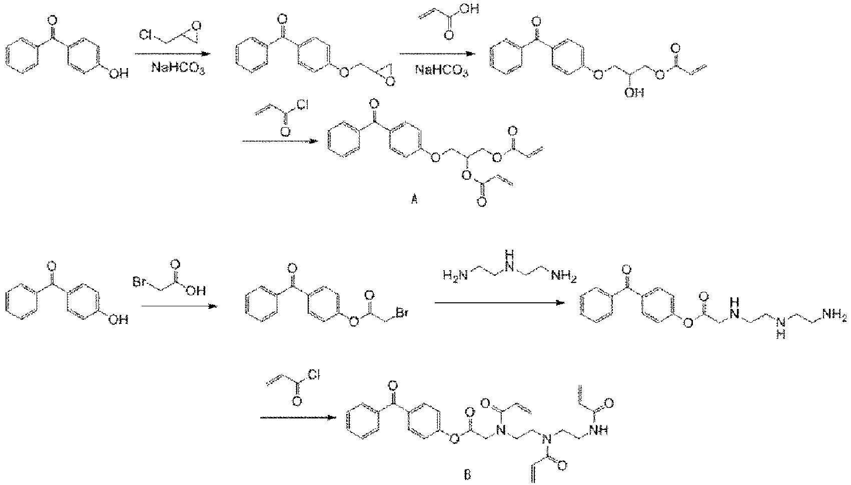

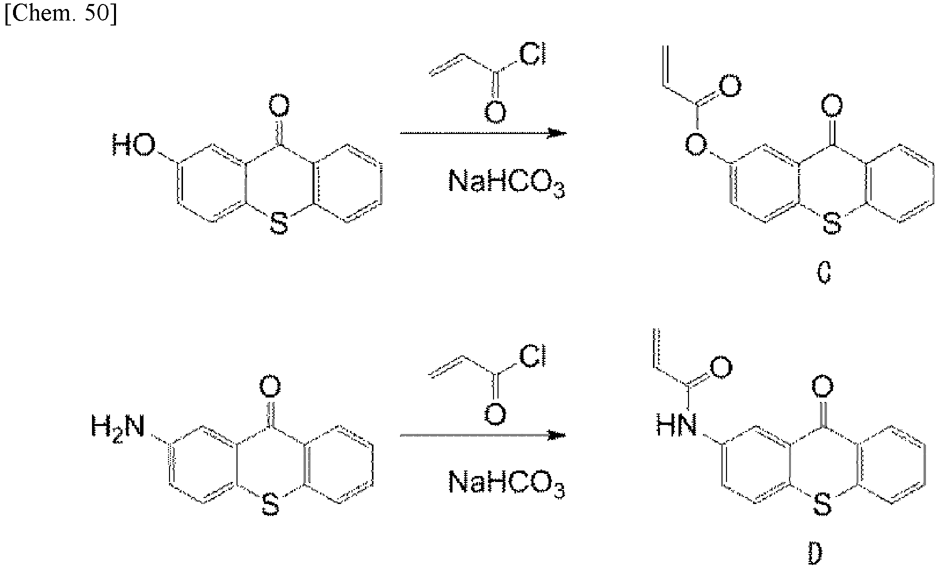

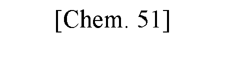

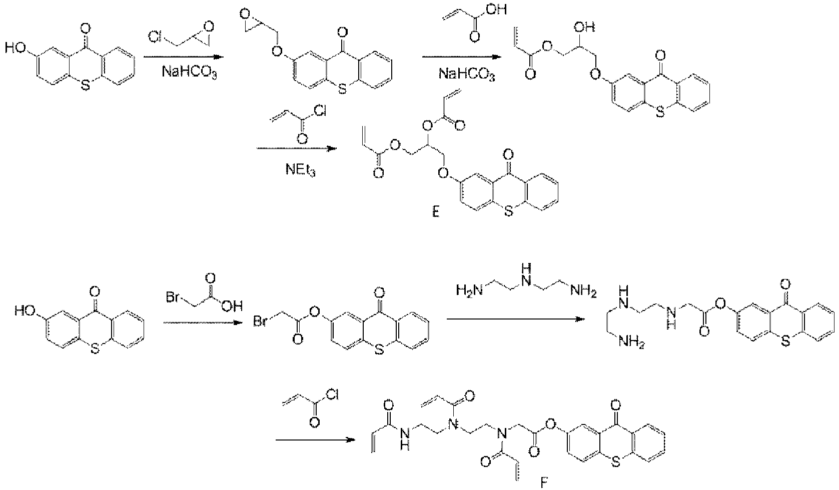

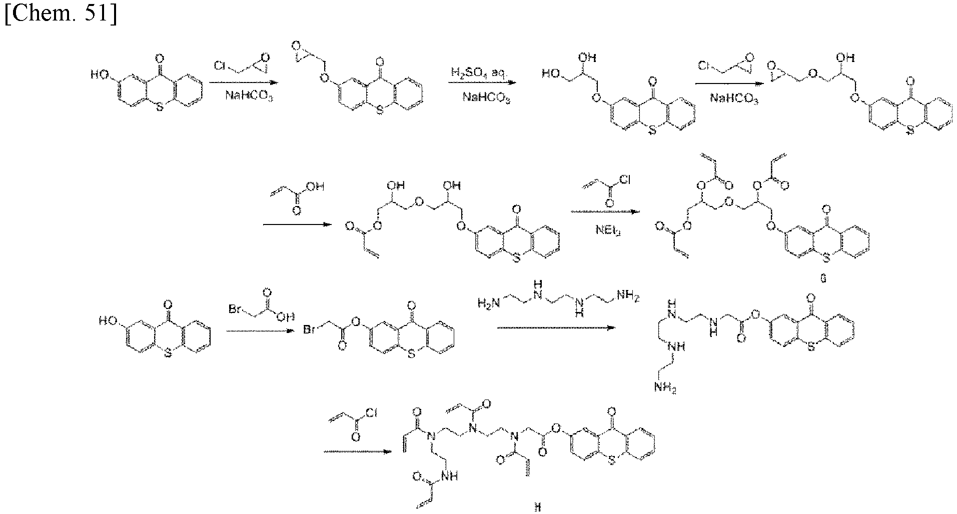

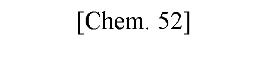

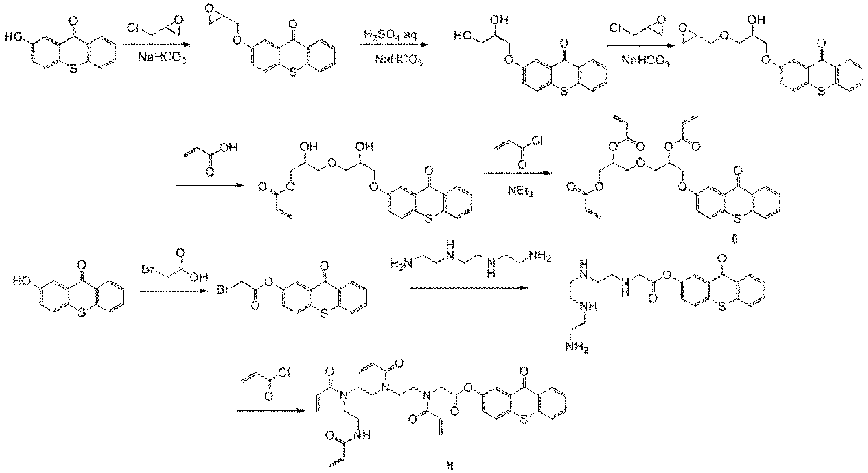

In a case in which the ink composition of the present invention includes water, (Component a) and/or (Component b) desirably have a water-soluble group.

In a case in which (Component b) includes a water-soluble group, (Component b) is preferably water-soluble or water-dispersible, and 1 g of (Component b) can be preferably dissolved or dispersed in less than 30 ml of water, more preferably dissolved or dispersed in less than 20 ml of water, and particularly preferably dissolved or dispersed in less than 10 ml of water.

(Component b) of the present invention preferably has a water-soluble group, and there is no limitation regarding the water-soluble group in (Component b) as long as the group is capable of making the compound of (Component b) water-soluble or water-dispersible. Examples of the water-soluble group that may be included in (Component b) include the same water-soluble groups that may be included in (Component a), including those in the preferable range.

The content of (Component b) in the ink composition is preferably in a range of 0.1 mass% to 20 mass%, more preferably in a range of 0.1 mass% to 15 mass%, and still more preferably in a range of 0.5 mass% to 10 mass%.

### <Color material (Component c)>

The ink composition of the present invention includes the color material (Component c).

There is no particular limitation regarding the color material that can be used in the present invention, and it is possible to select and use a color material from well-known color materials such as pigments, water-soluble dyes, and disperse dyes. Among them, the ink composition more preferably includes a pigment as the color material from the standpoint of excellent weather resistance and rich color reproducibility.

### (Pigment)

The pigment is not particularly limited, and can be appropriately selected depending on the purposes. Examples thereof include well-known organic dyes, inorganic dyes, and the like, and also include resin particles dyed with a pigment, a commercially available pigment dispersion, or a surface-treated pigment (for example, a pigment dispersion obtained by dispersing a pigment in water, a liquid-form organic compound, an insoluble resin, or the like as a dispersion medium, or a pigment having a pigment surface treated with a resin, a resin derivative, or the like). Meanwhile, examples of the pigment include pigments described in "Dictionary of Pigments" by Seishiro Ito (2000, published by Asakura Publishing Co., Ltd.), "Organic Pigments Handbook" by Isao Hashimoto (2006, published by Color Office Co., Ltd.), "Industrial Organic Pigments" by W. Herbst and K. Hunger (1992, published by John Wiley & Sons, Inc.,), JP2002-12607A, JP2002-188025A, JP2003-26978A, JP2003-342503, and JP2009-235370A.

Examples of the organic pigment and the inorganic pigment include a yellow pigment, a red pigment, a magenta pigment, a blue pigment, a cyan pigment, a green pigment, an orange pigment, a violet pigment, a brown pigment, a black pigment, a white pigment, and the like.

Preferable examples of the yellow pigment include monoazo pigments such as C.I. Pigment Yellow 1, 2, 3, 4, 5, 10, 65, 73, 74, 75, 97, 98, 111, 116, 130, 167, and 205, monoazo lake pigments such as C.I. Pigment Yellow 61, 62, 100, 168, 169, 183, 191, 206, 209, and 212, disazo pigments such as C.I. Pigment Yellow 12, 13, 14, 16, 17, 55, 63, 77, 81, 83, 106, 124, 126, 127, 152, 155, 170, 172, 174, 176, 214, and 219, anthraquinone pigments such as C.I. Pigment Yellow 24, 99, 108, 193, and 199, mono azo pyrazolone pigments such as C.I. Pigment Yellow 60, condensed azo pigments such as C.I. Pigment Yellow 93, 95, 128, and 166, isoindoline pigments such as C.I. Pigment Yellow 109, 110, 139, 173, and 185, benzimidazolone pigments such as C.I. Pigment Yellow 120, 151, 154, 175, 180, 181, and 194, azomethine metal complex pigments such as C.I. Pigment Yellow 117, 129, 150, and 153, quinoxaline pigment such as C.I. Pigment Yellow 138, and quinoxaline pigments such as C.I. Pigment Yellow 213.

Preferable examples of the red or magenta pigment include monoazo lake pigments such as C.I. Pigment Red 193, disazo pigments such as C.I. Pigment Red 38, naphthol AS pigments such as C.I. Pigment Red 2, 5, 8, 9, 10, 11, 12, 14, 15, 16, 17, 18, 22, 23, 31, 32, 112, 114, 146, 147, 150, 170, 184, 187, 188, 210, 213, 238, 245, 253, 256, 258, 266, 268, and 269, β-naphthol pigments such as C.I. Pigment Red 3, 4, and 6, β-naphthol lake pigments such as C.I. Pigment Red 49, 53, and 68, naphthol AS lake pigments such as C.I. Pigment Red 237, 239, and 247, pyrazolone pigments such as C.I. Pigment Red 41, BONA lake pigments such as C.I. Pigment Red 48, 52, 57, 58, 63, 64:1, and 200, xanthene lake pigments such as C.I. Pigment Red 81:1, 169, and 172, thioindigo pigments such as C.I. Pigment Red 88, 181, and 279, perylene pigments such as C.I. Pigment Red 123, 149, 178, 179, 190, and 224, condensed azo pigments such as C.I. Pigment Red 144, 166, 214, 220, 221, 242, and 262, anthraquinone pigments such as C.I. Pigment Red 168, 177, 182, 226, and 263, anthraquinone lake pigments such as C.I. Pigment Red 83, benzimidazolone pigments such as C.I. Pigment Red 171, 175, 176, 185, and 208, quinacridone pigments such as C.I. Pigment Red 122, 202 (including a mixture with C.I. Pigment Violet 19), 207, and 209, diketopyrrolopyrrole pigments such as C.I. Pigment Red 254, 255, 264, 270, and 272, and azomethine metal complex pigments such as C.I. Pigment Red 257 and 271.

Preferable examples of the blue or cyan pigment include naphthol AS pigments such as C.I. Pigment Blue 25 and 26, phthalocyanine pigments such as C.I. Pigment Blue 15, 15:1, 15:2, 15:3, 15:4, 15:6, 16, 17:1, 75, and 79, dyeing lake pigments such as C.I. Pigment Blue 1, 24:1, 56, 61, and 62, anthraquinone-based pigments such as C.I. Pigment Blue 60, indigo pigments such as C.I. Pigment Blue 63, and dioxazine pigments such as C.I. Pigment Blue 80.

Preferable examples of the green pigment include dyeing lake pigments such as C.I. Pigment Green 1 and 4, phthalocyanine pigments such as C.I. Pigment Green 7 and 36, and azomethine metal complex pigments such as C.I. Pigment Green 8.

Preferable examples of the orange pigment include monoazo pigments such as C.I. Pigment Orange 1, β-naphthol pigments such as C.I. Pigment Orange 2, 3, and 5, naphthol AS pigments such as C.I. Pigment Orange 4, 24, 38, and 74, pyrazolone pigments such as C.I. Pigment Orange 13 and 34, benzimidazolone pigments such as C.I. Pigment Orange 36, 60, 62, 64, and 72, disazo pigments such as C.I. Pigment Orange 15 and 16, β-naphthol lake pigments such as C.I. Pigment Orange 17 and 46, naphthalene sulfonic acid lake pigments such as C.I. Pigment Orange 19, perinone pigments such as C.I. Pigment Orange 43, quinacridone pigments such as C.I. Pigment Orange 48 and 49, anthraquinone pigments such as C.I. Pigment Orange 51, isoindolinone pigments such as C.I. Pigment Orange 61, isoindoline-based pigments such as C.I. Pigment Orange 66, azomethine metal complex pigments such as C.I. Pigment Orange 68, and diketopyrrolopyrrole pigments such as C.I. Pigment Orange 71, 73, and 81.

Preferable examples of the brown pigment include BONA lake pigments such as C.I. Pigment Brown 5, condensed azo pigments such as C.I. Pigment Brown 23, 41, and 42, and benzimidazolone pigments such as C.I. Pigment Brown 25 and 32.

Preferable examples of the violet pigment include dyeing lake pigments such as C.I. Pigment Violet 1, 2, 3, and 27, naphthol AS pigments such as C.I. Pigment Violet 13, 17, 25, and 50, anthraquinone lake pigments such as C.I. Pigment Violet 5:1, quinacridone pigments such as C.I. Pigment Violet 19, dioxazine pigments such as C.I. Pigment Violet 23 and 37, perylene pigments such as C.I. Pigment Violet 29, benzimidazolone pigments such as C.I. Pigment Violet 32, and thioindigo pigments such as C.I. Pigment Violet 38.

Preferable examples of the black pigment include indadine pigments such as C.I. Pigment Black 1, carbon black that is C.I. Pigment Black 7, graphite that is C.I. Pigment Black 10, magnetite that is C.I. Pigment Black 11, anthraquinone pigments that are C.I. Pigment Black 20 and the like, and perylene pigments that are C.I. Pigment Black 31, 32, and the like.

Preferable examples of the white pigment include zinc oxide that is C.I. Pigment White 4, titanium oxide that is C.I. Pigment White 6, zinc sulfide that is C.I. Pigment White 7, zirconium oxide (zirconium white) that is C.I. Pigment White 12, calcium carbonate that is C.I. Pigment White 18, aluminum oxide-silicon oxide (Kaolin clay) that is C.I. Pigment White 19, barium sulfide that is C.I. Pigment White 21 or 22, aluminum hydroxide (alumina white) that is C.I. Pigment White 23, silicon oxide that is C.I. Pigment White 27, and calcium silicate that is C.I. Pigment White 28.

Inorganic particles used in the white pigment may be from a single body, or may be composite particles with an oxide of silicon, aluminum, zirconium, titanium, or the like, an organic metal compound, or an organic compound.

Among them, titanium oxide is preferably used since titanium oxide has a small specific gravity, a high refractive index, a great hiding power or coloring power, and excellent durability against an acid, an alkali, and other environments compared with other white pigments. Meanwhile, in addition to titanium oxide, other white pigments (which may be white pigments other than the above-described white pigments) may be jointly used.

The pigment, the dispersant, the selection of a medium, the dispersion conditions, and the filtration conditions are preferably set so that the volume-average particle diameter of the pigment particles is preferably in a range of 0.005 µm to 0.5 µm, more preferably in a range of 0.01 µm to 0.45 µm, and still more preferably in a range of 0.015 µm to 0.4 µm. When the average particle diameter is within the above-described range, it is possible to further improve the effects of the present invention.

Meanwhile, in the present invention, the average particle diameter and particle size distribution of the particles are obtained by measuring the volume-average particle diameters using a commercially available particle diameter measuring apparatus such as a nano-track particle size distribution measuring machine UPA-EX150 (manufactured by Nikkiso Co., Ltd.) and a dynamic light scattering method.

### (Water-soluble dye)

Examples of the water-soluble dye that can be used in the present invention include acid dyes and direct dyes. The acid dyes and the direct dyes have a structure including an acid group as a solubilizing group. Examples of the acidic group include sulfonic acid groups, salts thereof, carboxylic acid groups, salts thereof, phosphoric acid groups, and salts thereof. The number of the acidic groups may be singular or plural, and the acidic groups may be combined together. Examples of the chemical structure of a chromophore contained in the water-soluble dye include an azo-based chemical structure, a phthalocyanine-based chemical structure, a triphenylmethane-based chemical structure, a xanthene-based chemical structure, a pyrazolone-based chemical structure, a nitro-based chemical structure, a stilbene-based chemical structure, a quinoline-based chemical structure, a methine-based chemical structure, a thiazole-based chemical structure, a quinoneimine-based chemical structure, an indigoid-based chemical structure, a rhodamine-based chemical structure, and an anthraquinone-based chemical structure.

While not limited to the following, specific examples of the preferable oil-soluble dye include C.I. Acid Yellow 19, C.I. Acid Red 37, C.I. Acid Blue 62, C.I. Acid Orange 10, C.I. Acid Blue 83, C.I. Acid Black 01, C.I. Direct Yellow 44, C.I. Direct Yellow 142, C.I. Direct Yellow 12, C.I. Direct Blue 15, C.I. Direct Blue 25, C.I. Direct Blue 249, C.I. Direct Red 81, C.I. Direct Red 9, C.I. Direct Red 31, C.I. Direct Black 154, C.I. Direct Black 17, and the like.

### (Disperse dye)

In addition, in the present invention, it is also possible to use a disperse dye.

Preferable specific examples of the disperse dye include C.I. Dispense Yellow 5, 42, 54, 64, 79, 82, 83, 93, 99, 100, 119, 122, 124, 126, 160, 184:1, 186, 198, 199, 201, 204, 224, and 237; C.I. Disperse Orange 13, 29, 31:1, 33, 49, 54, 55, 66, 73, 118, 119, and 163, C.I. dispense Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C.I. Dispense Violet 33; C.I. Dispense Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C.I. Dispense Green 6:1, 9, and the like.

The color material that can be used in the present invention may be singly used, or two or more color materials may be jointly used.

The content of the color material (Component c) in the ink composition can be appropriately selected depending on the properties (specific gravity, coloring power, shade, and the like) of the color material and conditions for the combining of the ink composition and a certain color to produce a printed material, and is preferably in a range of 0.1 mass% to 30 mass%, and more preferably in a range of 0.5 mass% to 20 mass% with respect to the total mass of the ink composition.

### (Dispersant)

In a case in which a pigment is used as the color material, a pigment dispersant may be used as necessary when pigment particles are prepared, and examples of the pigment dispersant that can be used include activators such as higher fatty acid salts, alkyl sulfates, alkyl ester sulfates, alkyl sulfonates, sulfosuccinate salts, naphthalenesulfonic acid salts, alkyl phosphates, polyoxyalkylene alkyl ether phosphate, polyoxyalkylene alkyl phenyl ethers, polyoxyethylene polyoxypropylene glycol, glycerin ester, sorbitan ester, polyoxyethylene fatty acid amides, and amine oxide, block copolymers formed of two or more monomers selected from styrene, styrene derivatives, vinyl naphthalene derivatives, acrylic acid, acrylic acid derivatives, maleic acid, maleic acid derivatives, itaconic acid, itaconic acid derivatives, fumaric acid, and fumaric acid derivatives, random copolymers, and salts thereof.

In addition, in the ink composition of the present invention, it is also possible to use a self-dispersing pigment. The self-dispersing pigment mentioned in the present invention refers to a pigment that can be dispersed without a dispersant, and is particularly preferably a pigment particle having a polar group on the surface.

The pigment particle having a polar group on the surface mentioned in the present invention refers to a particle of a pigment in which the surface of the pigment particle is directly modified by a polar group or a pigment in which a polar group is bonded to an organic substance having an organic pigment parent nucleus directly or through a joint (hereinafter, referred to as a pigment derivative).

Examples of the polar group include a sulfonic acid group, a carboxylic acid group, a phosphoric acid group, a boric acid group, and a hydroxyl group, and the polar group is preferably a sulfonic acid group or a carboxylic acid group, and more preferably a sulfonic acid group.

Examples of a method for obtaining the pigment particles having a polar group on the surface include methods described in WO97/48769A, JP1998-110129A (JP-H10-110129A), JP1999-246807A (JP-H11-246807A), JP1998-57458A (JP-H11-57458A), JP1998-189739A (JP-H11-189739A), JP1998-323232A (JP-H11-323232A), and JP2000-265094A in which the surfaces of pigment particles are oxidized using an appropriate oxidant, thereby introducing a polar group called a sulfonic acid group or a salt thereof into at least a part of the pigment surface. Specifically, the pigment particles can be prepared by oxidizing carbon black using concentrated nitric acid, or, in the case of a color pigment, by oxidizing carbon black using sulfamic acid, sulfonated pyridine salt, amidosulfuric acid, or the like in sulfolane or N-methyl-2-pyrrolidone. When oxidization excessively proceeds in the reaction, and substances that have turned to be water-soluble are removed and purified, a pigment dispersion can be obtained. In addition, in a case in which a sulfonic acid group is introduced into the surface through oxidization, the acidic group may be neutralized as necessary using a basic compound.

Additional examples of a method for obtaining the pigment particles having a polar group on the surface include methods described in JP1999-49974A (JP-H11-49974A), JP2000-273383A, JP2000-303014A, and the like in which a pigment derivative is adsorbed to the surface of a pigment particle through a treatment such as milling, methods described in JP2002-179977A and JP2002-201401A in which a pigment is dissolved in a solvent together with a pigment derivative, and then is crystallized in a poor solvent, and the like, and the pigment particles having a polar group on the surface can be easily obtained using any of the above-described methods.

The polar group on the pigment surface may be in a free state or a salt state, or may have a counter salt. Examples of the counter salt include inorganic salts (lithium, sodium, potassium, magnesium, calcium, aluminum, nickel, and ammonium) and organic salts (triethyl ammonium, diethyl ammonium, pyridinium, triethanol ammonium, and the like), and the counter salt is preferably a monovalent counter salt.

As a method for dispersing the pigment, a variety of dispersers such as a ball mill, a sand mill, an attritor, a roll mill, an agitator, a Henschel mixer, a colloid mill, an ultrasonic homogenizer, a pearl mill, a wet jet mill, and a paint shaker can be used. In addition, it is also preferable to use a centrifugal separator or a filter to remove coarse particles in the pigment dispersion.

Regarding the preferable amount of the dispersant added to the ink composition, in a case in which the mass of the pigment in the ink composition is represented by P, and the mass of the dispersant in the ink composition is represented by D, the mass ratio (D/P) thereof is preferably 0.01≤D/P≤2.0, more preferably 0.03≤D/P≤1.5, and still more preferably 0.05≤D/P≤0.6.

Furthermore, when the pigment is dispersed, it is also preferable to add, in addition to the dispersant, a dispersion aid generally called a synergist (for example, SOLSPERSE series 5000, 12000, and 22000 that are commercially available products from Lubrizol Corporation, EFKA6745 that is a commercially available product from BASF Japan Ltd.) or a variety of surfactants and defoamers, thereby improving the dispersibility and wettability of the pigment.

In the present invention, in a case in which the pigment is dispersed, it is preferable to mix the pigment and the dispersant, and then disperse the pigment by adding a polar organic solvent or to mix a polar organic solvent and the dispersant, then, add the pigment to the mixture, and disperse the pigment. For the dispersion, it is possible to use, for example, a variety of dispersers such as a ball mill, a bead mill, a sand mill, a salt mil, an attritor, a roll mill, an agitator, a Henschel mixer, a colloid mill, an ultrasonic homogenizer, a pearl mill, a wet jet mill, and a paint shaker. Among the above-described dispersers, the bead mill disperser is preferable due to its excellent dispersibility.

When beads having a volume-average diameter preferably in a range of 0.01 mm to 3.0 mm, more preferably in a range of 0.05 mm to 1.5 mm, and still more preferably in a range of 0.1 mm to 1.0 mm are used as the beads used when the pigment is dispersed using the bead mill, it is possible to obtain a pigment dispersion having excellent stability.

### <Other additives>

In the ink composition of the present invention, it is possible to jointly use well-known additives in addition to the essential components of (Component a) to (Component c) as long as the effects of the present invention are not impaired. Hereinafter, additives that can be used in the ink composition will be described.

### (Water (Component d))

The ink composition of the present invention preferably includes water.

It is preferable to use ion-exchange water containing no impurities, distilled water, or the like as the water.

The content of the water in the ink composition of the present invention is preferably in a range of 10 mass% to 97 mass%, more preferably in a range of 30 mass% to 95 mass%, and still more preferably in a range of 35 mass% to 93 mass%.

### (Organic solvent (Component e))

In the ink composition of the present invention, depending on the purposes, it is preferable to jointly use, additionally, an organic solvent.

The organic solvent mentioned herein refers to an organic solvent having a solubility of 10 mass% or more in water at 25°C.

Examples of the organic solvent that can be used in the present invention include the following solvents.

· Alcohols (for example, methanol, ethanol, propanol, isopropanol, butanol, isobutanol, secondary butanol, tertiary butanol, pentanol, hexanol, cyclohexanol, benzyl alcohol, and the like),
- Multivalent alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexane triol, thiodiglycol, and 2-methylpropanediol)
- Multivalent alcohol esters (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monomethyl ether, and propylene glycol monomethyl ether),
- Amines (for example, ethanolamine, diethanolamine, triethanolamine, N-methyldiethanolamine, N-ethyl diethanolamine, morpholine, N-ethyl morpholine, ethylenediamine, diethylenediamine, triethylenetetramine, tetraethylenepentamine, polyethyleneimine, pentamethyl diethylenetriamine, and tetramethylpropylenediamine),
- Amides (for example, formamide, N,N-dimethylformamide, and N,N-dimethylacetamide),
- Heterocycles (for example, 2-pyrrolidone, N-methyl-2-pyrrolidone, cyclohexyl pyrrolidone, 2-oxazolidone, 1,3-dimethyl-2- imidazolidinone, γ-butyrolactone, and propioncarbonate),
- Sulfoxides (for example, dimethyl sulfoxide),
- Slufones (for example, sulfolane)
- Others (urea, acetonitrile, acetone, and the like)

Examples of the preferable organic solvent include multivalent alcohol ethers and heterocycles, and it is preferable to jointly use both organic solvents. The multivalent alcohol ethers are preferably so-called glycol ethers, and specific examples of the preferable multivalent alcohol ethers include tripropylene glycol monomethyl ether, dipropylene glycol monomethyl ether, and dipropylene glycol dimethyl ether. The heterocycles are preferably 2-pyrrolidone, γ-butyrolactone, and the like and particularly preferably 2-pyrrolidone. In particular, an organic solvent having a high boiling point can be preferably used from the viewpoint of improving the ejection properties, and the boiling point at normal pressure is preferably 120°C or higher, and more preferably 150°C or higher.

The organic solvent may be used singly, or plural organic solvents may be used. The amount of the organic solvent added to the ink composition is in a range of 1 mass% to 60 mass%, and preferably in a range of 2 mass% to 35 mass% by the total amount.

The present invention preferably includes (Component d) and (Component e) in addition to (Component a), (Component b), and (Component c), and the contents of the respective components in the ink composition are preferably in a range of 1 mass% to 50 mass% (for Component a), 0.1 mass% to 20 mass% (for Component b), 0.1 mass% to 30 mass% (for Component c), 10 mass% to 97 mass% (for Component d), and 1 mass% to 60 mass% (for Component e), more preferably in a range of 2 mass% to 35 mass% (for Component a), 0.1 mass% to 15 mass% (for Component b), 0.5 mass% to 20 mass% (for Component c), 30 mass% to 95 mass% (for Component d), and 2 mass% to 35 mass% (for Component e), and particularly preferably in a range of 3 mass% to 30 mass% (for Component a), 0.5 mass% to 10 mass% (for Component b), 0.5 mass% to 20 mass% (for Component c), 35 mass% to 93 mass% (for Component d), and 2 mass% to 35 mass% (for Component e).

In a case in which the present invention includes (Component d) and (Component e), the content ratio (by mass) between (Component d) and (Component e) is preferably in a range of 1:0.05 to 1:10 ((Component d):(Component e)), more preferably in a range of 1:0.1 to 1:5, and still more preferably in a range of 1:0.2 to 1:2, and most preferably in a range of 1:0.2 to 1:1.

### (Surfactant)

A surfactant can be added to the ink composition of the present invention. Examples of a preferably used surfactant include anionic surfactants such as dialkyl sulfosuccinate salts, alkyl naphthalene sulfonic acid salts, and fatty acid salts, nonionic surfactants such as polyoxyethylene alkyl ethers, polyoxyethylene alkyl allyl ethers, acetylene glycols, and polyoxyethylene-polyoxypropylene block copolymers, and cationic surfactant such as alkyl amine salts and quaternary ammonium salts. Particularly, the anionic surfactant and the nonionic surfactant can be preferably used.

In addition, in the present invention, it is also possible to use a polymer surfactant, and examples of the polymer surfactant that is preferable from the viewpoint of discharging stability include the following water-soluble resins. That is, examples thereof include styrene-acrylic acid-acrylic acid alkyl ester copolymers, styrene-acrylic acid copolymers, styrene-maleic acid-acrylic acid alkyl ester copolymers, styrene-maleic acid copolymers, styrene-methacrylic acid-acrylic acid alkyl ester copolymers, styrene-methacrylic acid-acrylic acid alkyl ester copolymers, styrene-methacrylic acid copolymers, styrene-maleic acid half ester copolymers, vinyl naphthalene-acrylic acid copolymers, and vinyl naphthalene-maleic acid copolymers, and the like.

### (Latex)

A latex that is different from (Component a) can be added to the ink composition of the present invention. Examples of the latex that can be used in the present invention include styrene-butadiene copolymers, polystyrene, acrylonitrile-butadiene copolymers, acrylate copolymers, polyurethanes, silicon-acrylic copolymers, acrylic-modified fluorine resins, and the like. The latex may be a latex in which polymer particles are dispersed using an emulsifier, or a so-called soap-free latex in which polymer particles are dispersed without using an emulsifier. A surfactant is frequently used as the emulsifier, but it is also preferable to use a polymer having a group that is soluble in water such as a sulfonic acid group, a carboxylic acid group, or the like (for example, a polymer in which solubilizing groups are graft-bonded, a polymer obtained from a monomer having a solubilizing group and a monomer having an insoluble portion).

The volume-average particle diameter of polymer particles in the latex that is used in the ink composition of the present invention is preferably in a range of 10 nm to 300 nm, and more preferably in a range of 10 nm to 100 nm. The average particle diameter of the polymer particles in the latex can be obtained using a commercially available particle diameter measurement device for which a light scattering method, an electrophoretic method, or a laser Doppler method is used.

In a case in which the latex is used in the ink composition of the present invention, the latex is preferably added so that the addition amount falls into a range of 0.1 mass% to 20 mass% in terms of the addition amount of the solid content, and it is particularly preferable to set the addition amount of the solid content in a range of 0.5 mass% to 10 mass%.

### (Aqueous polymer)

An aqueous polymer that is different from (Component a) can be added to the ink composition of the present invention.

Preferable examples of the aqueous polymer include natural macromolecules, and specific examples thereof include proteins such as glue, gelatin, casein, and albumin, natural gums such as gum arabic or gum traganth, glucosides such as saponin, alginic acid or derivatives such as propylene glycol ester alginate, triethanolamine alginate, and ammonium alginate, and cellulose derivatives such as methyl cellulose, carboxymethyl cellulose, hydroxyethyl cellulose, and ethyl hydroxy cellulose.

Additional preferable examples of the aqueous polymer include synthetic macromolecules, and examples thereof include polyvinyl alcohols, polyvinyl pyrrolidones, acrylic resins such as polyacrylic acid, acrylic acid-acrylonitrile copolymers, potassium acrylate-acrylonitrile copolymers, vinyl acetate-acrylic ester copolymers, and acrylic acid-acrylic acid ester copolymers, styrene acrylate resins such as styrene-acrylic acid copolymers, styrene-methacrylic acid copolymers, styrene-methacrylic acid-acrylic acid ester copolymers, styrene-α-methylstyrene-acrylic acid-acrylic acid copolymers, and styrene-α-methylstyrene-acrylic ester copolymers, vinyl acetate-based copolymers such as styrene-maleic acid copolymers, styrene-maleic anhydride copolymers, vinyl naphthalene-acrylic acid copolymers, vinyl naphthalene-maleic acid copolymers, vinyl acetate-ethylene copolymers, vinyl acetate-fatty acid vinyl ethylene copolymers, vinyl acetate-maleic acid ester copolymers, vinyl acetate-crotonic acid copolymers, and vinyl acetate-acrylic acid copolymers, and salts thereof. Among the above-described aqueous polymers, particularly preferable examples thereof include polyvinyl pyrrolidones.

The molecular weight of the water-soluble polymer that can be used in the present invention is preferably in a range of 1,000 to 200,000, and more preferably in a range of 3,000 to 20,000.

The addition amount of the water-soluble polymer is preferably in a range of 10 mass% to 1,000 mass%, and more preferably in a range of 50 mass% to 200 mass% with respect to the dissolved pigment.

### (Polymerization initiator)

The ink composition of the present invention may include a polymerization initiator as long as the effects of the present invention are not impaired. The polymerization initiator is preferably water-soluble, and, regarding the degree of water solubility, the amount of the polymerization initiator that is dissolved in distilled water at 25°C is preferably 0.5 mass% or more, more preferably 1 mass% or more, and particularly preferably 3 mass% or more.

In addition, it is preferable to use a polymerization initiator selected from the group consisting of α-amino ketones and acyl phosphine oxides.

Examples of a compound included in the α-amino ketones include 2-methyl-1-phenyl-2-morpholinopropane-1-one, 2-methyl-1-[4-(hexyl)phenyl]-2-morpholinopropane-1-one, 2-ethyl-2-dimethylamino-1-(4-morpholinophenyl)-butanone-1, and the like. In addition, the compound can be procured from commercially available products such as IRGACURE series manufactured by Nihon Ciba-Geigy K.K. such as IRGACURE 907, IRGACURE 369, and IRGACURE 379 (all manufactured by BASF Japan Ltd.), which are also the compounds included in the α-amino ketones, and that can be preferably used in the present invention.

Examples of a compound included in the acyl phosphine oxides include Darocur TPO (trade name, manufactured by BASF Japan Ltd.) which is a procurable [2,4,6-trimethyl benzoyl-diphenyl-phosphine oxide] and IRGACURE 819 (manufactured by BASF Japan Ltd.) which is a procurable [bis(2,4,6-trimethyl benzoyl)-phenyl phosphine oxide].

For the ink composition of the present invention, the above-described acyl phosphine oxides are preferable as the polymerization initiator, but other polymerization initiators may be used as long as the effects of the present invention are not impaired. In addition, other polymerization initiators can be jointly used with the acyl phosphine oxides. In this case, a water-soluble polymerization initiator is preferably used. Regarding the water-soluble properties, the amount of the polymerization initiator dissolved in distilled water at 25°C is preferably 0.5 mass% or more, preferably 1 mass% or more, and particularly preferably 3 mass% or more.

As other well-known polymerization initiators, it is possible to use, for example, camphorquinone, benzophenone, a benzophenone derivative, acetophenone, an acetophenone derivative, for example, α-hydroxycycloalkyl phenyl ketone or 2-hydroxy-2-methyl-1-phenyl-propanone, dialkoxy acetophenones, α-hydroxy- or 4-aroyl-1,3-dioxolane, benzoin alkyl ether, benzil ketal, for example, benzyl dimethyl ketal, phenyl glyoxalic acid, a derivative thereof, a phenyl glyoxal dimer, perester, for example, benzophenone tetracarboxylic acid perester (for example, those as described in EP 1126,541A), halomethyl triazine, for example, 2-[2-(4-methoxy-phenyl)-vinyl]-4,6-bis-trichloromethyl [1,3,5] triazine, 2-(4-methoxy-phenyl)-4,6-bis-trichloromethyl [1,3,5] triazine, 2-(3,4-dimethoxy-phenyl) -4,6-bis-trichloromethyl [1,3,5] triazine, 2-methyl-4,6-bis-trichloromethyl [1,3,5] triazine, hexaarylbisimidazole/co-initiator system, for example, ortho-chloro hexaphenyl-bisimidazole in combination with 2-mercaptobenzothiazole; ferrocenium compounds or titanocenes, for example, dicyclopentadienyl-bis(2,6-difluoro-3-pyrrolo-phenyl) titanium; and for example, a mixture with an O-acyl oxim ester compound as described in GB 2,339,571A. As the co-initiator system, it is also possible to use a boric acid compound.

The ink composition of the present invention may include the polymerization initiator, and, in a case in which the ink composition includes the polymerization initiator, the appropriate content of the polymerization initiator is preferably 10 parts by mass or less, more preferably 5 parts by mass or less, and still more preferably 3 parts by mass or less with respect to 100 parts by mass of the solid content of the ink composition.

### (Sensitizing dye)

It is desirable that the present invention do not include a sensitizing agent with no polymerizable group, but it is possible to jointly use a sensitizing agent which is a well-known sensitizing dye. In this case, it is preferable to jointly use a sensitizing dye from the viewpoint of improving the curing properties during the radiation of an active energy ray. Regarding the solubility, the amount of the sensitizing dye that is dissolved at room temperature (25°C) in distilled water is preferably 0.5 mass% or more, more preferably 1 mass% or more, and particularly preferably 3 mass% or more.

Examples of the well-known sensitizing dye that can be jointly used include benzophenone-based compounds, thioxanthone-based compounds, particularly, isopropylthioxanthone, anthraquinone and 3-acylcoumarin derivatives, terphenyl, strylketone and 3-(aroylmethylene) thiazoline, camphor quinone, eosin, rhodamine, erythrosine, and the like.

### (Polymerizing compound)

The ink composition of the present invention may include a polymerizing compound having a structure other than (Component b). The polymerizing compound having a structure other than (Component b) is not limited as long as the polymerizing compound is a water-soluble compound having at least one radical-polymerizable ethylenic unsaturated bond in the molecule, and examples thereof include polymerizing compounds having any chemical form of a monomer, an oligomer, a polymer, and the like. The polymerizing compound having a structure other than (Component b) may be singly used, or two or more polymerizing compounds may be used at an arbitrary ratio to improve the intended characteristics. The joint use of two or more polymerizing compounds is preferable since the performance such as reactivity and properties is controlled.

The polymerizing compound having a structure other than (Component b), which is used in the present invention, is dissolved in distilled water at room temperature as much as at least 2 mass%, and preferably 15 mass% or more, and is particularly preferably a compound that is homogeneously mixed with water at an arbitrary ratio.

Examples of the polymerizing compound having a structure other than (Component b) include unsaturated carboxylic acids such as acrylic acid, methacrylic acid, itaconic acid, crotonic acid, isocrotonic acid, and maleic acid, esters thereof, salts thereof, anhydrides having an ethylenic unsaturated group, acrylonitrile, styrene, furthermore, a variety of unsaturated polyesters, unsaturated polyethers, unsaturated polyamides, unsaturated urethanes, vinyl ethers, allyl ethers, and the like, and acrylic acid, methacrylic acid, and esters and salts thereof are preferable.

The polymerizing compound having a structure other than (Component b) that can be used in the present invention preferably has a poly(ethylene oxy) chain, a poly(propyleneoxy) chain, or an ionic group (for example, a carboxyl group, a sulfo group, or the like) to impart water solubility. In a case in which the polymerizing compound has a poly(ethyleneoxy) chain or a poly(propyleneoxy) chain, the number of ethylene oxy units and propylene oxy units is preferably in a range of 1 to 10, and more preferably in a range of 1 to 5.

To further improve sensitivity, bleeding, and adhesion to a recording medium, it is preferably to jointly use a monoacrylate and a polyfunctional acrylate monomer or a polyfunctional acrylate oligomer having a molecular weight of 400 or more and preferably 500 or more as the radical polymerizing compound having a structure other than (Compound b). Particularly, in the ink composition used for recording on a flexible recording medium such as a PET film or a PP film, it is preferable to jointly use a monoacrylate selected from the above-described compound group and a polyfunctional acrylate monomer or a polyfunctional acrylate oligomer since the joint use imparts flexibility to a film, and thus improves adhesiveness and film strength.

Furthermore, it is preferable to jointly use a polymerizing compound having a structure other than (Component b) of at least three kinds of polyfunctional monomers such as a monofunctional monomer, a difunctional monomer, and a trifunctional monomer since safety is maintained, and sensitivity, bleeding, and adhesion to a recording medium are further improved.

In the ink composition according to the present invention, in addition to the respective components described above, if necessary, in accordance with the purpose of improving discharging stability, printer head or ink cartridge aptitude, storage stability, image-storing properties, and other various performances, it is possible to appropriately select and use a variety of well-known additives, for example, a viscosity adjuster, a surface tension adjuster, a resistivity adjuster, a film-forming agent, an ultraviolet absorber, an antioxidant, a discoloration inhibitor, an anti-soot agent, a rust inhibitor, a solid wetting agent, fine silica particles, and the like, and examples thereof include oil droplet fine particles of fluid paraffin, dioctyl phthalate, tricresyl phosphate, and silicon oil, the ultraviolet absorbers described in JP1982-74193A (JP-S57-74193A), JP1982-87988A (JP-S57-87988A), and JP1987-261476A (JP-S62-261476A), the discoloration inhibitors described in JP1966-74192A (JP-S57-74192A), JP1966-87989A (JP-S57-87989A), JP1985-72785A (JP-S60-72785A), JP1986-146591A (JP-S61-146591A), JP1989-95091A (JP-H1-95091A), and JP1991-13376A (JP-J3-13376A), the fluorescent brighteners described in JP1984-42993A (JP-S59-42993A), JP1984-52689A (JP-S59-52689A), JP1987-280069A (JP-S62-280069A), JP1986-242871A (JP-S61-242871A), JP1992-219266A (JP-H4-219266A), and the like, pH adjusters such as sulfuric acid, phosphoric acid, citric acid, sodium hydroxide, potassium hydroxide, and potassium carbonate, and the like.

### <Method for preparing ink composition>

There is no particular limitation regarding the method for preparing the ink composition according to the present invention, and it is possible to prepare the ink composition by stirring, mixing, and dispersing the respective components using a container drive media mill such as a ball mill, a centrifugal mill, or a planetary ball mill, a high-speed rotation mill such as a sand mill, a medium stirring mill such as a stirring tank-type mill, or a simple disperser such as a disper. The respective components are added in an arbitrary order. In addition, to further miniaturize the dispersed particles, the respective components may be mixed using a disperser such as a bead mill or a high-pressure jet mill. In addition, depending on the kind of the dye or the polymer dispersant, it is also possible to add an anionic resin during the premixing carried out before the dispersion of the dye.

The ink composition of the present invention preferably has a surface tension at 25°C in a range of 20 mN/m to 40 mN/m. The surface tension is measured using an automatic surface tensiometer CBVP-Z (manufactured by Kyowa Interface Science Co., Ltd.) under a condition of 25°C. In addition, the viscosity is preferably in a range of 1 mPa·s to 40 mPa·s, and more preferably in a range of 3 mPa·s to 30 mPa·s. The viscosity of the ink composition is measured using a VISCOMETER TV-22 (manufactured by Toki Sangyo Co., Ltd.) under a condition of 25°C.

### «Image-forming method»

The image-forming method of the present invention includes applying the ink composition onto a recording medium, and radiating an active energy ray to the ink composition. When the above-described steps are carried out, an image is formed by the ink composition fixed on the recording medium.

Furthermore, in the image-forming method of the present invention, applying the ink composition is preferably applying the ink composition by an ink jet method.

### <Ink applying step>

Hereinafter, the ink applying step in the image-forming method of the present invention will be described. The ink applying step in the present invention is not limited as long as the ink composition is supplied onto a recording medium in the step.

There is no particular limitation regarding the ink jet recording apparatus that is used in the image-forming method of the present invention, and it is possible to arbitrarily select and use a well-known ink jet recording apparatus that is capable of achieving the intended resolution. That is, any well-known ink jet recording apparatuses, including commercially available apparatuses, are capable of discharging the ink composition onto a recording medium in the image-forming method of the present invention.

Examples of the ink jet recording apparatus that can be used in the present invention include apparatuses including an ink supply system, a temperature sensor, and heating means.

The ink supply system is constituted of, for example, a tank storing the ink composition of the present invention, a supply pipe, an ink supply tank located immediately before an ink jet head, a filter, and the piezo-type ink jet head. The piezo-type ink jet head can be driven so as to discharge preferably 1 pl to 100 pl, and more preferably 8 pl to 30 pl of multi-size dots at a resolution preferably in a range of 320x320 dpi to 4,000x4,000 dpi, more preferably in a range of 400x400 dpi to 1,600×1,600 dpi, and still more preferably of 720x720 dpi. Meanwhile, 'dpi' mentioned in the present invention indicates the number of dots per 2.54 cm.

Since it is desirable to maintain the ink composition of the present invention to be discharged at a constant temperature, the ink jet recording apparatus preferably includes means for stabilizing the temperature of the ink composition. The ink composition is maintained at a constant temperature in a pipe system from an ink tank (in a case in which an intermediate tank is included, the intermediate tank) to a nozzle injection surface and all members. That is, the section from the ink supply tank to the ink jet head can be heat-insulated and heated.

There is no particular limitation regarding the temperature control method; however, for example, it is preferable to provide a plurality of temperature sensors at individual pipe sections, thereby controlling the heating depending on the flow rate of the ink composition and the environmental temperature. The temperature sensors can be provided in the ink supply tank and the vicinity of the ink jet head nozzle. In addition, it is preferable to thermally block or insulate the head unit to be heated so that the apparatus main body is not influenced by the external temperature. It is preferable to thermally insulate the head unit from other sections and reduce the thermal capacity of the entire heating unit to shorten the printer activation time necessary for heating or reduce the loss of thermal energy.

It is preferable to discharge the ink composition using the above-described ink jet recording apparatus after the viscosity of the ink composition is decreased to preferably 3 mPa·s to 15 mPa·s, and more preferably 3 mPa·s to 13 mPa·s by heating the ink composition to preferably 25°C to 80°C, and more preferably 25°C to 50°C. Particularly, when an ink composition having a viscosity of 50 mPa·s or less at 25°C is used as the ink composition of the present invention, the ink composition is favorably discharged, which is preferable. The use of the above-described method enables the realization of high discharging stability.

While being discharged, the ink composition is preferably maintained at a constant temperature. In the present invention, the appropriate control tolerance of the temperature of the ink composition is preferably set to ±5°C of the set temperature, more preferably ±2°C of the set temperature, and preferably ±1°C of the set temperature.

In the present invention, the recording medium is not particularly limited, and a well-known recording medium can be used as a supporter or a recording material. Examples of the recording medium include paper, paper laminated with plastic (for example, polyethylene, polypropylene, polystyrene, or the like), a metal plate (for example, aluminum, zinc, copper, or the like), a plastic film (for example, a polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, or the like), paper or a plastic film laminated or deposited with the above-described metal, and the like. Since the ink composition of the present invention has excellent adhesiveness, among the above-described recording media, a non-absorbable recording medium can be preferably used as the recording medium, and, from the viewpoint of adhesiveness, a plastic base material such as polyvinyl chloride, polyethylene terephthalate, or polyethylene is preferable, a polyvinyl chloride resin base material is more preferable, and a polyvinyl chloride resin sheet or film is still more preferable.

### <Radiation step>

Hereinafter, the radiation step in the image-forming method of the present invention will be described. The radiation step in the present invention is not limited as long as an active energy ray is radiated on the ink composition supplied onto the recording medium. When an active energy ray is radiated on the ink composition of the present invention, the cross-linking reaction of the compound in the ink composition proceeds, and it becomes possible to improve the solvent resistance and the like of a printed material by fixing an image. The radiation step causes the cross-linking reaction of (Component a), and forms a cross-linking structure of the following Formula (5) in the ink composition.

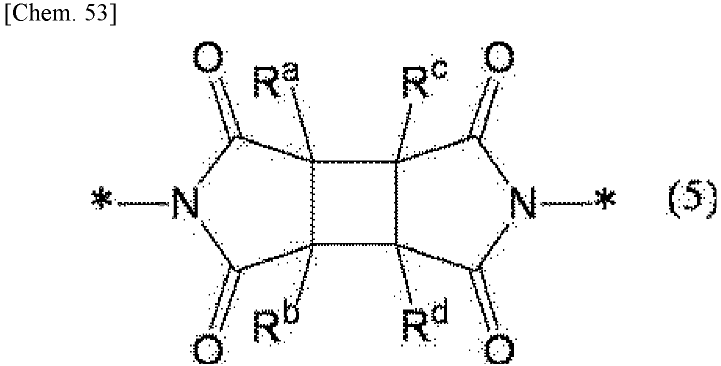

In Formula (5), each of R^{a}, R^{b}, R^{c}, and R^{d} independently represents a hydrogen atom or an alkyl group having 1 to 4 carbon atoms, and R^{a} and R^{b} may be bonded to each other so as to form a 4- to 6-membered alicyclic structure. R^{c} and R^{d} may be bonded to each other so as to form a 4- to 6-membered alicyclic structure. R^{a} and R^{b} are identical to those described in Formula (A), also including the preferable range. R^{c} is identical to R^{a} described in Formula (A), also including the preferable range. R^{d} is identical to R^{b} described in Formula (A), also including the preferable range. '*' represents a bonding site.

Examples of the active energy ray that can be used in the radiation step include an ultraviolet ray (hereinafter, also referred to as UV light), a visible light ray, an electronic beam, and the like, and it is preferable to use an UV light.

The peak wavelength of the UV light is also dependent on the absorption characteristics of the sensitizing dye used as necessary, and, for example, is preferably in a range of 200 nm to 405 nm, more preferably in a range of 250 nm to 405 nm, and still more preferably in a range of 250 nm to 390 nm.

The output of the UV light is preferably 2,000 mJ/cm² or less, more preferably in a range of 10 mJ/cm² to 2,000 mJ/cm², still more preferably in a range of 20 mJ/cm² to 1,000 mJ/cm², and particularly preferably in a range of 50 mJ/cm² to 800 mJ/cm².

Furthermore, the UV light is appropriately radiated at an exposed surface illuminance, for example, in a range of 10 mW/cm² to 2,000 mW/cm², and preferably in a range of 20 mW/cm² to 1,000 mW/cm².

As a UV light source, a mercury lamp, a gas·solid laser, or the like is mainly used, and a mercury lamp or a metal halide lamp is widely known. In addition, the replacement into a GaN-based semiconductor ultraviolet light-emitting device is extremely useful in industrial and environmental senses, and an LED (UV-LED) and an LD (UV-LD) have a small size, a long service life, a high efficiency, and a low cost, and are expected as an UV light source.

The UV light is appropriately radiated on the ink composition of the present invention for, for example, 0.01 seconds to 120 seconds, and preferably 0.1 seconds to 90 seconds.

The radiation conditions and the basic radiation method are disclosed by JP1985-132767A (JP-S60-132767A). Specifically, a method in which light sources are provided at both sides of a head unit including an ink discharging apparatus, and the head unit and the light sources are scanned through a so-called shuttle mode or a method in which radiation is carried out using separate light sources that are not accompanied by driving, and radiation is carried out using separate light sources that are not accompanied by driving is preferable. The active energy ray is radiated for a certain time span (for example, 0.01 seconds to 60 seconds, preferably 0.01 seconds to 30 seconds, and more preferably 0.01 seconds to 15 seconds) after the landing and thermal fixation of the ink.

### <Heating and drying step>

It is preferable to fix the ink composition discharged onto the recording medium by evaporating water and an organic solvent that are jointly used as necessary using heating means. A step for fixing the discharged ink composition of the present invention by applying heat will be described.

The heating means is not limited as long as the means is capable of drying water and the organic solvent that are jointly used as necessary, and it is possible to use a heat drum, hot air, an infrared lamp, a hot oven, a heating plate, or the like.

The heating temperature is not particularly limited as long as water and the organic solvent that are jointly used in the ink composition as necessary are evaporated, and the films of (Component a), (Component b), and the polymer binder that is added as necessary can be formed, but the heating effects can be obtained at a heating temperature of 40°C of higher, and the heating temperature is preferably in a range of approximately 40°C to 150°C, and more preferably in a range of approximately 40°C to 80°C.

The drying and heating time is not particularly limited as long as water and the organic solvent that are jointly used in the ink composition as necessary are evaporated, and the films of (Component a), (Component b), and the polymer binder that is added as necessary can be formed, and can be appropriately set in consideration of the composition of the ink composition being used and the printing rate.

### <Printed material>

A printed material of the present invention is recorded by the image-forming method for the present invention. Since the printed material of the present invention is a printed material recorded by the image-forming method for the present invention, the printed material becomes excellent in terms of the solvent resistance and adhesiveness to the base material of the recorded image.

### Examples

Hereinafter, the present invention will be specifically described using examples, but the present invention is not limited to the examples. Unless otherwise described, "parts" and "%" are by mass.

The respective components of pigment dispersions and ink compositions used in examples and comparative examples will be described below.

### <Preparation of color material dispersion A>

35 parts of IRGALITE BLUE GLVO (cyan pigment, C.I. Pigment Blue 15:3, manufactured by BASF Japan Ltd.), 12.5 parts of AJISPER PB821 (polyester-based polymer dispersant, manufactured by Ajinomoto Fine-Techno Co., Inc.), and 52.5 parts of propylene carbonate (4-methyl-2-oxo-1,3-dioxolane, manufactured by Wako Pure Chemical Industries, Ltd.) were mixed, and stirred using a stirrer until the mixture became homogeneous to obtain a preliminary dispersion. The obtained preliminary dispersion fluid was further dispersed using a vertical bead mill (a ready mill manufactured by Imex Co., Ltd.) and 0.1 mm zirconia beads for three to six hours, thereby producing a color material dispersion A. As a result of measuring the volume-average particle diameter of the color material in the color material dispersion A with a nano-track particle size distribution measuring machine UPA-EX150 (manufactured by Nikkiso Co., Ltd.) by a dynamic light scattering method, the volume-average particle diameter was 190 nm.

### <Preparation of color material dispersion B>

44 g of methyl ethyl ketone was added to a 500 ml three-neck flask equipped with a stirrer and a condenser, and was heated at 72°C under a nitrogen atmosphere. A solution produced by dissolving 0.43 g of dimethyl-2,2'-azobisisobutyrate, 30 g of benzyl methacrylate, 5 g of methacrylic acid, and 15 g of methyl methacrylate in 25 g of methyl ethyl ketone was added dropwise to the above-described methyl ethyl ketone over three hours. After the completion of the dropwise addition, the components were reacted for one hour, then, a solution produced by dissolving 0.21 g of dimethyl-2,2'-azobisisobutyrate in 1 g of methyl ethyl ketone was added, the temperature of the resultant was increased to 78°C, and the resultant was heated for four hours. The obtained reaction solution was precipitated twice in a significantly excessive amount of hexane, and the precipitated resin was dried, thereby obtaining 43 g of a polymer dispersant D-1.

The composition of the obtained resin was confirmed by ¹H-NMR, and the weight-average molecular weight (Mw) obtained by GPC was 42,000. Furthermore, as a result of obtaining the acid value using the method described in JIS Standards (JISK0070:1992), the acid value was 65.4 mg KOH/g.

10 parts of Pigment Blue 15:3 (phthalocyanine blue A220, manufactured by Dainichiseika Color & Chemicals Mfg. Co., Ltd.), 5 parts of the polymer dispersant D-1, 42 parts of methyl ethyl ketone, 5.5 parts of a 1 mol/L NaOH aqueous solution, and 87.2 parts of ion exchanged water were mixed, and dispersed for two to six hours using a bead mill and 0.1 mmφ zirconia beads. The methyl ethyl ketone was removed at 55°C under reduced pressure, and furthermore, some water was removed, thereby obtaining a color material dispersion B (colored particles) having a pigment concentration of 10.2 mass%.

### <Synthesis of BP-M8>

20 g of dichloromethane (manufactured by Wako Pure Chemical Industries, Ltd.), 10 g of a compound having the following structure, 4.5 g of glycidyl methacrylate, and 1 g of triethyl benzyl ammonium chloride were mixed, and reacted at 100°C for four hours. 1 L of ethyl acetate and 500 mL of water were added to the obtained reaction fluid, and were separated. After an organic layer was washed twice using a saturated saline solution, the solvent in the organic layer was distilled away by reducing the pressure in a vacuum to obtain a crude product. The obtained crude product was purified using a column, thereby obtaining 7 g of BP-M8.

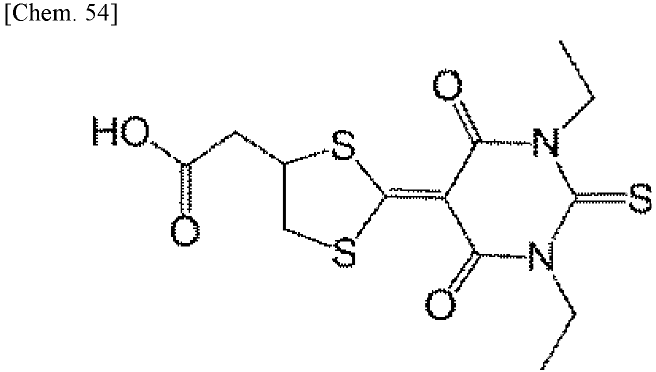

### (Component a)

- Exemplary Compound A-6 (the following structure)
- Exemplary Compound a-A (the following structure), the composition ratio is described in mass, and the weight-average molecular weight is 21,000
- Exemplary Compound a-B (the following structure), the composition ratio is described in mass, and the weight-average molecular weight is 25,000
- Exemplary Compound 30 described in the specification of JP2007-119449A (the following structure)

### (Component b)

- Exemplary Compounds A to H (the following structures)
- BP-M8 (the compound obtained in the above-described synthesis example)

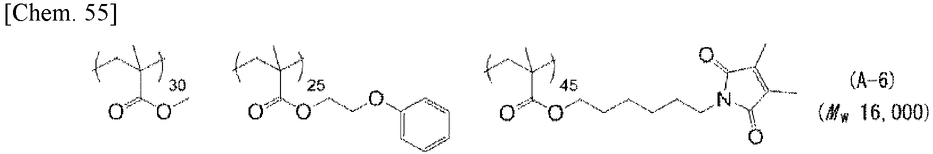

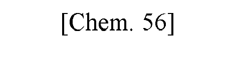

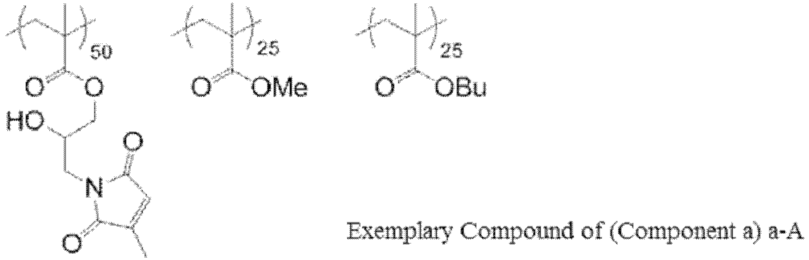

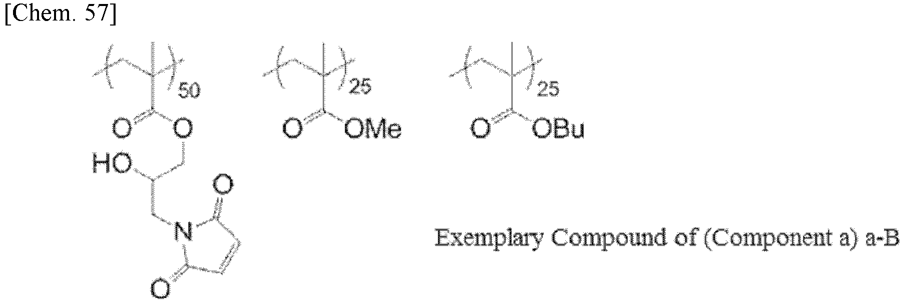

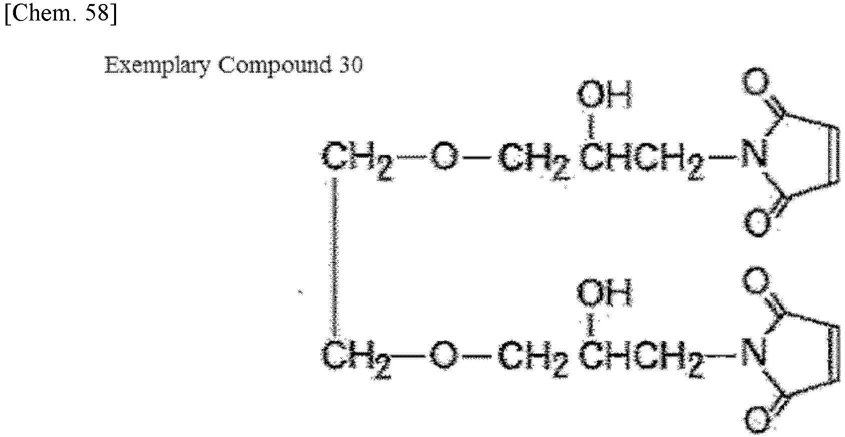

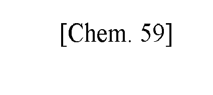

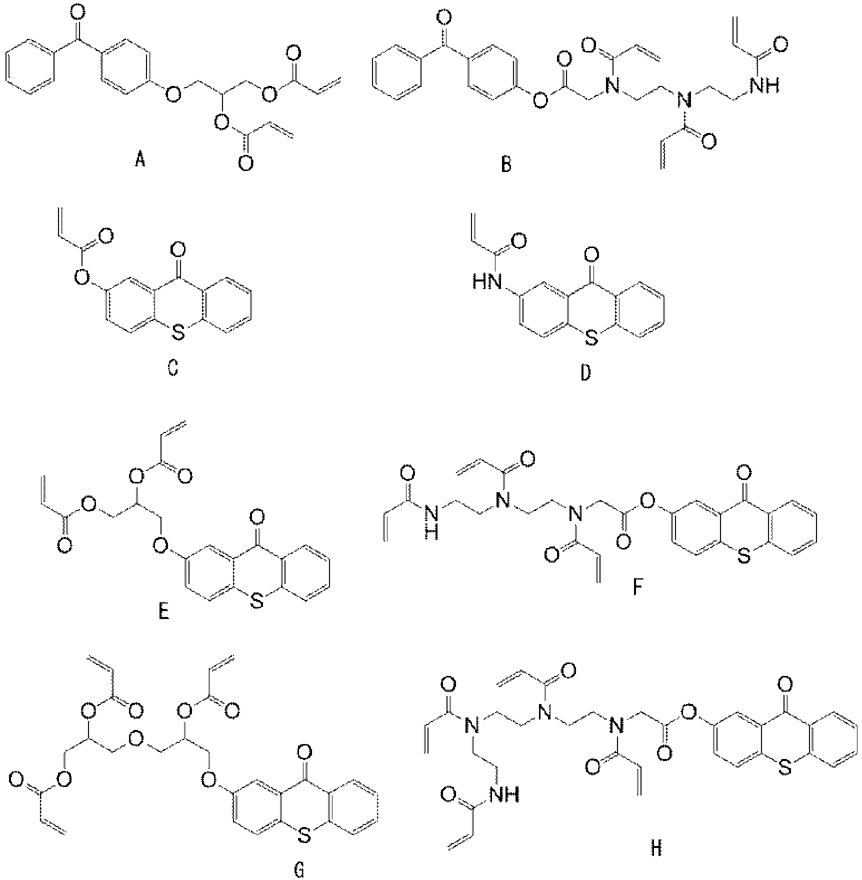

### (Component e) organic solvent

- 2-pyrrolidone (manufactured by Sigma-Aldrich Japan K.K.)
- 2-methylpropanediol (manufactured by Sigma-Aldrich Japan K.K.)
- Propylene glycol monomethyl ether (manufactured by Wako Pure Chemical Industries, Ltd.)

The synthesis method of Exemplary Compound A-6, Exemplary Compound a-A, Exemplary Compound a-B, and Exemplary Compounds A to H will be described below.

Among the compounds used in examples and comparative examples, compounds with no description of a manufacturer were synthesized using a well-known method or the application of a well-known method.

### <Synthesis of Exemplary Compound A-6>

75 g of toluene and 42.0 g of dimethyl maleic acid anhydride (manufactured by Sigma-Aldrich Japan K.K.) were introduced into a 500 ml three-neck flask equipped with a Dean-Stark distillation tube, and were heated up to 50°C while being stirred using a stirrer (manufactured by Shinto Scientific Co., Ltd.: Three-One Motor). 35.0 g of 5-amino-1-pentanol was added dropwise to the heated mixture over 30 minutes, and then was stirred for four hours. After the solution was heated up to 60°C, 0.042 g of p-methoxyphenol (manufactured by Wako Pure Chemical Industries, Ltd.) and 6.2 g of sulfuric acid (manufactured by Wako Pure Chemical Industries, Ltd.) were added to the solution, and furthermore, 43.0 g of methacrylic acid (manufactured by Wako Pure Chemical Industries, Ltd.) was added dropwise over 30 minutes. After the completion of the dropwise addition, the temperature was increased until the solvent was refluxed, and the components were reacted for three hours. After the reaction solution was neutralized using 29 g of a 50 w/v% sodium hydroxide aqueous solution (manufactured by Wako Pure Chemical Industries, Ltd.), 200 ml of toluene and 100 mL of water were added, and were separated. After an organic layer was washed twice using a saturated saline solution, 30 mg of p-methoxyphenol was added to the organic layer, and the solvent in organic layer was distilled away in vacuum to obtain 68 g of a monomer having a dimethyl maleimide structure. Obtaining of a desired product was confirmed by ¹H NMR.

20 g of 2-pyrrolidone (manufactured by Wako Pure Chemical Industries, Ltd.) was added to a 200 mL nitrogen-substituted three-neck flask equipped with a stirrer, and was heated to 80°C in a nitrogen stream. A liquid mixture of 20 g of 2-pyrrolidone, 10.0 g of the monomer, 1.9 g of methyl methacrylate (manufactured by Wako Pure Chemical Industries, Ltd.), 4.7 g of phenoxyethyl methacrylate, 0.030 g of 3-mercapto propionate (manufactured by Tokyo Chemical Industry Co., Ltd.), and 0.079 g of dimethyl 2,2'-azobis isobutyrate (manufactured by Wako Pure Chemical Industries, Ltd.) was added thereto dropwise over three hours. 0.050 g of dimethyl 2,2'-azobis isobutyrate was added immediately after the completion of the dropwise addition, two hours later after the completion of the dropwise addition, and four hours later after the completion of the dropwise addition respectively, and furthermore, the components were reacted for two hours. The obtained solution was reprecipitated in water, thereby obtaining 10 g of Exemplary Compound A-6.

### <Synthesis of Exemplary Compound a-A>

75 g of toluene and 39 g of monomethyl maleic acid anhydride (manufactured by Sigma-Aldrich Japan K.K.) were introduced into a 500 ml three-neck flask equipped with a Dean-Stark distillation tube, and were heated up to 50°C while being stirred using a stirrer (manufactured by Shinto Scientific Co., Ltd.: Three-One Motor). 20 g of allylamine was added dropwise to the heated mixture over 30 minutes, and then was stirred for four hours. After the reaction solution was neutralized using 29 g of a 50 w/v% sodium hydroxide aqueous solution (manufactured by Wako Pure Chemical Industries, Ltd.), 200 ml of toluene and 100 mL of water were added, and were separated. After an organic layer was washed twice using a saturated saline solution, the solvent in the organic layer was distilled away in a vacuum, thereby synthesizing 15 g of an intermediate product A1. Obtaining of a desired product was confirmed by ¹H NMR

15 g of the intermediate product A1 was dissolved in 45 g of dichloromethane, 17.3 g of m-chloroperoxybenzoic acid (m-CPBA) was added to the solution while the solution was cooled to 5°C, and the components were reacted at room temperature for five hours. After the reaction, the liquid was separated and a reactant was extracted, the solvent in an organic layer was distilled away to obtain a crude product.□The obtained crude product was purified using a column, thereby obtaining 7 g of an intermediate product A2.

20 g of 1-methoxy-2-propanol (manufactured by Wako Pure Chemical Industries, Ltd.) was added to a 200 mL nitrogen-substituted three-neck flask equipped with a stirrer, and was heated to 80°C in a nitrogen stream. A liquid mixture of 20 g of 1-methoxy-2-propanol, 3.3 g of methacrylic acid, 1.9 g of methyl methacrylate (manufactured by Wako Pure Chemical Industries, Ltd.), 2.7 g of n-butyl methacrylate, 0.030 g of 3-mercapto propionate (manufactured by Tokyo Chemical Industry Co., Ltd.), and 0.079 g of dimethyl 2,2'-azobis isobutyrate (manufactured by Wako Pure Chemical Industries, Ltd.) was added dropwise thereto over three hours. 0.050 g of dimethyl 2,2'-azobis isobutyrate was added immediately after the completion of the dropwise addition, two hours later after the completion of the dropwise addition, and four hours later after the completion of the dropwise addition respectively, and furthermore, the components were reacted for two hours.

After that, 6.9 g of the intermediate product A2 and 2 g of trimethyl benzyl ammonium chloride were added to the obtained reaction fluid, and the component were reacted at 100°C for three hours. Finally, the obtained polymer was reprecipitated in water so as to be purified, thereby obtaining 3.6 g of the desired Exemplary Compound a-A.

### <Synthesis of Exemplary Compound a-B>

75 g of toluene and 37 g of maleic acid anhydride (manufactured by Sigma-Aldrich Japan K.K.) were introduced into a 500 ml three-neck flask equipped with a Dean-Stark distillation tube, and were heated up to 50°C while being stirred using a stirrer (manufactured by Shinto Scientific Co., Ltd.: Three-One Motor). 20 g of allylamine was added dropwise to the heated mixture over 30 minutes, and then was stirred for four hours. After the reaction solution was neutralized using 29 g of a 50 w/v% sodium hydroxide aqueous solution (manufactured by Wako Pure Chemical Industries, Ltd.), 200 ml of toluene and 100 mL of water were added, and were separated. After an organic layer was washed twice using a saturated saline solution, the solvent in the organic layer was distilled away in a vacuum, thereby obtaining 14 g of an intermediate product B1. Obtaining of a desired product was confirmed by ¹H NMR.

14 g of the intermediate product B1 was dissolved in 45 g of dichloromethane, 17 g of m-chloroperoxybenzoic acid (m-CPBA) was added to the solution while the solution was cooled to 5°C, and the components were reacted at room temperature for five hours. After the reaction, the liquid was separated and a reactant was extracted, the solvent in an organic layer was distilled away to obtain a crude product. The obtained crude product was purified using a column, thereby obtaining 7 g of an intermediate product B2.

20 g of 1-methoxy-2-propanol (manufactured by Wako Pure Chemical Industries, Ltd.) was added to a 200 mL nitrogen-substituted three-neck flask equipped with a stirrer, and was heated to 80°C in a nitrogen stream. A liquid mixture of 20 g of 1-methoxy-2-propanol, 3.3 g of methacrylic acid, 1.9 g of methyl methacrylate (manufactured by Wako Pure Chemical Industries, Ltd.), 2.7 g of n-butyl methacrylate, 0.030 g of 3-mercapto propionate (manufactured by Tokyo Chemical Industry Co., Ltd.), and 0.079 g of dimethyl 2,2'-azobis isobutyrate (manufactured by Wako Pure Chemical Industries, Ltd.) was added dropwise thereto over three hours. 0.050 g of dimethyl 2,2'-azobis isobutyrate was added immediately after the completion of the dropwise addition, two hours later after the completion of the dropwise addition, and four hours later after the completion of the dropwise addition respectively, and furthermore, the components were reacted for two hours.

After that, 6.3 g of the intermediate product B2 and 2 g of trimethyl benzyl ammonium chloride were added to the obtained reaction fluid, and the component were reacted at 100°C for three hours. Finally, the obtained polymer was reprecipitated in water so as to be purified, thereby obtaining 3 g of the desired Exemplary Compound a-B.

### <Synthesis of Exemplary Compound A>

100 g of tetrahydrofuran (manufactured by Wako Pure Chemical Industries, Ltd.), 50 g of p-hydroxy benzophenone, 30 g of epichlorohydrin, and 50 g of sodium carbonate were added to a 1 L three-neck flask. The liquid mixture was heated to 50°C, and then was reacted for four hours. 1 L of ethyl acetate and 500 ml of water were added to the obtained reaction fluid, and were separated. After an organic layer was washed twice using a saturated saline solution, the solvent in organic layer was distilled away in a vacuum, thereby obtaining 59 g of an intermediate product A-1.

100 g of dichloromethane (manufactured by Wako Pure Chemical Industries, Ltd.), 50 g of the intermediate product A-1, 14 g of acrylic acid, and 16 g of sodium hydrogen carbonate were added to a 1 L three-neck flask, and were reacted at room temperature for six hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 37 g of an intermediate product A-2.

60 g of dichloromethane (manufactured by Wako Pure Chemical Industries, Ltd.), 30 g of the intermediate product A-2, and 11 g of triethylamine were added to a 1 L three-neck flask, were cooled to 5°C, and 11.7 g of acrylic acid chloride was added dropwise to the mixture. After the dropwise addition, the mixture was cooled to room temperature, and was reacted for three hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 13 g of Exemplary Compound A.

### <Synthesis of Exemplary Compound B>

100 g of dichloromethane (manufactured by Wako Pure Chemical Industries, Ltd.), 50 g of p-hydroxy benzophenone, 55 g of WSC (1-ethyl-3-(3-dimethylaminopropyl) carbodiimide hydrochloride: manufactured by Dojindo Molecular Technologies, Inc.), and 35 g of bromoacetic acid were added to a 1 L three-neck flask, and were reacted at room temperature for 12 hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude productwas purified using a column, thereby obtaining 37 g of an intermediate product B-1.

60 g of tetrahydrofuran (manufactured by Wako Pure Chemical Industries, Ltd.), 30 g of the intermediate product B-1, and 60 g of diethylenetriamine were added to a 1 L three-neck flask, and were reacted at room temperature for six hours. 1 L of ethyl acetate and 500 ml of water were added to the obtained reaction fluid, and were separated. After an organic layer was washed once using a diethylenetriamine aqueous solution and twice using a saturated saline solution, the solvent in the organic layer was distilled away in a vacuum to obtain a crude product. The obtained crude product was purified using a column, thereby obtaining 18 g of an intermediate product B-2.

30 g of ethyl acetate (manufactured by Wako Pure Chemical Industries, Ltd.), 15 g of the intermediate product B-2, and 26 g of triethylamine were added to a 1 L three-neck flask, were cooled to 5°C, and 17 g of acrylic acid chloride was added dropwise to the mixture. After the dropwise addition, the mixture was cooled to room temperature, and was reacted for three hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 11 g of Exemplary Compound B.

### < Synthesis of Exemplary Compound C>

50 g of tetrahydrofuran (manufactured by Wako Pure Chemical Industries, Ltd.), 25 g of 2-hydroxythioxanthone, and 14 g of triethylamine were added to a 1 L three-neck flask, were cooled to 5°C, and 13 g of acrylic acid chloride was added dropwise to the mixture. After the dropwise addition, the mixture was cooled to room temperature, and was reacted for three hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 14 g of Exemplary Compound C.

### < Synthesis of Exemplary Compound D>

50 g of tetrahydrofuran (manufactured by Wako Pure Chemical Industries, Ltd.), 10 g of 2-aminothioxanthone, and 14 g of triethylamine were added to a 1 L three-neck flask, were cooled to 5°C, and 8 g of acrylic acid chloride was added dropwise to the mixture. After the dropwise addition, the mixture was cooled to room temperature, and was reacted for three hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 4 g of Exemplary Compound D.

### < Synthesis of Exemplary Compound E>

Exemplary Compound E was synthesized in the same manner as in the synthesis of Exemplary Compound A except that 50 g of p-hydroxybenzophenone was changed to 58 g of 2-hydroxythioxanthone in the synthesis of Exemplary Compound A.

### < Synthesis of Exemplary Compound F>

Exemplary Compound F was synthesized in the same manner as in the synthesis of Exemplary Compound B except that 50 g of p-hydroxybenzophenone was changed to 58 g of 2-hydroxythioxanthone in the synthesis of Exemplary Compound B.

### <Synthesis of Exemplary Compound G>

200 g of tetrahydrofuran (manufactured by Wako Pure Chemical Industries, Ltd.), 100 g of 2-hydroxythioxanthone, 40 g of epichlorohydrin, and 37 g of sodium hydrogen carbonate were added to a 1 L three-neck flask. The liquid mixture was heated to 50°C, and then was reacted for four hours. 1 L of ethyl acetate and 500 ml of water were added to the obtained reaction fluid, and were separated. After an organic layer was washed twice using a saturated saline solution, the solvent in the organic layer was distilled away in a vacuum, thereby obtaining 180 g of an intermediate product G-1.

200 g of tetrahydrofuran (manufactured by Wako Pure Chemical Industries, Ltd.), 100 g of the intermediate product G-1, and 10 g of a 50% sulfuric acid aqueous solution were added, and were reacted at room temperature for three hours. 1 L of ethyl acetate and 500 ml of water were added to the obtained reaction fluid, and were separated. After an organic layer was washed once using saturated sodium bicarbonate water and twice using a saturated saline solution, the solvent in the organic layer was distilled away in a vacuum to obtain a crude product. The obtained crude product was purified using a column, thereby obtaining 42 g of an intermediate product G-2.

80 g of tetrahydrofuran (manufactured by Wako Pure Chemical Industries, Ltd.), 40 g of the intermediate product G-2, 12 g of epichlorohydrin, and 20 g of sodium carbonate were added to a 1 L three-neck flask, were heated to 50°C, and were reacted for four hours. 1 L of ethyl acetate and 500 ml of water were added to the obtained reaction fluid, and were separated. After an organic layer was washed twice using a saturated saline solution, the solvent in the organic layer was distilled away in a vacuum, thereby obtaining 16 g of an intermediate product G-3.

30 g of dichloromethane (manufactured by Wako Pure Chemical Industries, Ltd.), 15 g of the intermediate product G-3, 3 g of acrylic acid, and 4 g of sodium hydrogen carbonate were added to a 1 L three-neck flask, and was reacted at room temperature for six hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 12 g of an intermediate product G-4.

20 g of dichloromethane (manufactured by Wako Pure Chemical Industries, Ltd.), 10 g of the intermediate product G-4, and 6 g of triethylamine were added to a 1 L three-neck flask, were cooled to 5°C, and 6 g of acrylic acid chloride was added dropwise to the mixture. After the dropwise addition, the mixture was cooled to room temperature, and was reacted for three hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 3 g of Exemplary Compound G

### <Synthesis of Exemplary Compound H>

100 g of dichloromethane (manufactured by Wako Pure Chemical Industries, Ltd.), 58 g of 2-hydroxythioxanthone, 55 g of WSC (manufactured by Dojindo Molecular Technologies, Inc.), and 35 g of bromoacetic acid were added to a 1 L three-neck flask, and were reacted at room temperature for 12 hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 33 g of an intermediate product H-1.

60 g of tetrahydrofuran (manufactured by Wako Pure Chemical Industries, Ltd.), 30 g of the intermediate product H-1, and 73 g of triethylenetetramine were added to a 1 L three-neck flask, and were reacted at room temperature for six hours. 1 L of ethyl acetate and 500 ml of water were added to the obtained reaction fluid, and were separated. After an organic layer was washed once using a diethylenetriamine aqueous solution and twice using a saturated saline solution, the solvent in the organic layer was distilled away in a vacuum to obtain a crude product. The obtained crude product was purified using a column, thereby obtaining 20 g of an intermediate product H-2.

30 g of ethyl acetate (manufactured by Wako Pure Chemical Industries, Ltd.), 15 g of the intermediate product H-2, and 35 g of triethylamine were added to a 1 L three-neck flask, were cooled to 5°C, and 23 g of acrylic acid chloride was added dropwise to the mixture. After the dropwise addition, the mixture was cooled to room temperature, and was reacted for three hours. 1 L of ethyl acetate and 500 ml of water were added to the obtained reaction fluid, and were separated. After an organic layer was washed twice using a saturated saline solution, the solvent in the organic layer was distilled away in a vacuum to obtain a crude product. The obtained crude product was purified using a column, thereby obtaining 13 g of Exemplary Compound H.

### [Examples 1 to 23 and Comparative Examples 1 to 4]

### <Preparation of ink composition>

Ink compositions of Examples 1 to 23 and Comparative Examples 1 to 4 having the compositions described in Table 1 were respectively prepared by stirring the obtained color material dispersions A and B at 2,500 rotations/minute for ten minutes using a mixer (L4R manufactured by Silverson Ltd.). Each of the obtained ink compositions was loaded into a plastic disposable syringe, and was filtered using a polyvinylidene fluoride (PVDF) filter (Millex-SV manufactured by Millipore Corporation with a diameter of 25 mm) having a pore diameter of 5 µm, thereby producing an ink. The respective numeric values of the blending amounts in the respective compositions in Table 1 are expressed using a unit of 'parts by mass'.

### In Table 1, "-" indicates that the corresponding component is not included.

In addition, as a result of measuring the viscosities of the ink compositions under a condition of 25°C using a VISCOMATE VM-10A-L (manufactured by CMC Materials Co., Ltd.), the viscosities of Examples 1 to 23 were in a range of 8 mPa·s to 17 mPa·s.

### [Comparative Example 5]

20 g of 1-methoxy-2-propanol (manufactured by Wako Pure Chemical Industries, Ltd.) was added to a 200 mL nitrogen-substituted three-neck flask equipped with a stirrer, and was heated to 80°C in a nitrogen stream. A liquid mixture of 20 g of 1-methoxy-2-propanol, 10 g of Exemplary Compound A, 0.030 g of 3-mercapto propionate (manufactured by Tokyo Chemical Industry Co., Ltd.), and 0.079 g of dimethyl 2,2'-azobis isobutyrate (manufactured by Wako Pure Chemical Industries, Ltd.) was added dropwise thereto over three hours. 0.050 g of dimethyl 2,2'-azobis isobutyrate was added immediately after the completion of the dropwise addition, two hours later after the completion of the dropwise addition, and four hours later after the completion of the dropwise addition respectively, and furthermore, the components were reacted for two hours. The obtained solution was reprecipitated in water so as to be purified, thereby obtaining Comparative Compound 5.

An ink composition of Comparative Example 5 was prepared in the same manner as in the preparation of the ink composition of Example 1 except that the same amount of Comparative Compound 5 obtained above was used instead of the compound of Component b in the preparation of the ink composition of Example 1.

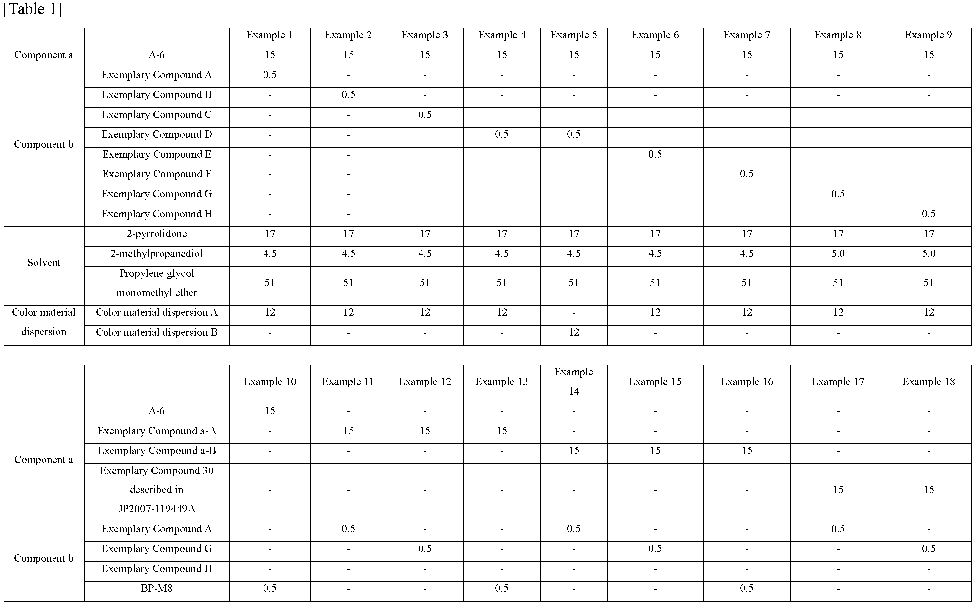

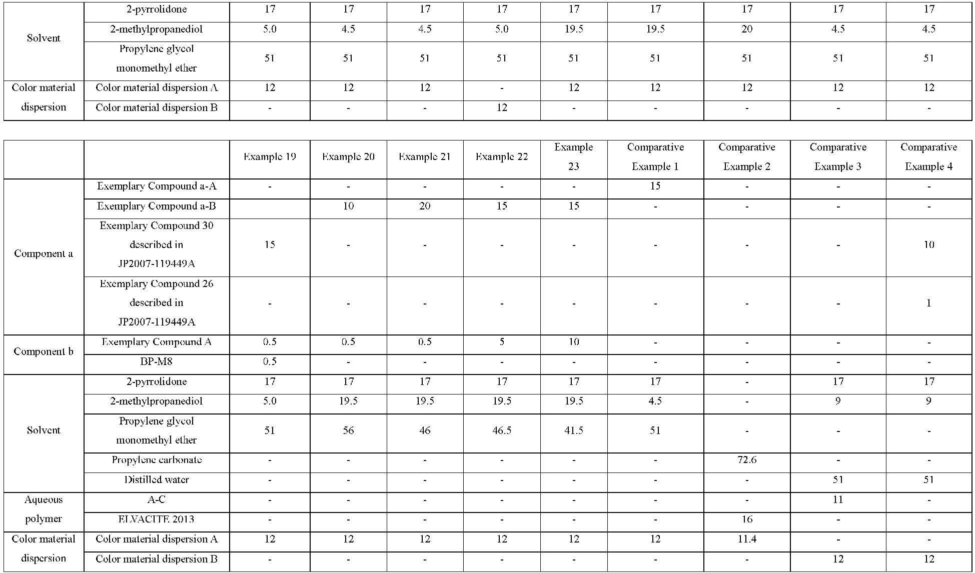

### <Image-forming method>

Next, as an ink jet recording apparatus, a commercially available ink jet printer (SP-300V manufactured by Roland DG Corporation) was prepared.

Each of the obtained ink compositions was loaded in the ink jet printer, an image was formed on a polyvinyl chloride sheet (AVERY 400 GLOSS WHITE PERMANENT manufactured by Avery Dennison Corp.), and the following printed materials for evaluation were obtained.

Meanwhile, the ink composition of Comparative Example 5 failed to form a favorable image due to ejection failure, and thus the ink composition was not evaluated.

Furthermore, an ultraviolet ray was radiated using a light-emitting diode (UV-LED, NC4U134 manufactured by Nichia Corporation). The light-emitting diode output an ultraviolet ray having a wavelength of 365 nm from a chip, the illuminance on the image surface was set to 1,000 mW/cm² by controlling the current amount (by collecting light using a lens), and the light exposure time (sec) was adjusted so that the light exposure energy reached 1000 (mJ/cm²).

The following evaluations were carried out using the obtained ink compositions and printed materials respectively. The evaluation results are described in Table 2.

### <Adhesiveness evaluation (cross-hatch test)>

A cross-hatch test (JIS K 5600-5-6) was carried out as a method for evaluating the adhesiveness to the polyvinyl chloride sheet. A solid image having an image section with an average film thickness of 12 µm was printed in accordance with the above-described image-forming method.

After that, the cross-hatch test was carried out on each of the printed materials. The printed materials were evaluated into six levels of 0 to 5 in accordance with JIS K5600-5-6. The evaluation level 0 of the printed material means that the edges of the cuts were completely smooth and none of the squares of the lattice was detached. Evaluation levels 0 to 3 are levels that do not cause any practical problems.

### <Water resistance evaluation>

After a solid image having an average film thickness of 12 µm was printed in accordance with the above-described image-forming method, the surface of the printed material was rubbed with a cotton swab soaked with distilled water, and the water resistance was evaluated using the following standards. The C or higher ranks are levels that do not cause any practical problems.
A: There was no observable change in the image even after the image was rubbed ten or more times.
B: The concentration of the image decreased when the image was rubbed five to nine times.
C: The concentration of the image decreased when the image was rubbed two to four times.
D: The concentration of the image significantly decreased when the image was rubbed once.

### <Solvent resistance evaluation>

After a solid image having an average film thickness of 12 µm was printed in accordance with the above-described image-forming method, the surface of the printed material was rubbed with a cotton swab soaked with a solvent mixture (1/1 (volume)) of isopropyl alcohol and 2-butanone, and the solvent resistance was evaluated using the following standards. The C or higher ranks are levels that do not cause any practical problems.
A: There was no observable change in the image even after the image was rubbed ten or more times.
B: The concentration of the image decreased when the image was rubbed five to nine times.
C: The concentration of the image decreased when the image was rubbed two to four times.
D: The concentration of the image significantly decreased when the image was rubbed once.

### <Ejection properties evaluation>

In accordance with the above-described image-forming method, the ink composition was discharged for 20 minutes, a solid image having an average film thickness of 12 µm was printed, and the ejection properties of each ink composition was evaluated using the following standards. The A rank is a level that does not cause any practical problems.
A: The ejection properties of the ink were excellent.
B: The ejection properties of the ink were inferior.

**[Table 2]**

| | Example 1 | Example 2 | Example 3 | Example 4 | Example 5 | Example 6 | Example 7 | Example 8 | Example 9 |
|---|---|---|---|---|---|---|---|---|---|
| Adhesiveness | 1 | 1 | 1 | 1 | 1 | 1 | 1 | 1 | 1 |
| Water resistance | C | C | C | C | C | C | C | C | C |
| Solvent resistance | C | C | C | C | C | C | C | C | C |
| Ejection properties | A | A | A | A | A | A | A | A | A |
| | | | | | | | | | |

| | Example 10 | Example 11 | Example 12 | Example 13 | Example 14 | Example 15 | Example 16 | Example 17 | Example 18 |
|---|---|---|---|---|---|---|---|---|---|
| Adhesiveness | 1 | 1 | 1 | 1 | 1 | 1 | 1 | 1 | 1 |
| Water resistance | C | C | A | A | A | A | A | A | A |
| Solvent resistance | C | C | C | C | A | A | A | A | A |
| Ejection properties | A | A | A | A | A | A | A | A | A |
| | | | | | | | | | |

| | Example 19 | Example 20 | Example 21 | Example 22 | Example 23 | Comparative Example 1 | Comparative Example 2 | Comparative Example 3 | Comparative Example 4 |
|---|---|---|---|---|---|---|---|---|---|
| Adhesiveness | 1 | 1 | 1 | 1 | 1 | 4 | 4 | 4 | 3 |
| Water resistance | A | A | A | A | A | D | C | D | D |
| Solvent resistance | A | A | B | A | A | D | D | C | C |
| Ejection properties | A | A | A | A | A | A | A | A | A |

As shown in Table 2, in the examples of the present invention, the effects of being excellent in terms of all of adhesiveness, water resistance, solvent resistance, and ejection properties were obtained. On the contrary, in the comparative examples, there was no ink composition which obtained the effects of being excellent in terms of all of adhesiveness, water resistance, solvent resistance, and ejection properties.

## Claims

1. An ink composition comprising:
a compound having two or more partial structures represented by Formula (A) in a molecule;
a compound selected from the group consisting of a compound represented by Formula (B1) and a compound represented by Formula (B2); and
a color material, 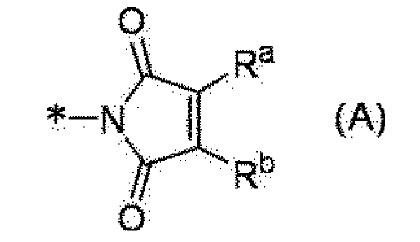
in Formula (A), each of R^{a} and R^{b} independently represents a hydrogen atom or an alkyl group having 1 to 4 carbon atoms, R^{a} and R^{b} may be bonded to each other to form a 4- to 6-membered alicyclic structure, and '*' represents a bonding site, 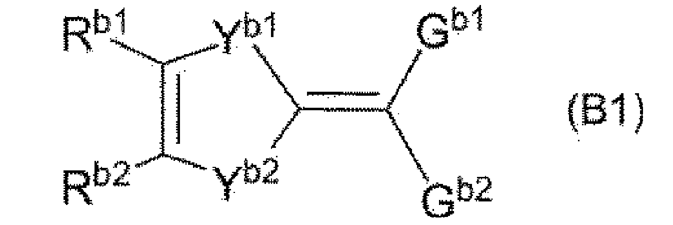
in Formula (B1), each of R^{b1} and R^{b2} independently represents a hydrogen atom, an alkyl group, an aryl group, an alkenyl group, or a heterocyclic group, and R^{b1} and R^{b2} may be bonded to each other to form a ring, each of Y^{b1} and Y^{b2} independently represents a divalent group selected from the group consisting of -O-, -S-, -NR^{b3}-, -Se-, -C(CH₃)₂-, and -CH=CH-, R^{b3} represents a hydrogen atom, an alkyl group, an aryl group, or an alkenyl group, each of G^{b1} and G^{b2} independently represents a hydrogen atom, a cyano group, an amide group, an alkyl amide group, an alkoxy carbonyl group, an aryloxy carbonyl group, an acyl group, an aryl carbonyl group, an alkyl sulfanyl group, an aryl sulfanyl group, an alkyl sulfonyl group, an aryl sulfonyl group, or a fluoroalkyl sulfonyl group, and G^{b1} and G^{b2} may be bonded to each other to form a ring, however, in a case in which G^{b1} and G^{b2} form a ring, the formed ring may include a divalent linking group selected from the group consisting of -C(=O)-, -C(=S)-, -NR¹²-, -N=CR¹³-, -O-, and -S-, each of R¹² and R¹³ independently represents a hydrogen atom, an alkyl group, or an aryl group, at least one of the groups represented by R^{b1}, R^{b2}, Y^{b1}, Y^{b2}, G^{b1}, and G^{b2} contains a polymerizable group as a substituent, 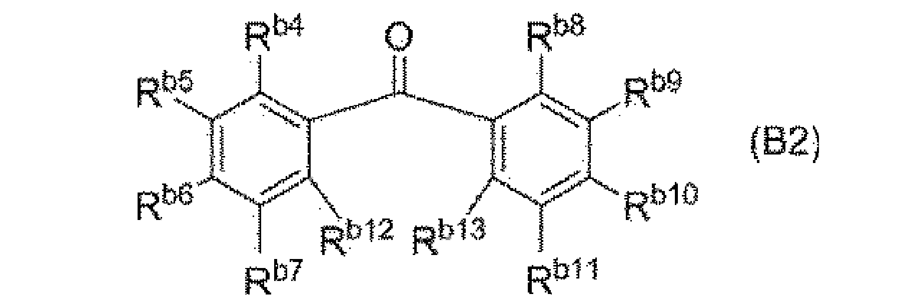
in Formula (B2), each of R^{b4}, R^{b5}, R^{b6}, R^{b7}, R^{b8}, R^{b9}, R^{b10}, R^{b11}, R^{b12}, and R^{b13} independently represents a hydrogen atom, a halogen atom, an alkyl group, an aryl group, a hydroxyl group, a cyano group, a nitro group, an amino group, an alkyl sulfanyl group, an alkyl amino group, an alkoxy group, an alkoxy carbonyl group, an acyloxy group, an acyl group, a carboxyl group, or a sulfo group, at least two groups selected from R^{b4}, R^{b5}, R^{b6}, R^{b7}, R^{b8}, R^{b9}, R^{b10}, R^{b11}, R^{b12}, and R^{b13} may be bonded to each other to form a ring, and, in a case in which a ring is formed, -S- may be included in the formed ring, at least one of the groups represented by R^{b4}, R^{b5}, R^{b6}, R^{b7}, R^{b8}, R^{b9}, R^{b10}, R^{b11}, R^{b12}, and R^{b13} contains a polymerizable group as a substituent.

2. The ink composition according to claim 1,
wherein the compound having two or more partial structures represented by the Formula (A) in a molecule has two or more repeating units represented by Formula (AP) in a molecule, 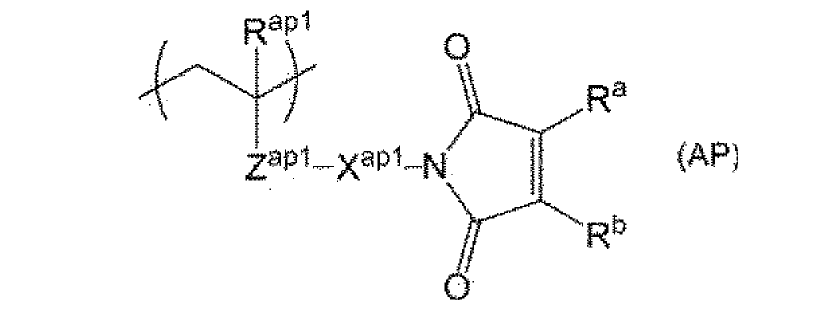 in Formula (AP), R^{ap1} represents a hydrogen atom or a methyl group, Z^{ap1} represents a single bond, -COO-, or -CONR^{ax1}-, and R^{ax1} represents a hydrogen atom or an alkyl group having 1 to 4 carbon atoms, X^{ap1} represents a divalent organic group, each of R^{a} and R^{b} independently represents a hydrogen atom or an alkyl group having 1 to 4 carbon atoms, and R^{a} and R^{b} may be bonded to each other to form a 4- to 6-membered alicyclic structure.

3. The ink composition according to claim 1 or 2,
wherein the number of the polymerizable groups included in the compound represented by Formula (B1) or the compound represented by Formula (B2) is one or two.

4. The ink composition according to any one of claims 1 to 3,
wherein a content of the compound selected from the group consisting of the compound represented by Formula (B1) and the compound represented by Formula (B2) in a total amount of the ink composition is in a range of 0.1 mass% to 20 mass%.

5. The ink composition according to any one of claims 1 to 4,
wherein at least one of the compound having two or more partial structures represented by Formula (A) in a molecule and the compound selected from the group consisting of the compound represented by Formula (B1) and the compound represented by Formula (B2) further include a water-soluble group,
wherein the water-soluble group is at least one group selected from the group consisting of a carboxyl group, a sulfo group, a phosphate group, a phosphonic acid group, salts thereof, quaternary ammonium salt, a residue produced by removing one hydrogen atom from a heterocyclic compound containing a nitrogen atom or an oxygen atom, an amide group, a carbamoyl group, an alcoholic hydroxyl group, and groups having a polyalkyleneoxy structure.

6. The ink composition according to any one of claims 1 to 5, further comprising:
water.

7. The ink composition according to any one of claims 1 to 6, further comprising:
an organic solvent.

8. An image-forming method comprising:
applying the ink composition according to claim 1 onto a recording medium; and
radiating an active energy ray to the ink composition.

9. The image-forming method according to claim 8,
wherein the applying the ink composition is applying the ink composition by an ink jet method.

10. A printed material recorded by the image-forming method according to claim 8 or 9.
